# EUROPEAN PATENT APPLICATION

(11) **EP 4 745 793 A1**
(43) Date of publication of application: **20.05.2026**
(21) Application number: 25216045.2
(22) Date of filing: 14.11.2025
(51) Int. Cl.: G06F 13/42

(54) **ASSIGNING UNIQUE IDENTIFIERS**

(30) Priority: 16.11.2024 US 202463721460 P
(71) Applicant: Space Exploration Technologies Corp., Hawthorne, California 90250 (US)
(72) Inventor: JACQUET, David Francois, HAWTHORNE, 90250 (US); PEPIN, Eric, HAWTHORNE, 90250 (US); BUTAYE, Benoit, HAWTHORNE, 90250 (US); ROULENQ, Olivier, HAWTHORNE, 90250 (US); AGAH, Amir, HAWTHORNE, 90250 (US); SCHULZE, Kim W, HAWTHORNE, 90250 (US)
(74) Representative: Mewburn Ellis LLP

(57) **Abstract**

A method for assigning unique identifiers is disclosed. The method includes: obtaining a daisy-chain identifier update command set transmitted over a serial communication interface to a chain of serially connected worker modules (WMs). The chain of serially connected WMs comprises a first WM, a second WM, and a third WM. The method includes: enabling updating a first WM identifier associated with the first WM, disabling updating a second unique identifier associated with the second WM, obtaining a first identifier update value transmitted over the serial communication interface to the chain of serially connected WMs, updating the first WM identifier of the first WM based on the first identifier update value, obtaining a second identifier update value transmitted over the serial communication interface, enabling updating the second unique identifier associated with the second WM, and updating the second WM identifier based on the second identifier update value.

## Description

### TECHNICAL FIELD

The present disclosure generally relates to assigning unique identifiers. More specifically, the present disclosure relates to systems and techniques for assigning unique identifiers over serial interfaces.

### BACKGROUND

Serial communication interfaces can advantageously be used to communicate using a limited number of signals. In some applications, the number of signals that can be used for communication can be limited by a number of available package pins. In some cases, increasing the number of package pins may require increasing package size of individual integrated circuit (IC) chips. In some applications, package size for individual IC chips may be limited by constraints on area, routing, uniformity, spacing, or the like.

It would be advantageous to have configurations for assigning unique identifiers and associated circuitry having increased reliability, reduced weight, reduced size, lower manufacturing cost, and/or lower power requirements. Accordingly, embodiments of the present disclosure are directed to these and other improvements in assigning unique identifiers.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

Systems and techniques for assigning unique identifiers are disclosed. In one example, a method includes obtaining a daisy-chain identifier update command set transmitted over a serial communication interface to a chain of serially connected WMs, wherein the chain of serially connected WMs comprises a first WM, a second WM, and a third WM, obtaining a first identifier update value transmitted over the serial communication interface to the chain of serially connected WMs, enabling an identifier update for the first WM, updating a first WM identifier of the first WM based on the first identifier update value, obtaining a second identifier update value transmitted over the serial communication interface to the chain of serially connected WMs, enabling an identifier update for the second WM, and updating a second WM identifier of the second WM based on the second identifier update value.

In another example, an apparatus for assigning unique identifiers includes: a chain of serially connected WMs and a WM of the chain of serially connected WMs. In some cases, the WM includes: a serial communication port coupled to a serial communication interface, an IO port, a serial IO port, and an identifier update module. In some cases, the identifier update module is configured to obtain a daisy-chain identifier update command set transmitted over the serial communication interface to the chain of serially connected WMs, enable an identifier update for the first WM, update a first WM identifier of the first WM based on the first identifier update value, obtain a second identifier update value transmitted over the serial communication interface to the chain of serially connected WMs, and disable an identifier update for the first WM based on the second identifier update value.

In another example, a non-transitory computer-readable medium is provided that has stored thereon instructions that, when executed by one or more processors, cause the one or more processors to: obtain a daisy-chain identifier update command set transmitted over a serial communication interface to a chain of serially connected WMs, wherein the chain of serially connected WMs comprises a first WM, a second WM, and a third WM, obtain a first identifier update value transmitted over the serial communication interface to the chain of serially connected WMs, enable an identifier update for the first WM, update a first WM identifier of the first WM based on the first identifier update value, obtain a second identifier update value transmitted over the serial communication interface to the chain of serially connected WMs, enable an identifier update for the second WM, and update a second WM identifier of the second WM based on the second identifier update value.

In another example, an apparatus for assigning unique identifiers includes: means for obtaining a daisy-chain identifier update command set transmitted over a serial communication interface to a chain of serially connected WMs, wherein the chain of serially connected WMs comprises a first WM, a second WM, and a third WM, means for obtaining a first identifier update value transmitted over the serial communication interface to the chain of serially connected WMs, means for enabling an identifier update for the first WM, means for updating a first WM identifier of the first WM based on the first identifier update value, obtaining a second identifier update value transmitted over the serial communication interface to the chain of serially connected WMs, means for enabling an identifier update for the second WM, and means for updating a second WM identifier of the second WM based on the second identifier update value.

### BRIEF DESCRIPTION OF THE DRAWINGS

In order to describe the manner in which the various advantages and features of the disclosure can be obtained, a more particular description of the principles described above will be rendered by reference to specific embodiments thereof, which are illustrated in the appended drawings. Understanding that these drawings depict only example embodiments of the disclosure and are not to be considered to limit its scope, the principles herein are described and explained with additional specificity and detail through the use of the drawings in which:
FIG. 1 illustrates an example configuration for enumeration of worker module (WM) identifiers over a serial interface, in accordance with some examples of the present disclosure;
FIG. 2A illustrates an example configuration of serially connected chains of WMs coupled to a common chip select (CS) port of a command module (CM), in accordance with some examples of the present disclosure;
FIG. 2B through FIG. 2F illustrate an example enumeration sequence utilizing simultaneous reverse propagation for distinguishing between serially connected chains of WMs coupled to a common CS port of a CM, in accordance with some examples of the present disclosure;
FIG. 3A illustrates an example configuration of serially connected chains of WMs with different clock-data swap states coupled to a common CS port of a CM, in accordance with some examples of the present disclosure;
FIG. 3B through FIG. 3F illustrate an example enumeration sequence utilizing a clock-data swap state for distinguishing between serially connected chains of WMs coupled to a common CS port of a CM, in accordance with some examples of the present disclosure;
FIG. 4A illustrates an example configuration of serially connected chains of WMs coupled to different CS ports of a CM, in accordance with some examples of the present disclosure;
FIG. 4B through FIG. 4F illustrate an example enumeration sequence for serially connected chains of worker modules coupled to multiple CS ports of a CM, in accordance with some examples of the present disclosure;
FIG. 5A illustrates an additional example configuration of serially connected chains of WMs coupled to a common CS port of a CM, in accordance with some examples of the present disclosure;
FIG. 5B through FIG. 5F illustrate an additional example enumeration sequence utilizing simultaneous reverse propagation for distinguishing between serially connected chains of WMs coupled to a common CS port of a CM, in accordance with some examples of the present disclosure;
FIG. 6A illustrates an additional example configuration of serially connected chains of WMs having two serial through-paths, in accordance with some examples of the present disclosure;
FIG. 6B through FIG. 6F illustrate an example enumeration sequence for serially connected chains of WMs having two serial through-paths, in accordance with some examples of the present disclosure;
FIG. 7A illustrates an additional example configuration of serially connected chains of WMs, in accordance with some examples of the present disclosure;
FIG. 7B through FIG. 7F illustrate an additional example enumeration sequence utilizing simultaneous reverse propagation, in accordance with some examples of the present disclosure;
FIG. 8A is a block diagram illustrating an example WM configuration for assigning a unique identifier, in accordance with some examples of the present disclosure;
FIG. 8B is a block diagram illustrating an additional example WM configuration for assigning a unique identifier, in accordance with some examples of the present disclosure;
FIG. 8C is a block diagram illustrating an additional example WM configuration assigning a unique identifier, in accordance with some examples of the present disclosure;
FIG. 9A is a flow diagram illustrating a process for assigning unique identifiers, in accordance with some examples of the present disclosure;
FIG. 9B is a flow diagram illustrating an additional process for assigning unique identifiers, in accordance with some examples of the present disclosure;
FIG. 9C is a flow diagram illustrating an additional process for assigning unique identifiers, in accordance with some examples of the present disclosure;
FIG. 10 is a diagram illustrating an example computing device architecture, in accordance with some examples of the present disclosure.

### DETAILED DESCRIPTION

Certain aspects and embodiments of this disclosure are provided below. Some of these aspects and embodiments may be applied independently and some of them may be applied in combination as would be apparent to those of skill in the art. In the following description, for the purposes of explanation, specific details are set forth in order to provide a thorough understanding of embodiments of the application. However, it will be apparent that various embodiments may be practiced without these specific details. The figures and description are not intended to be restrictive.

The ensuing description provides example embodiments only, and is not intended to limit the scope, applicability, or configuration of the disclosure. Rather, the ensuing description of the exemplary embodiments will provide those skilled in the art with an enabling description for implementing an exemplary embodiment. It should be understood that various changes may be made in the function and arrangement of elements without departing from the spirit and scope of the application as set forth in the appended claims.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Language such as "top", "bottom", "upper", "lower", "vertical", "horizontal", "lateral", in the present disclosure is meant to provide orientation for the reader with reference to the drawings and is not intended to be the required orientation of the components or to impart orientation limitations into the claims.

The phrase "coupled to" refers to any component that is physically connected to another component either directly or indirectly, and/or any component that is in communication with another component (e.g., connected to the other component over a wired or wireless connection, and/or other suitable communication interface) either directly or indirectly.

In some aspects, systems, apparatuses, processes (also referred to as methods), and computer-readable media (collectively referred to herein as "systems and techniques") are described herein for providing a synchronous serial interface with clock-data swap capability.

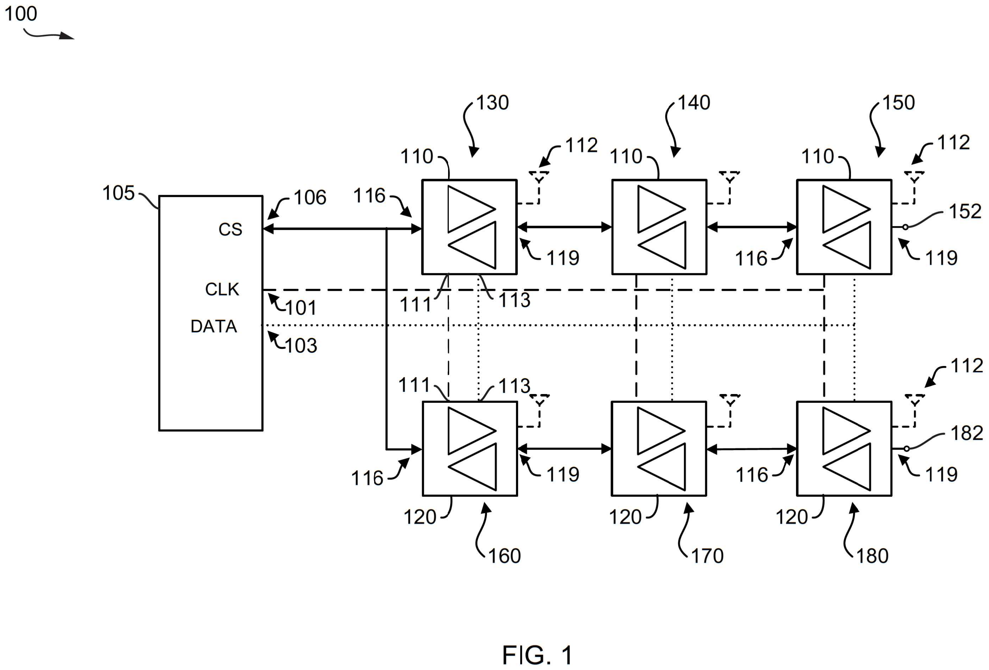

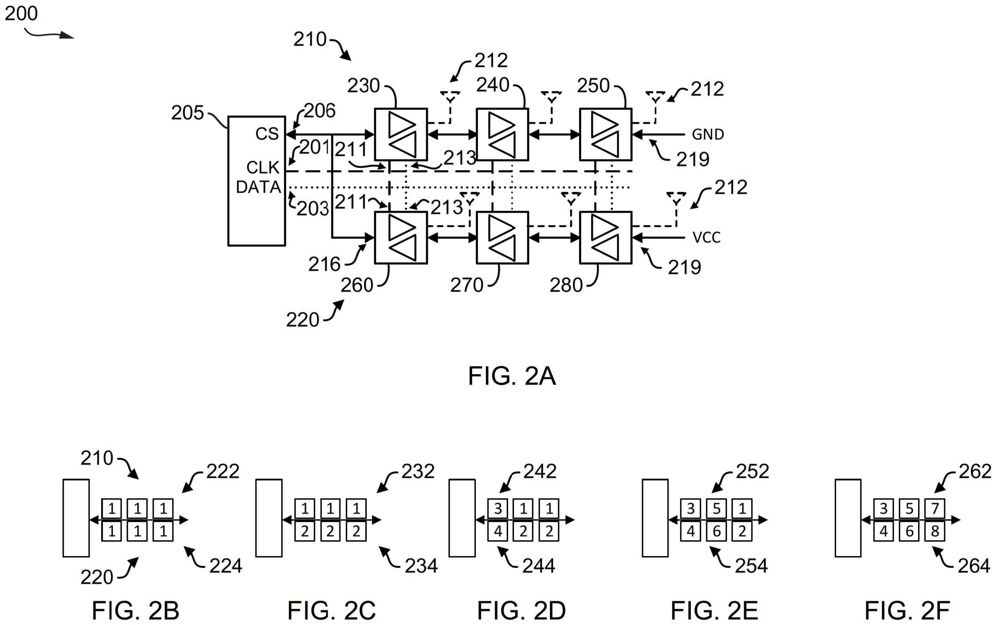

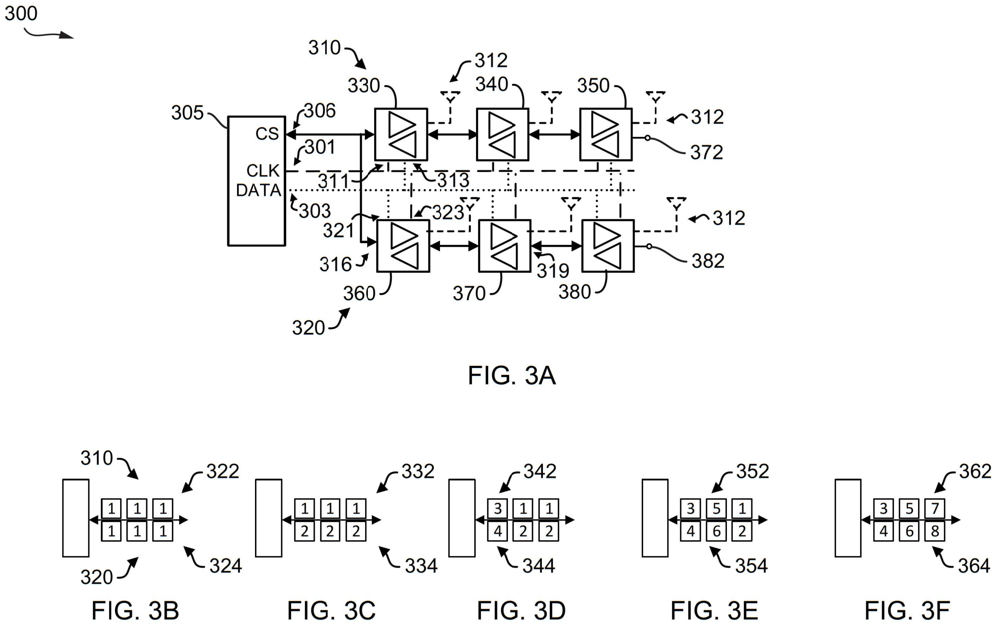

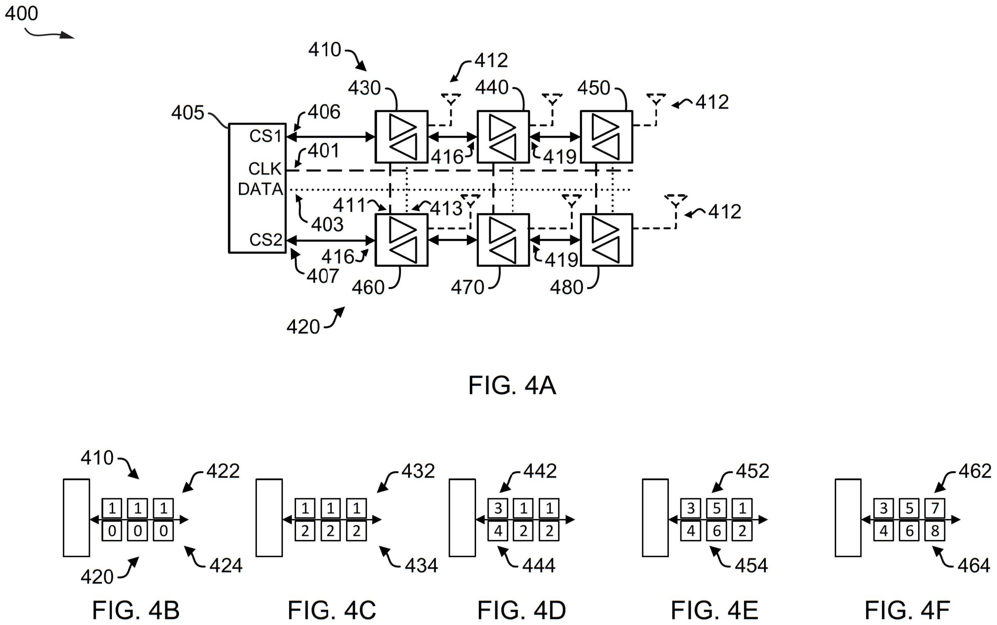

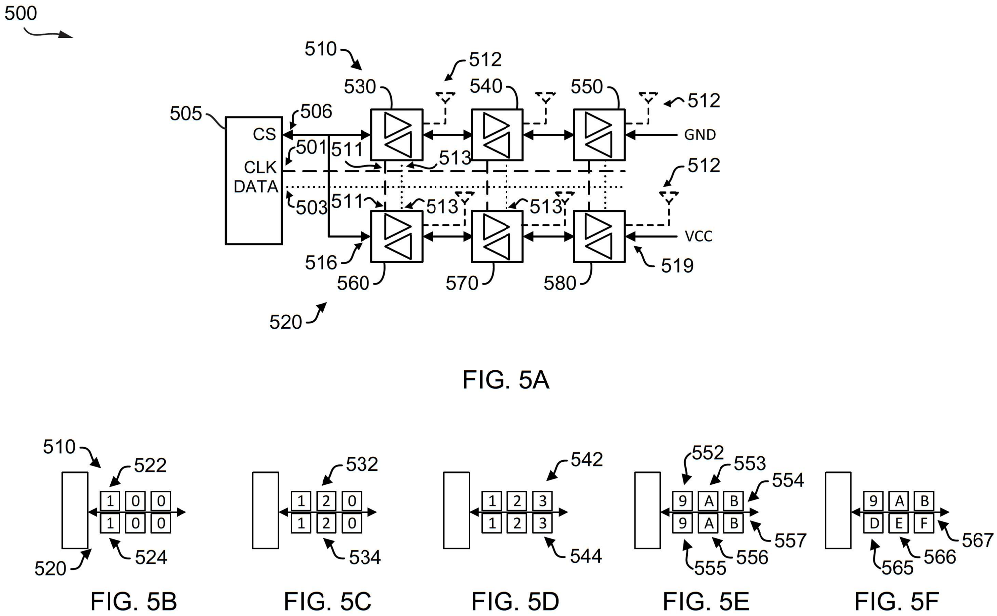

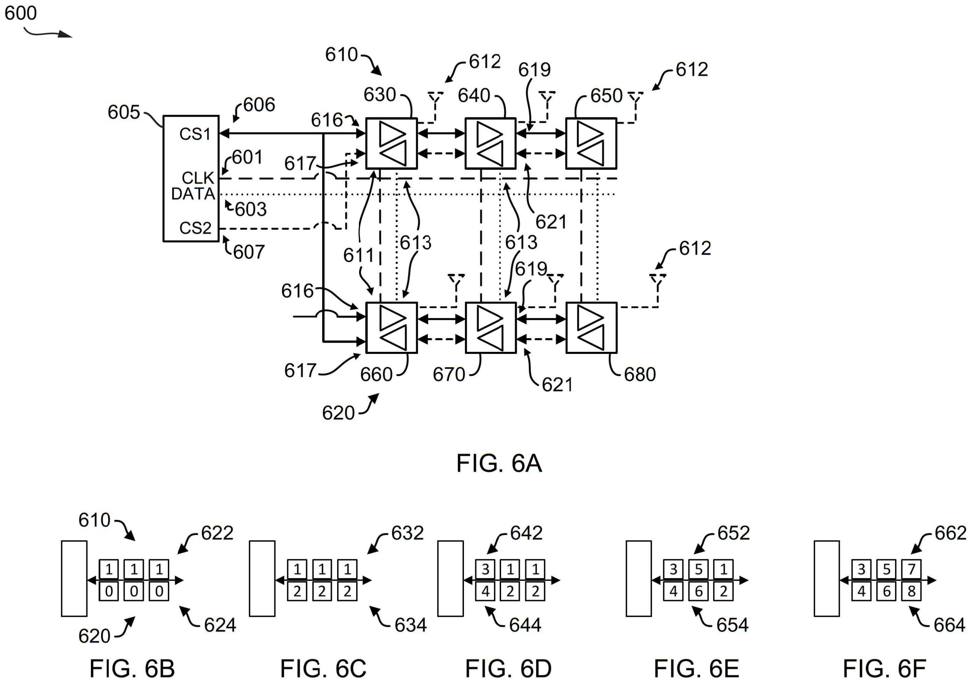

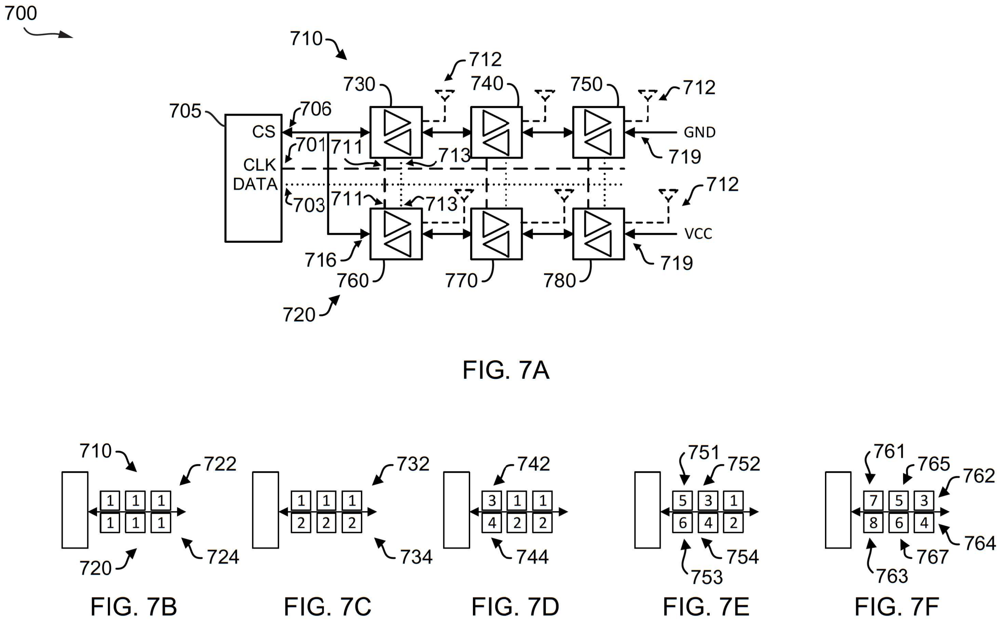

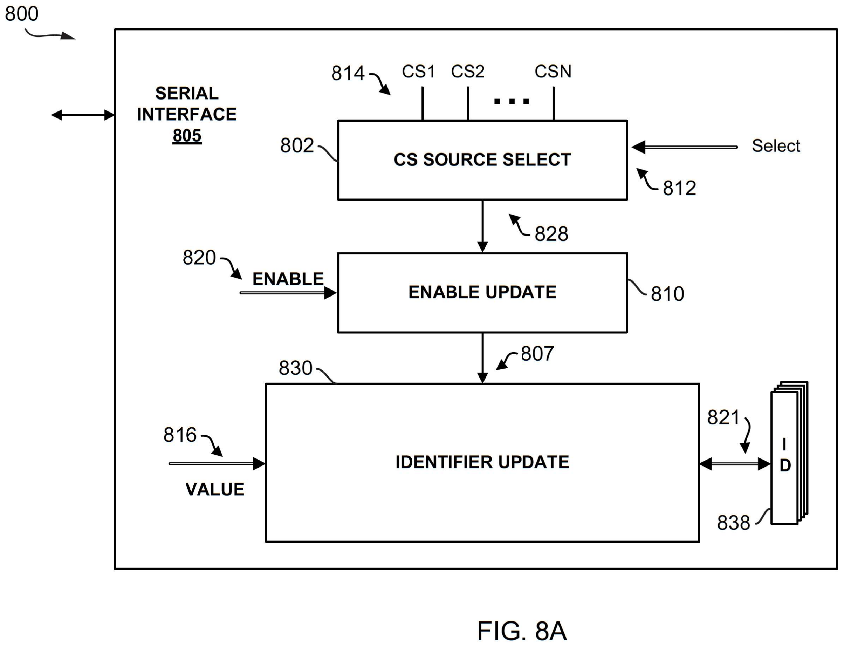

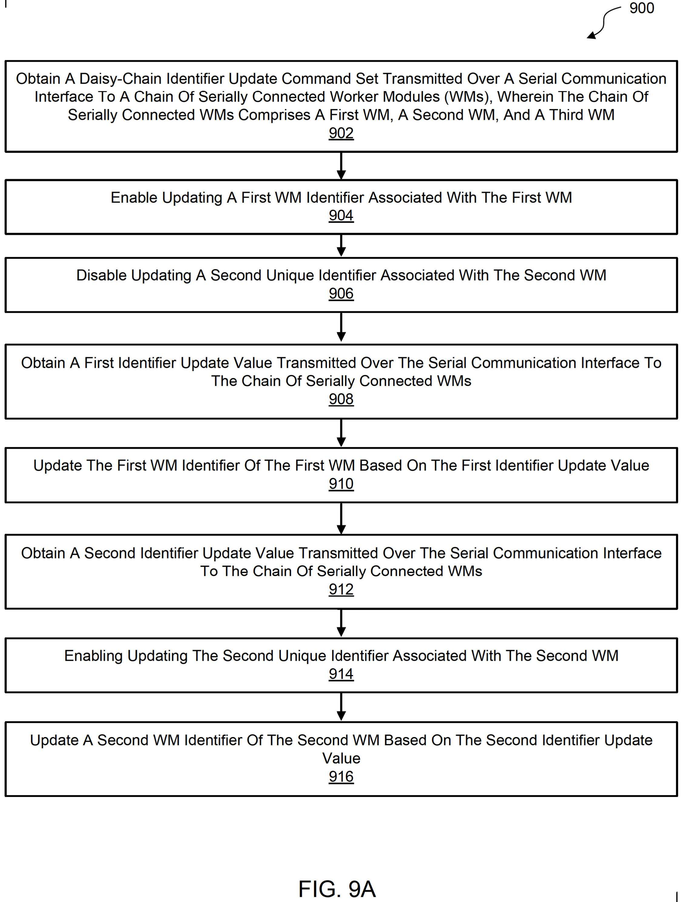

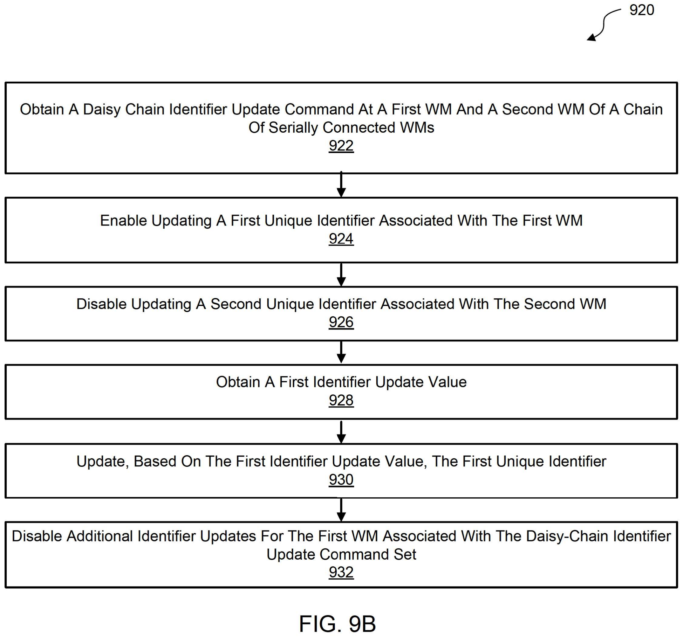

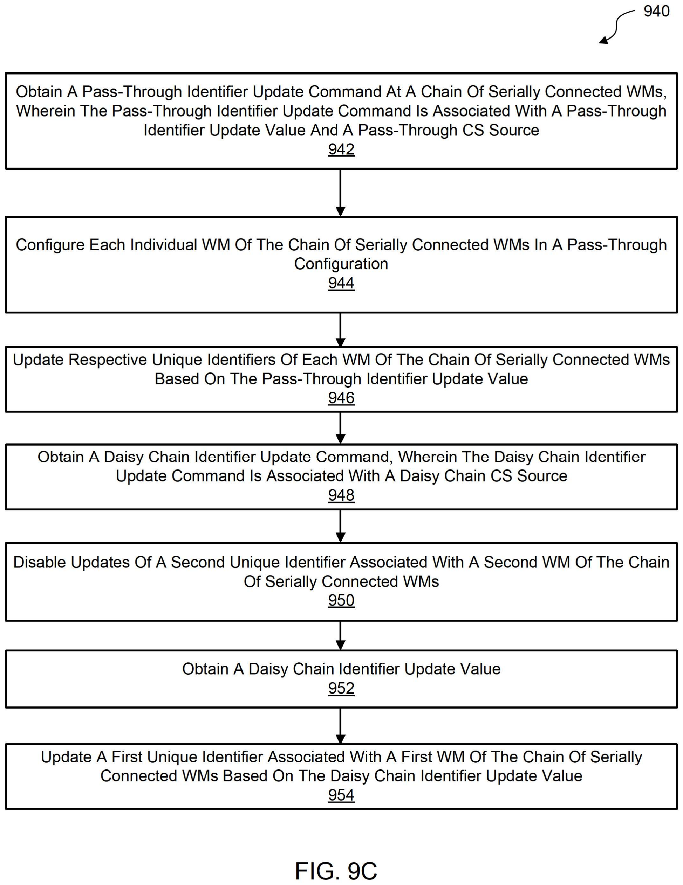

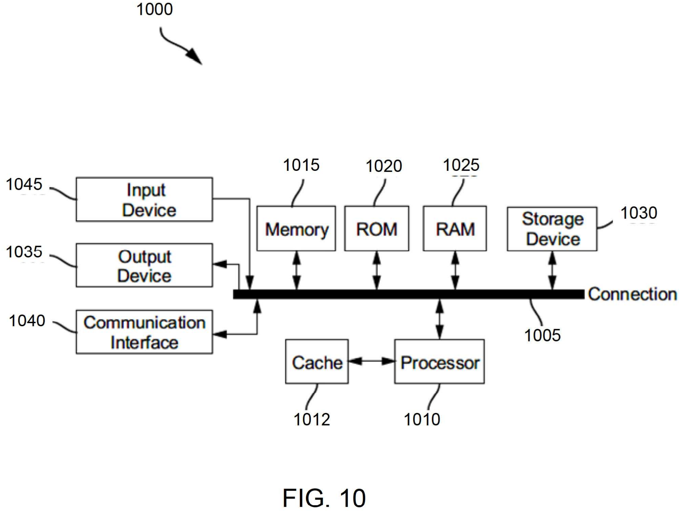

The disclosed systems and techniques will be described in the following disclosure as follows. The discussion begins with a description of an example configuration for enumeration of worker module (WM) identifiers over a serial interface, as illustrated in FIG. 1. An example configuration of serially connected chains of WMs coupled to a common chip select (CS) port of a command module (CM), as illustrated in FIG. 2A, will then follow. An example enumeration sequence utilizing simultaneous reverse propagation for distinguishing between serially connected chains of WMs coupled to a common CS port of a CM, as illustrated in FIG. 2B through FIG. 2F, will then follow. An example configuration of serially connected chains of WMs with different clock-data swap states coupled to a common CS port of a CM, as illustrated in FIG. 3A, will then follow. An example enumeration sequence utilizing a clock-data swap state for distinguishing between serially connected chains of WMs coupled to a common CS port of a CM, as illustrated in FIG. 3B through FIG. 3F, will then follow. An example configuration of serially connected chains of WMs coupled to different CS ports of a CM, as illustrated in FIG. 4A, will then follow. An example enumeration sequence for serially connected chains of worker modules coupled to multiple CS ports of a CM, as illustrated in FIG. 4B through FIG. 4F, will then follow. An additional example configuration of serially connected chains of WMs coupled to a common CS port of a CM, as illustrated in FIG. 5A, will then follow. An additional example enumeration sequence utilizing simultaneous reverse propagation for distinguishing between serially connected chains of WMs coupled to a common CS port of a CM, as illustrated in FIG. 5B through FIG. 5F, will then follow. An example configuration of serially connected chains of WMs having two serial through-paths, as illustrated in FIG. 6A, will then follow. An example enumeration sequence for serially connected chains of WMs having two serial through-paths, as illustrated in FIG. 6B through FIG. 6F, will then follow. An additional example configuration of serially connected chains of WMs, as illustrated in FIG. 7A, will then follow. An additional example enumeration sequence utilizing simultaneous reverse propagation, as illustrated in FIG. 7B through FIG. 7F, will then follow. Example WM configurations for assigning a unique identifier, as illustrated in FIG. 8A through FIG. 8C will then follow. A flow diagram illustrating a process for assigning unique identifiers, as illustrated in FIG. 9A, will then follow. A flow diagram illustrating an additional process for assigning unique identifiers, as illustrated in FIG. 9B, will then follow. A flow diagram illustrating another additional process for assigning unique identifiers, as illustrated in FIG. 9C, will then follow. The discussion concludes with a diagram illustrating an example computing device architecture, as illustrated in FIG. 10. The disclosure now turns to FIG. 1.

FIG. 1 illustrates an example configuration 100 for enumeration of worker module (WM) identifiers over a serial interface. In some cases, CM 105 can communicate with WMs of a first chain of serially connected WMs 110 and a second chain of serially connected WMs 120. For example, the CM 105 can include hardware, software, electrical components, and/or any combination thereof for coordinating the operation of the WMs of the first chain of serially connected WMs 110 and the second chain of serially connected WMs 120. In some cases, the CM 105 can communicate with the WMs of the first chain of serially connected WMs 110 and the second chain of serially connected WMs 120 over a serial communication interface (e.g., a two-wire serial interface). In some implementations, the CM 105 can include a CS port 106, a clock port 101, and a data port 103. In some cases, the CM 105 can be implemented as an integrated circuit (IC) chip and the CS port 106, clock port 101, and data port 103 can correspond to individual pins of the IC chip.

In the illustrated example of FIG. 1, the WMs included in the first chain of serially connected WMs 110 and WMs included in the second chain of serially connected WMs 120 each include a clock port 111, a data port 113, an input/output (IO) port 116 and a serial IO port 119. In some cases, a continuous connection can be provided between the clock port 101 of the CM 105 and all of the clock ports 111 of the WMs of the first chain of serially connected WMs 110. Similarly, in some examples, a continuous connection can be provided between data port 103 of the CM 105 and all of the data ports 113 of the second chain of serially connected WMs 120. In some cases, one or more of the WMs coupled to the clock port 101 and the data port 103 may be operated in a clock-data swapped configuration as described in more detail with respect to FIG. 3A below.

In some cases, the CM 105 may transmit commands over the serial communication interface to the WMs of the first chain of serially connected WMs 110 and the WMs of the second chain of serially connected WMs 120 simultaneously using the clock port 101 and the data port 103. In some implementations, commands received by multiple different WMs that may be included in one or more chains of serially connected WMs may be utilized to assign unique identifiers to each WM.

In some cases, the serial connections between WMs of the first chain of serially connected WMs 110 can be configured in a pass-through configuration. As used herein, a "pass-through configuration" refers to a configuration where a WM directly connected to a selected CS source and other WMs same chain of serially connected WMs are all selected simultaneously based on the signal received from the selected CS source. In some cases, a CS source can include one or more logical value (e.g., logical "1" values and/ or logical "0" values) . In some cases, a CS source can be derived based on one or more inputs available to a WM. For example, without limitation, a CS source can be derived based on a frequency, phase, amplitude, modulation scheme, presence of power, any other characteristic, and/or any combination thereof of one or more signals available to the WM may be used to derive a signal that can be utilized as a CS source. For the purposes of illustration, various example configurations for assigning unique identifiers described herein may include CS sources implemented as logical values. However, it should be understood that other types of CS sources may be utilized without departing from the scope of the present disclosure.

In some cases, a pass-through configuration a WM can implement a pass-through configuration by providing a direct connection between the IO port 116 and serial IO port 119 of the WM. In some examples, a WM can implement a pass-through configuration by re-buffering a received signal from a selected CS source to be passed on to a subsequent WM (e.g., relative to a propagation direction) in a chain of serially connected WMs.

In some implementations, the serial connections between WMs of the first chain of serially connected WMs 110 can be configured in a daisy-chain configuration. As used herein, a "daisy-chain configuration" refers to a configuration in which individual WMs of a chain of serially connected WMs can be configured to override a CS signal (also referred to herein as "clamping" a CS signal) from a selected CS source. In some implementations, a particular WM may override the CS signal from the selected CS source until the particular WM performs an identifier update. In some implementations, after performing an identifier update, the particular WM may be configured to pass-through the CS signal from the selected CS source to a subsequent WM in a chain of serially connected WMs.

In some implementations, the individual WMs of a chain of serially connected WMs may be configured with a forward propagation direction and/or a reverse propagation direction. In some cases, the forward propagation direction and/or reverse propagation direction may be utilized for a pass-through configuration and/or a daisy-chain configuration.

For example, in a "forward propagation" direction for a WM configured in a pass-through configuration, if a logical value (e.g., logical "0" or logical "1") is input at the IO port 116 of a particular WM, the same logical value (e.g., logical "0" or logical "1") can be output at the serial IO port 119 of the particular WM. Similarly, in a "reverse propagation" direction for a WM in a pass-through configuration, if a logical value (e.g., logical "0" or logical "1") is input at the serial IO port 119 of a particular WM, the same logical value (e.g., logical "0" or logical "1") can be output at the IO port 116 of the particular WM.

In one illustrative example, for a forward propagation direction pass-through configuration, the CM 105 may output a CS signal from the CS port 106 which is received at the IO port 116 of the first WM 130 of the first chain of serially connected WMs 110. In some cases, the first WM 130 may be configured to pass-through the CS signal from the serial IO port 119 of the first WM 130 to the IO port 116 of the second WM 140 of the first chain of serially connected WMs 110. Similarly, the second WM 140 may be configured to pass-through the CS signal from the serial IO port 119 of the second WM 140 to the IO port 116 of the third WM 150. In the illustrated example of FIG. 1, the serial IO port 119 of the third WM 150 of the first chain of serially connected WMs 110 is not coupled to the IO port 116 of any other WM of the first chain of serially connected WMs 110. In some examples, the WMs of the second chain of serially connected WMs 120 may similarly be configured in a forward propagation direction pass-through configuration.

In another illustrative example, for a reverse propagation direction pass-through configuration, the third WM 150 of the first chain of serially connected WMs 110 may receive a CS signal at the serial IO port 119 of the third WM 150. In the illustrated example of FIG. 1, the serial IO port 119 of the third WM 150 of the first chain of serially connected WMs 110 is not coupled to the IO port 116 of any other WM of the first chain of serially connected WMs 110. However, in some examples (see, e.g., serial IO port 219 of third WM 250 of FIG. 2A, serial IO port 219 of third WM 280 of FIG. 2A) a logical value may be provided at the serial IO port 119 of the third WM 150 of the first chain of serially connected WMs 110. In some cases, the third WM 150 may be configured to pass-through the CS signal from the IO port 116 of the third WM 150 to the serial IO port 119 of the second WM 140 of the first chain of serially connected WMs 110. Similarly, the second WM 140 may be configured to pass-through the CS signal from the IO port 116 of the second WM 140 to the serial IO port 119 of the first WM 130. In some examples, the WMs of the second chain of serially connected WMs 120 may similarly be configured in a reverse propagation direction pass-through configuration.

As illustrated in FIG. 1, a first WM 130 of the first chain of serially connected WMs 110 includes an IO port 116 coupled to the CS port 106 of the CM 105. In some cases, WMs of the first chain of serially connected WMs 110 can be chained together by connections between a serial IO port 119 of one WM and an IO port 116 of a subsequent WM in the first chain of serially connected WMs 110. For example, as illustrated in FIG. 1, the serial IO port 119 of first WM 130 can be coupled to the IO port 116 of second WM 140 of the first chain of serially connected WMs 110. In some implementations, the serial IO port 119 of second WM 140 can be coupled to the IO port 116 of third WM 150 of the first chain of serially connected WMs 110.

As further illustrated, a first WM 160 of the second chain of serially connected WMs 120 includes an IO port 116 coupled to the CS port 106 of the CM 105. In some cases, WMs of the second chain of serially connected WMs 120 can be chained together by connections between a serial IO port 119 of one WM and an IO port 116 of a subsequent WM in the second chain of serially connected WMs 120. For example, as illustrated in FIG. 1, the serial IO port 119 of first WM 160 can be coupled to the IO port 116 of second WM 170 of the second chain of serially connected WMs 120. In some cases, the serial IO port 119 of second WM 170 can be coupled to the IO port 116 of third WM 180 of the second chain of serially connected WMs 120.

In some cases, the CM 105 can be configured to communicate with the WMs of the first chain of serially connected WMs 110 and the WMs of the second chain of serially connected WMs 120 over a two-wire serial interface using the clock port 101 and the data port 103. In one illustrative example, the CM 105 can communicate with the WMs of the first chain of serially connected WMs 110 and the WMs of the second chain of serially connected WMs 120 according to the mobile industries processor interface (MIPI) system power management interface (SPMI) protocol. In some cases, the CM 105 can communicate with the WMs of the first chain of serially connected WMs 110 and the WMs of the second chain of serially connected WMs 120 according to one or more additional standards that are compatible with and/or developed based on the MIPI SPMIprotocol, such as the MIPI radio frequency front-end (RFFE) protocol.

In the illustrated example of FIG. 1, the CS port 106 of the CM 105 is coupled to a corresponding IO port 116 of first WM 130 of the first chain of serially connected WMs 110 and the IO port 116 of the first WM 160 of the second chain of serially connected WMs 120. In some cases, a combiner/divider (not shown) can be utilized for sharing CS port 106 of the CM 105 between the IO port 116 of first WM 130 of the first chain of serially connected WMs 110 and the IO port 116 of the first WM 160 of the second chain of serially connected WMs 120.

In some examples, the WMs of the first chain of serially connected WMs 110 and the WMs of the second chain of serially connected WMs 120 can be implemented as IC chips. In some implementations, the clock port 111, data port 113, IO port 116, and serial IO port 119 can correspond to individual pins of an IC chip of a WM (e.g., a WM of the first chain of serially connected WMs 110 and/or a WM of the second chain of serially connected WMs 120) .

In the illustrative example of FIG. 1, the WMs of the first chain of serially connected WMs 110 and the WMs of the second chain of serially connected WMs 120 may be configured as serially connected front-end modules (FEMs) and/or analog beamformers of a phased array antenna system. In some implementations, the WMs of the first chain of serially connected WMs 110 and the WMs of the second chain of serially connected WMs 120 may each be coupled to one or more antenna elements 112 for transmitting and/or receiving radio frequency (RF) signals.

In some cases, the one or more antenna elements 112 may be configured to transmit (Tx) RF signals. In some implementations, the WMs can obtain an RF signal to be transmitted from a RF signal source. In some examples, the CS port 106 of the CM 105 may also function as a functional RF port, such as an RF input/output (RFIO) port, an RF output port (e.g., for a transmit (Tx) only phased array antenna), or the like. While example systems and techniques described herein describe RF signals and RF ports (e.g., RFIO, RF input, and/or RF output ports), it should be understood that the functional ports (e.g., IO ports 116, serial IO port 119) may operate at an intermediate frequency (IF) or analog baseband (BB) frequency without departing from the scope of the present disclosure. In some implementations, the WMs may include circuitry for performing up-conversion and/or down-conversion of RF signals

In the illustrated example of FIG. 1, an RF signal to be transmitted can be output from the CS port 106 of CM 105 and received at the IO port 116 of the first WM 130 of the first chain of serially connected WMs 110 and the first WM 160 of the second chain of serially connected WMs 120. In some cases, the first WM 130 can include one or more transmit (Tx) components. For example, the one or more transmit (Tx) components may include one or more power amplifiers (PAs) for amplifying the signal to be transmitted and providing an amplified signal to be transmitted to the one or more antenna elements 112. In some cases, the one or more transmit (Tx) components may include phase shifters for applying a phase shift, a time delay, or the like to provide beamforming and beam steering for a phased array antenna. In some examples, the one or more transmit (Tx) components may include frequency up-converters for converting signals from an IF or analog BB frequency to an RF frequency.

In some cases, the antenna elements 112 may be configured to receive (Rx) RF signals. In some implementations, the WMs can obtain an RF signal over-the-air (OTA) from a transmitting device. In some examples, the CS port 106 of the CM 105 may also function as a functional RF port, such as an RFIO port, an RF input port (e.g., for a receive (Rx) only phased array antenna), or the like. In the illustrated example of FIG. 1, an RF signal received by the one or more antenna elements 112 coupled to the first WM 130 of the first chain of serially connected WMs 110 can be output from IO port 116 of the first WM 130 of the first chain of serially connected WMs 110 and received at the CS port 106 of CM 105. In some cases, an RF signal received by the one or more antenna elements 112 coupled to the first WM 160 of the second chain of serially connected WMs 120 can be output from IO port 116 of the first WM 160 of the second chain of serially connected WMs 120 and received at the CS port 106 of CM 105. In some cases, the first WM 130 can include one or more receive (Rx) components (not shown). For example, the one or more receive (Rx) components may include one or more low noise amplifiers (LNAs) for amplifying the received signal(s) from the one or more antenna elements 112 and providing an amplified signal without significantly degrading a signal-to-noise ratio (SNR) of the received signal In some cases, the one or more receive (Rx) components may include phase shifters for applying a phase shift, a time delay, or the like to provide beamforming and beam steering for a phased array antenna. In some examples, the (Rx) components may include frequency down-converters for converting from an RF frequency to an IF or analog BB frequency.

In some implementations, the serial IO port 119 of the third WM 150 of the first chain of serially connected WMs 110 may be terminated by a termination 152. In some implementations, one or more electrical components (not shown) included in the third WM 150 of the first chain of serially connected WMs 110 coupled to the serial IO port 119 of the third WM 150 may be disabled and/or terminated. In some implementations, the serial IO port 119 of the third WM 180 of the second chain of serially connected WMs 120 may be terminated by a termination 182. In some implementations, one or more electrical components (not shown) included in the third WM 180 of the second chain of serially connected WMs 120 coupled to the serial IO port 119 of the third WM 180 may be disabled and/or terminated.

### EXAMPLE IDENTIFIER UPDATE CONFIGURATIONS AND COMMAND SETS

FIG. 2A through FIG. 7F provide different example configurations of chains of serially connected WMs and associated commands for providing unique identifiers to individual WMs of the chains of serially connected WMs. In some implementations, one or more serial commands can include parameters that can be be used to assign unique identifiers to individual WMs coupled a communication interface (e.g., a serial communication interface).

In some cases, one or more serial commands used during an identifier update sequence may be understood in terms of identifier update command sets. As used herein, an "identifier update command set" refers to one or more commands that can provide parameters for performing WM identifier updates. In some examples, identifier update command set parameters may include, without limitation, a CS source selection, a CS signal propagation direction, an identifier update value, an identifier update enable state, a through-path override selection (also referred to herein as a clamp setting), a through-path override value (also referred to herein as a clamp value), and/or any combination thereof.

In some examples, an identifier update value can be utilized to increment (or decrement) an identifier for one or more WMs during an iterative identifier update. As used herein, an iterative identifier update refers to a process of updating (e.g., by overwriting, incrementing and/or decrementing) different WMs with identifier update values in multiple steps utilizing different CS sources to achieve unique identifier values for every individual WM of a chain of serially connected WMs (e.g., every individual WM of the first chain of serially connected WMs 210 and every individual WM of the second chain of serially connected WMs 220.

In some cases, an identifier update command set may include a single command that provides multiple parameters for an identifier update of one or more WMs. For example, a single command associated with a daisy-chain identifier update may include a CS source selection, an identifier update value, an identifier update enable state, a through-path override selection (e.g., a clamping configuration), and a through-path override value (e.g., a clamping value). In another illustrative example, a single command associated with a pass-through identifier update may include a CS source selection, an identifier update value, an identifier update enable state, and a through-path override selection. In some examples, an identifier update command set may include multiple commands, each command of the multiple commands including one or more parameters for an identifier update.

### Example 1

FIG. 2A illustrates an example configuration 200 including two serially connected chains of WMs coupled to a common CS port 206 of a CM 205. In the example configuration 200 of FIG. 2A, a CM 205 includes a CS port 206, CLK port 201, and a DATA port 203. As illustrated, the CS port 206 of the CM 205 is coupled to an IO port 216 of first WM 230 of a first chain of serially connected WMs 210 and an IO port 216 of a first WM 260 of a second chain of serially connected WMs 220. In some cases a combiner/splitter (not shown) may be disposed between the CS port 206 and the IO ports 216 of the first WM 230 and the first WM 260. For example, a Wilkinson combiner/splitter (not shown) may be disposed between the CS port 206 and the IO ports 216 of the first WM 230 of the first chain of serially connected WMs 210 and the first WM 260 of the second chain of serially connected WMs 220.

In the illustrated example of FIG. 2A, individual WMs of the first chain of serially connected WMs 210 and the second chain of serially connected WMs 220 can communicate with CM 205 over a two-wire serial communication interface. In some cases, data ports 213 of the individual WMs of the first chain of serially connected WMs 210 and the second chain of serially connected WMs 220 can be coupled to DATA port 203 of the CM 205. Similarly, the clock ports 211 of the individual WMs of the first chain of serially connected WMs 210 and the second chain of serially connected WMs 220 can be coupled to the CLK port 201 of the CM 205.

In the illustrative example of FIG. 2A, the first chain of serially connected WMs 210 and the second chain of serially connected WMs 220 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 210 and/or the WMs of the second chain of serially connected WMs 220 may include any type of serially connected circuitry.

In some cases, each individual WM of the first chain of serially connected WMs 210 and/or each individual WM of the second chain of serially connected WMs 220 may be coupled to one or more antenna elements 212. In some cases, the one or more antenna elements 212 may be similar to and perform similar functions to the one or more antenna elements 112 of FIG. 1.

FIG. 2B through FIG. 2F illustrate an example enumeration sequence utilizing simultaneous reverse propagation for distinguishing between the first chain of serially connected WMs 210 and the second chain of serially connected WMs 220 coupled to the common CS port 206 of the CM 205 of FIG. 2A. In some implementations, identifier values for the first chain of serially connected WMs 210 and the second chain of serially connected WMs 220 can be updated based on a series of identifier update command sets. In some cases, an identifier update command set can include one or more serial commands transmitted over the two-wire interface (e.g., CLK port 201 and DATA port 203) of the CM 205 to the clock ports 211 and data ports 213 of all of the WMs of the first chain of serially connected WMs 210 and the second chain of serially connected WMs 220.

In some implementations, an identifier update command set can include a CS source and an identifier update value. In some cases, updating the identifier values for every individual WM of the first chain of serially connected WMs 210 and every individual WM of the second chain of serially connected WMs 220 can be enabled based on the selected CS source. Additionally or alternatively, an enable signal may be utilized to control whether a WM is configured to allow identifier value updates.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 2B illustrates a first identifier update that assigns an identifier value of "1" to every individual WM of the first chain of serially connected WMs 210 and every individual WM of the second chain of serially connected WMs 220. In one illustrative example, the first identifier update can be initiated by a first identifier update command set transmitted to each WM of the first chain of serially connected WMs 210 and each WM of the second chain of serially connected WMs 220.

In some implementations, the WMs of the first chain of serially connected WMs 210 and the WMs of the second chain of serially connected WMs 220 may be configured to operate in a pass-through configuration with a forward propagation direction in response to the first identifier update command set.

In some cases, the first identifier update command set can include a CS source selection. In one illustrative example, a signal present at the CS port 206 of the CM 205 can provide the CS signal for the first identifier update. For example, the CS source selection included in the first identifier update command set can correspond to the IO ports 216 of the WMs of the first chain of serially connected WMs 210 and/or the IO ports 216 of the WMs of the second chain of serially connected WMs 220. As shown in FIG. 2A, the IO port 216 of the first WM 230 and the IO port 216 of the first WM 260 can be coupled to the CS port 206 of the CM 205. In some cases, when the first WM 230 and/or the first WM 260 are configured to propagate the CS source in a forward propagation pass-through mode, the signal at the CS port 206 of the CM 205 may be propagated through the WMs of the first chain of serially connected WMs 210 and the WMs of the second chain of serially connected WMs 220. Accordingly, the signal at CS port 206 of the CM 205 may act as a CS signal for the first WM 230 of the first chain of serially connected WMs 210, the second WM 240 of the first chain of serially connected WMs 210, the third WM 250 of the first chain of serially connected WMs 210, the first WM 260 of the second chain of serially connected WMs 220, the second WM 270 of the second chain of serially connected WMs 220, and/or the third WM 280 of the second chain of serially connected WMs 220.

In some examples, a signal transmitted from the CS port 206 of the CM 205 may be obtained at the IO port 216 of the first WM 230 of the first chain of serially connected WMs 210. In some examples, the first WM 230 may be configured to pass-through the CS signal from the serial IO port 219 of the first WM 230 to the IO port 216 of the second WM 240 of the first chain of serially connected WMs 210. In some cases, the second WM 240 may be configured to pass-through the CS signal from the serial IO port 219 of the second WM 240 to the IO port 216 of the third WM 250 of the first chain of serially connected WMs 210.

In some implementations, a signal transmitted from the CS port 206 of the CM 205 may be obtained at the IO port 216 of the first WM 260 of the second chain of serially connected WMs 220. In some examples, the first WM 260 may be configured to pass-through the CS signal from the serial IO port 219 of the first WM 260 to the IO port 216 of the second WM 270 of the second chain of serially connected WMs 220. In some cases, the second WM 270 may be configured to pass-through the CS signal from the serial IO port 219 of the second WM 270 to the IO port 216 of the third WM 280 of the second chain of serially connected WMs 220.

In some implementations, the first identifier update command set can include an identifier update value. In one illustrative example, the identifier value 222 and the identifier value 224 may be initialized to a value of "0" and the first identifier update value included in the first identifier update command set can have a value of "1." Accordingly, after the WMs of the first chain of serially connected WMs 210 and the WMs of the second chain of serially connected WMs 220 perform an identifier update based on the first identifier update value, the values of the identifier value 222 and the identifier value 224 can be updated to "1." As illustrated in FIG. 2A, the identifier value 222 for each WM of the first chain of serially connected WMs 210 has a value of "1" after the identifier update. Similarly, the identifier value 224 for each WM of the second chain of serially connected WMs 220 has a value of "1" after the identifier update.

FIG. 2C illustrates a second identifier update that assigns a value of "2" to each individual WM of the second chain of serially connected WMs 220. In one illustrative example, the second identifier update can be initiated by a second identifier update command set. In the illustrated example of FIG. 2C, the second identifier update command set can include one or more serial commands transmitted over the two-wire interface (e.g., CLK port 201 and DATA port 203) of the CM 205 to the clock ports 211 and data ports 213 of all of the WMs of the first chain of serially connected WMs 210 and the second chain of serially connected WMs 220.

In some cases, the serial IO ports 219 of the WMs of the first chain of serially connected WMs 210 and/or the serial IO ports 219 of the third WM 280 of the second chain of serially connected WMs 220 may be used as a CS source. In some implementations, the serial IO port 219 of the third WM 250 of the first chain of serially connected WMs 210 may be coupled to a CS signal (e.g., a ground (GND) signal, a logical "0," or the like). In some examples, the serial IO port 219 of the third WM 280 of the second chain of serially connected WMs 220 may be coupled to an additional CS signal (e.g., a VCC signal, a logical "1," or the like).

In some examples, the WMs of the first chain of serially connected WMs 210, in response to the second identifier update command set, may be configured to pass-through a CS signal (e.g., from the serial IO port 219 of the third WM 250 of the first chain of serially connected WMs 210) to all of the WMs of the first chain of serially connected WMs 210 in a reverse propagation direction.

For example, the third WM 250 of the first chain of serially connected WMs 210 may be configured to pass-through a CS signal (e.g., a ground (GND) signal, a logical "0," or the like) from the IO port 216 of the third WM 250 to the serial IO port 219 of the second WM 240 of the first chain of serially connected WMs 210. In some implementations, a GND signal may be provided to the serial IO port 219 of the third WM 250 by a termination to a ground potential. In some cases, a GND signal may be provided to the serial IO port 219 by a pull-down resistor coupled to the serial IO port 219 and included in the third WM 250. In turn, the second WM 240 may pass the CS signal (e.g., GND) from the IO port 216 of the second WM 240 to the serial IO port 219 of the first WM 230 of the first chain of serially connected WMs 210.

In some cases, the WMs of the second chain of serially connected WMs 220, in response to the second identifier update command set, may be configured to pass-through a CS signal (e.g., from the serial IO port 219 of the third WM 280 of the second chain of serially connected WMs 220) to all of the WMs of the second chain of serially connected WMs 220 in a reverse propagation direction.

For example, the third WM 280 of the second chain of serially connected WMs 220 may pass a CS signal (e.g., a VCC signal, a logical "1," or the like) from the IO port 216 of the third WM 280 to the serial IO port 219 of the second WM 270 of the second chain of serially connected WMs 220. In some implementations, a VCC signal may be provided to the serial IO port 219 of the third WM 280 by a termination to a VCC potential. In some cases, a VCC signal may be provided to the serial IO port 219 of the third WM 280 by a pull-up resistor coupled to the serial IO port 219 and included in the third WM 280. In some cases, the second WM 270 may pass the CS signal (e.g., VCC) from the IO port 216 of the second WM 270 to the serial IO port 219 of the first WM 260 of the second chain of serially connected WMs 220.

In some cases, the CS signal (e.g., a VCC signal, a logical "1," or the like) can correspond to an active state of the selected CS source (e.g., an active CS signal state). Accordingly, the WMs of the second chain of serially connected WMs 220 may perform identifier updates in response to the second pass-through identifier update command set.

Referring to FIG. 2C, the WMs of the second chain of serially connected WMs 220 may obtain a second identifier update value that can be used to update identifier values WMs of the second chain of serially connected WMs 220.

For example, as illustrated in FIG. 2C, an identifier value 234 for the WMs of the second chain of serially connected WMs 220 may be updated to a value of "2." In some cases, the identifier value 234 can be obtained by incrementing the identifier value 224 (e.g., a value of "1") by the second identifier update value of "1."

The identifier updates of FIG. 2B and FIG. 2C can be examples of pass-through identifier update command sets. As used herein, pass-through identifier update command sets refer to update command sets in which a CS signal is common to each WM of a chain of serially connected WMs and a common identifier update value is applied to each WM of the chain of serially connected WMs for which the CS signal is activated. In some cases, the propagation of CS signals in the direction from serial IO port 219 of a WM to serial IO port 219 of an adjacent WMs (e.g., moving toward the direction of the CM 205 of FIG. 2A) can be referred to as "reverse propagation." In some examples, a configuration that utilizes reverse propagation to pass-through a CS signal to all of the WMs of a chain of serially connected WMs may be referred to as a "simultaneous reverse propagation" configuration.

FIG. 2D through FIG. 2F illustrate an example of a forward propagation daisy-chain identifier update sequence. In some implementations, a daisy-chain identifier update can be utilized to assign unique identifier values to each individual WM of the first chain of serially connected WMs 210 and/or each individual WM of the second chain of serially connected WMs 220 in a sequential manner. In some cases, sequentially assigning unique identifier values to each individual WM of the first chain of serially connected WMs 210 and/or each individual WM of the second chain of serially connected WMs 220 can be used in place of additional CS sources that would otherwise be required to separately select the individual WMs. In contrast to the pass-through identifier update command sets of FIG. 2B and FIG. 2C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the CS source can be selected as the IO port 216 of each WM. For example, the first WM 230 of the first chain of serially connected WMs 210 and the first WM 260 of the second chain of serially connected WMs 220 may each respectively receive a CS signal from the CS port 206 of the CM 205 at the IO ports 216.

In the examples of FIG. 2D through FIG. 2F, the daisy-chain identifier update sequence can be initiated by a daisy-chain identifier update command set. In some implementations, in response to receiving the daisy-chain identifier update command set, the first WM 230 of the first chain of serially connected WMs 210 can enable an identifier update for the first WM 230. In some implementations, in response to receiving the daisy-chain identifier update command set, the first WM 230 of the first chain of serially connected WMs 210 can disable an identifier update for the second WM 240 and/or third WM 250 of the first chain of serially connected WMs 210.

Similarly, in response to receiving the daisy-chain identifier update command set, the first WM 260 of the second chain of serially connected WMs 220 can enable an identifier update for the first WM 260. In addition, in response to receiving the daisy-chain identifier update command set, the first WM 260 of the second chain of serially connected WMs 220 can disable an identifier update for the second WM 270 and/or third WM 280 of the second chain of serially connected WMs 220.

In some examples, the first WM 230 of the first chain of serially connected WMs 210 may disable an identifier update for the second WM 240 and/or third WM 250 of the first chain of serially connected WMs 210 by disabling (e.g., overriding) a pass-through of a CS signal from the first WM 230 to the second WM 240. For example, the first WM 230 of the first chain of serially connected WMs 210 may obtain a CS signal at the IO port 216 of the first WM 230. In some implementations, the first WM 230 of the first chain of serially connected WMs 210 may override the CS signal obtained at the IO port 216 of the first WM 230 and output a modified CS signal from the serial IO port 219 of the first WM 230 to the IO port 216 of the second WM 240 of the first chain of serially connected WMs 210. In some cases, the second WM 240 of the first chain of serially connected WMs 210 may be configured to output an additional modified CS signal from the serial IO port 219 of the second WM 240 of the first chain of serially connected WMs 210 to the IO port 216 of the third WM 250 of the first chain of serially connected WMs 210.

In some examples, the WMs of the second chain of serially connected WMs 220 may similarly override pass-through of the CS signal received at the IO port 216 of the first WM 260 of the second chain of serially connected WMs 220 through the WMs of the second chain of serially connected WMs 220.

Referring to FIG. 2D, the WMs of the first chain of serially connected WMs 210 and the WMs of the second chain of serially connected WMs 220 may obtain a first sequential identifier update value that can be used to update identifier values of the first WM 230 of the first chain of serially connected WMs 210 and the first WM 260 of the second chain of serially connected WMs 220.

For example, as illustrated in FIG. 2D, an identifier value 242 for the first WM 230 of the first chain of serially connected WMs 210 may be updated to a value of "3." In some cases, the identifier value 242 can be obtained by incrementing the identifier value 232 (e.g., a value of "1") by a first sequential identifier update value of "2." In some cases, upon updating the identifier value 242 for the first WM 230 of the first chain of serially connected WMs 210, the first WM 230 can disable additional identifier updates associated with the daisy-chain identifier update. In some cases, upon updating the identifier value 242, the first WM 230 of the first chain of serially connected WMs 210 can be configured to enable identifier updates for the second WM 240 of the first chain of serially connected WMs 210.

In one illustrative example, an identifier value 244 for the first WM 260 of the second chain of serially connected WMs 220 may be updated to a value of "4." In some cases, the identifier value 244 can be obtained by incrementing the identifier value 234 (e.g., a value of "2") by the first sequential identifier update value of "2." In some cases, upon updating the identifier value 244 for the first WM 260 of the second chain of serially connected WMs 220, the first WM 260 can disable additional identifier updates associated with the daisy-chain identifier update. In some cases, upon updating the identifier value 244, the first WM 260 of the second chain of serially connected WMs 220 can be configured to enable identifier updates for the second WM 270 of the second chain of serially connected WMs 220.

Referring to FIG. 2E, the WMs of the first chain of serially connected WMs 210 and the WMs of the second chain of serially connected WMs 220 may obtain a second sequential identifier update value that can be used to update identifier values of the second WM 240 of the first chain of serially connected WMs 210 and the second WM 270 of the second chain of serially connected WMs 220.

For example, as illustrated in FIG. 2E, an identifier value 252 for the second WM 240 of the first chain of serially connected WMs 210 may be updated to a value of "5." In some cases, the identifier value 252 can be obtained by incrementing the identifier value 232 (e.g., a value of "1") by a second sequential identifier update value of "4." In some cases, upon updating the identifier value 252 for the second WM 240 of the first chain of serially connected WMs 210, the second WM 240 can disable additional identifier updates associated with the daisy-chain identifier update. In some cases, upon updating the identifier value 252, the second WM 240 of the first chain of serially connected WMs 210 can be configured to enable identifier updates for the third WM 250 of the first chain of serially connected WMs 210.

In one illustrative example, an identifier value 254 for the second WM 270 of the second chain of serially connected WMs 220 may be updated to a value of "6." In some cases, the identifier value 254 can be obtained by incrementing the identifier value 234 (e.g., a value of "2") by the second sequential identifier update value of "4." In some cases, upon updating the identifier value 254 for the second WM 270 of the second chain of serially connected WMs 220, the second WM 270 can disable additional identifier updates associated with the daisy-chain identifier update. In some cases, upon updating the identifier value 254, the second WM 270 of the second chain of serially connected WMs 220 can be configured to enable identifier updates for the third WM 280 of the second chain of serially connected WMs 220.

Referring to FIG. 2F, the WMs of the first chain of serially connected WMs 210 and the WMs of the second chain of serially connected WMs 220 may obtain a third sequential identifier update value that can be used to update identifier values of the third WM 250 of the first chain of serially connected WMs 210 and the third WM 280 of the second chain of serially connected WMs 220. For example, as illustrated in FIG. 2F, an identifier value 262 for the third WM 250 of the first chain of serially connected WMs 210 may be updated to a value of "7." In some cases, the identifier value 262 can be obtained by incrementing the identifier value 232 (e.g., a value of "1") by the third sequential identifier update value of "6." In one illustrative example, an identifier value 254 for the third WM 280 of the second chain of serially connected WMs 220 may be updated to a value of "6." In some cases, the identifier value 264 can be obtained by incrementing the identifier value 234 (e.g., a value of "2") by the third sequential identifier update value of "6."

### Example 2

FIG. 3A illustrates an example configuration 300 of serially connected chains of WMs coupled to a common CS port of a CM 305. In the example configuration 300 of FIG. 3A, a CM 305 includes a CS port 306, CLK port 301, and a DATA port 303. As illustrated, the CS port 306 of the CM 305 is coupled to an IO port 316 of first WM 330 of a first chain of serially connected WMs 310 and an IO port 316 of a first WM 360 of a second chain of serially connected WMs 320. In some cases a combiner/splitter (not shown) may be disposed between the CS port 306 and the IO ports 316 of the first WM 330 and the first WM 360. For example, a Wilkinson combiner/splitter (not shown) may be disposed between the CS port 306 and the IO ports 316 of the first WM 330 of the first chain of serially connected WMs 310 and the first WM 360 of the second chain of serially connected WMs 320.

In some cases, the individual WMs of the second chain of serially connected WMs 320 and the first chain of serially connected WMs 310 can be configured to utilize a clock-data swapped state and/or a clock-data non-swapped state as a CS source.

In the illustrated example of FIG. 3A, individual WMs of the first chain of serially connected WMs 310 and the second chain of serially connected WMs 320 can communicate with CM 305 over a two-wire serial communication interface. In some cases, data ports 313 of the individual WMs of the first chain of serially connected WMs 310 can be coupled to DATA port 303 of the CM 305 and the clock ports 311 of the individual WMs of the first chain of serially connected WMs 310 can be coupled to CLK port 301 of the CM 305. In some cases, the WMs of the first chain of serially connected WMs 310 may be considered to operate in a clock-data non-swapped state.

In some cases, the second chain of serially connected WMs 320 can be configured in a clock-data swapped configuration. In some implementations, the clock ports 321 of the WMs of the second chain of serially connected WMs 320 can be coupled to the DATA port 303 of the CM 305 and the data ports 323 of the WMs of the second chain of serially connected WMs 320 can be coupled to the CLK port 301 of the CM 305. In some cases, the clock ports 321 and the data ports 323 of the individual WMs of the second chain of serially connected WMs 320 may be configured to be internally swapped when the second chain of serially connected WMs 320 is configured in the clock-data swapped configuration.

In some implementations, the serial IO port 319 of the third WM 350 of the first chain of serially connected WMs 310 may be terminated by a termination 372. In some implementations, one or more electrical components (not shown) included in the third WM 350 of the first chain of serially connected WMs 310 coupled to the serial IO port 319 of the third WM 350 may be disabled and/or terminated. In some implementations, the serial IO port 319 of the third WM 380 of the second chain of serially connected WMs 320 may be terminated by a termination 382. In some implementations, one or more electrical components (not shown) included in the third WM 380 of the second chain of serially connected WMs 320 coupled to the serial IO port 319 of the third WM 380 may be disabled and/or terminated.

In the illustrative example of FIG. 3A, the first chain of serially connected WMs 310 and the second chain of serially connected WMs 320 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 310 and/or the WMs of the second chain of serially connected WMs 320 may include any type of serially connected circuitry.

In some cases, each individual WM of the first chain of serially connected WMs 310 and/or each individual WM of the second chain of serially connected WMs 320 may be coupled to one or more antenna elements 312. In some cases, the one or more antenna elements 312 may be similar to and perform similar functions to the one or more antenna elements 112 of FIG. 1.

FIG. 3B through FIG. 3F illustrate an example enumeration sequence utilizing a clock-data swap state for distinguishing between the first chain of serially connected WMs 310 and the second chain of serially connected WMs 320 coupled to the CS port 306 of the CM 305 of FIG. 3A. In some implementations, identifier values for the first chain of serially connected WMs 310 and the second chain of serially connected WMs 320 can be updated based on a series of identifier update command sets. In some cases, an identifier update command set can include one or more serial commands transmitted over the two-wire interface (e.g., CLK port 301 and DATA port 303) of the CM 305 to the clock ports 311 and data ports 313 of all of the WMs of the first chain of serially connected WMs 310 and the second chain of serially connected WMs 320.

In some implementations, an identifier update command set can include a CS source and an identifier update value. In some cases, updating the identifier values for every individual WM of the first chain of serially connected WMs 310 and every individual WM of the second chain of serially connected WMs 320 can be enabled based on the selected CS source.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 3B illustrates a first identifier update that assigns an identifier value of "1" to every individual WM of the first chain of serially connected WMs 310 and every individual WM of the second chain of serially connected WMs 320. In one illustrative example, the first identifier update can be initiated by a first identifier update command set transmitted to each WM of the first chain of serially connected WMs 310 and each WM of the second chain of serially connected WMs 320.

In some implementations, the WMs of the first chain of serially connected WMs 310 and the WMs of the second chain of serially connected WMs 320 may be configured to operate in a forward propagation pass-through configuration in response to the first identifier update command set.

In some cases, the first identifier update command set can include a CS source selection. In one illustrative example, a signal present at the CS port 306 of the CM 305 can provide the CS signal for the first identifier update. For example, the CS source selection included in the first identifier update command set can correspond to the IO ports 316 of the WMs of the first chain of serially connected WMs 310 and/or the IO ports 316 of the WMs of the second chain of serially connected WMs 320. As shown in FIG. 3A, the IO port 316 of the first WM 330 and the IO port 316 of the first WM 360 can be coupled to the CS port 306 of the CM 305. In some cases, when the first WM 330 and/or the first WM 360 are configured to propagate the CS source in a forward propagation pass-through mode, the signal at the CS port 306 of the CM 305 may be propagated through the WMs of the first chain of serially connected WMs 310 and the WMs of the second chain of serially connected WMs 320. Accordingly, the signal at CS port 306 of the CM 305 may act as a CS signal for the first WM 330 of the first chain of serially connected WMs 310, the second WM 340 of the first chain of serially connected WMs 310, the third WM 350 of the first chain of serially connected WMs 310, the first WM 360 of the second chain of serially connected WMs 320, the second WM 370 of the second chain of serially connected WMs 320, and/or the third WM 380 of the second chain of serially connected WMs 320.

In some examples, a signal transmitted from the CS port 306 of the CM 305 may be obtained at the IO port 316 of the first WM 330 of the first chain of serially connected WMs 310. In some examples, the first WM 330 may be configured to pass-through the CS signal from the serial IO port 319 of the first WM 330 to the IO port 316 of the second WM 340 of the first chain of serially connected WMs 310. In some cases, the second WM 340 may be configured to pass-through the CS signal from the serial IO port 319 of the second WM 340 to the IO port 316 of the third WM 350 of the first chain of serially connected WMs 310.

In some implementations, a signal transmitted from the CS port 306 of the CM 305 may be obtained at the IO port 316 of the first WM 360 of the second chain of serially connected WMs 320. In some examples, the first WM 360 may be configured to pass-through the CS signal from the serial IO port 319 of the first WM 360 to the IO port 316 of the second WM 370 of the second chain of serially connected WMs 320. In some cases, the second WM 370 may be configured to pass-through the CS signal from the serial IO port 319 of the second WM 370 to the IO port 316 of the third WM 380 of the second chain of serially connected WMs 320.

In some implementations, the first identifier update command set can include an identifier update value. In one illustrative example, the identifier values 322 and the identifier values 324 may be initialized to a value of "0" and the identifier update value included in the first identifier update command set can have a value of "1." Accordingly, after the WMs of the first chain of serially connected WMs 310 and the WMs of the second chain of serially connected WMs 320 perform an identifier update based on the first identifier update value, the identifier values 322 and the identifier values 324 can be updated to "1." As illustrated in FIG. 3A, the identifier values 322 for each WM of the first chain of serially connected WMs 310 has a value of "1." Similarly, the identifier values 324 for each WM of the second chain of serially connected WMs 320 has a value of "1."

FIG. 3C illustrates a second identifier update that assigns a value of "2" to each individual WM of the second chain of serially connected WMs 320. In one illustrative example, the second identifier update can be initiated by a second identifier update command set. In the illustrated example of FIG. 3C, the second identifier update command set can include one or more serial commands transmitted over the two-wire interface (e.g., CLK port 301 and DATA port 303) of the CM 305 to the clock ports 311 and data ports 313 of all of the WMs of the first chain first chains of serially connected WMs 310 and the second chain of serially connected WMs 320.

In some examples, the CS source included in the second identifier update command set may correspond to a clock-data swapped state of an individual WM. As noted above, each of the WMs of the second chain of serially connected WMs 320 can be considered as operating in a clock-data swapped state. Accordingly, based on the CS source included in the second identifier update command set, the identifier values 334 for the second chain of serially connected WMs 320 can be updated based on the second identifier update value included in the second identifier update command set. As shown in FIG. 3C, the identifier values 334 may be updated to a value of "2" as a result of the second identifier update command set. For example, the value of "2" may be obtained by incrementing the identifier values 324 of FIG. 3B (e.g., a value of "1") by the second identifier update value of "1" included in the second identifier update command set to obtain the identifier values 334 of "2" as shown in FIG. 3C.

FIG. 3D through FIG. 3F illustrate an example of a daisy-chain identifier update sequence. In some implementations, a daisy-chain identifier update can be utilized to assign unique identifier values to each individual WM of the first chain of serially connected WMs 310 and/or each individual WM of the second chain of serially connected WMs 320 in a sequential manner. In some cases, sequentially assigning unique identifier values to each individual WM of the first chain of serially connected WMs 310 and/or each individual WM of the second chain of serially connected WMs 320 can be used in place of additional CS sources that would otherwise be required to separately select the individual WMs. In contrast to the pass-through identifier update command sets of FIG. 3B and FIG. 3C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the CS source can be selected as the IO port 316 of each WM. For example, the first WM 330 of the first chain of serially connected WMs 310 and the first WM 360 of the second chain of serially connected WMs 320 may each respectively receive a CS signal from the CS port 306 of the CM 305 at the IO ports 316.

In the examples of FIG. 3D through FIG. 3F, the daisy-chain identifier update sequence can be initiated by a daisy-chain identifier update command set. In some implementations, in response to receiving the daisy-chain identifier update command set, the first WM 330 of the first chain of serially connected WMs 310 can enable an identifier update for the first WM 330. In some implementations, in response to receiving the daisy-chain identifier update command set, the first WM 330 of the first chain of serially connected WMs 310 can disable an identifier update for the second WM 340 and/or third WM 350 of the first chain of serially connected WMs 310.

Similarly, in response to receiving the daisy-chain identifier update command set, the first WM 360 of the second chain of serially connected WMs 320 can enable an identifier update for the first WM 360. In addition, in response to receiving the daisy-chain identifier update command set, the first WM 360 of the second chain of serially connected WMs 320 can disable an identifier update for the second WM 370 and/or third WM 380 of the second chain of serially connected WMs 320.

In some examples, the first WM 330 of the first chain of serially connected WMs 310 may disable an identifier update for the second WM 340 and/or third WM 350 of the first chain of serially connected WMs 310 by disabling (e.g., overriding) a pass-through of a CS signal from the first WM 330 to the second WM 340. For example, the first WM 330 of the first chain of serially connected WMs 310 may obtain a CS signal at the IO port 316 of the first WM 330. In some implementations, the first WM 330 of the first chain of serially connected WMs 310 may override the CS signal obtained at the IO port 316 of the first WM 330 and output a modified CS signal from the serial IO port 319 of the first WM 330 to the IO port 316 of the second WM 340 of the first chain of serially connected WMs 310. In some cases, the second WM 340 of the first chain of serially connected WMs 310 may be configured to output an additional modified CS signal from the serial IO port 319 of the second WM 340 of the first chain of serially connected WMs 310 to the IO port 316 of the third WM 350 of the first chain of serially connected WMs 310.

In some examples, the WMs of the second chain of serially connected WMs 320 may similarly override pass-through of the CS signal received at the IO port 316 of the first WM 360 of the second chain of serially connected WMs 320 through the WMs of the second chain of serially connected WMs 320.

Referring to FIG. 3D, the WMs of the first chain of serially connected WMs 310 and the WMs of the second chain of serially connected WMs 320 may obtain a first sequential identifier update value that can be used to update identifier values of the first WM 330 of the first chain of serially connected WMs 310 and the first WM 360 of the second chain of serially connected WMs 320.

For example, as illustrated in FIG. 3D, an identifier value 342 for the first WM 330 of the first chain of serially connected WMs 310 may be updated to a value of "3." In some cases, the identifier value 342 can be obtained by incrementing the identifier value 332 (e.g., a value of "1") by a first sequential identifier update value of "2." In some cases, upon updating the identifier value 342 for the first WM 330 of the first chain of serially connected WMs 310, the first WM 330 can disable additional identifier updates associated with the daisy-chain identifier update. In some cases, upon updating the identifier value 342, the first WM 330 of the first chain of serially connected WMs 310 can be configured to enable identifier updates for the second WM 340 of the first chain of serially connected WMs 310.

In one illustrative example, an identifier value 344 for the first WM 360 of the second chain of serially connected WMs 320 may be updated to a value of "4." In some cases, the identifier value 344 can be obtained by incrementing the identifier value 334 (e.g., a value of "2") by the first sequential identifier update value of "2." In some cases, upon updating the identifier value 344 for the first WM 360 of the second chain of serially connected WMs 320, the first WM 360 can disable additional identifier updates associated with the daisy-chain identifier update. In some cases, upon updating the identifier value 344, the first WM 360 of the second chain of serially connected WMs 320 can be configured to enable identifier updates for the second WM 370 of the second chain of serially connected WMs 320.

Referring to FIG. 3E, the WMs of the first chain of serially connected WMs 310 and the WMs of the second chain of serially connected WMs 320 may obtain a second sequential identifier update value that can be used to update identifier values of the second WM 340 of the first chain of serially connected WMs 310 and the second WM 370 of the second chain of serially connected WMs 320.

For example, as illustrated in FIG. 3E, an identifier value 352 for the second WM 340 of the first chain of serially connected WMs 310 may be updated to a value of "5." In some cases, the identifier value 352 can be obtained by incrementing the identifier value 332 (e.g., a value of "1") by a second sequential identifier update value of "4." In some cases, upon updating the identifier value 352 for the second WM 340 of the first chain of serially connected WMs 310, the second WM 340 can disable additional identifier updates associated with the daisy-chain identifier update. In some cases, upon updating the identifier value 352, the second WM 340 of the first chain of serially connected WMs 310 can be configured to enable identifier updates for the third WM 350 of the first chain of serially connected WMs 310.

In one illustrative example, an identifier value 354 for the second WM 370 of the second chain of serially connected WMs 320 may be updated to a value of "6." In some cases, the identifier value 354 can be obtained by incrementing the identifier value 334 (e.g., a value of "2") by the second sequential identifier update value of "4." In some cases, upon updating the identifier value 354 for the second WM 370 of the second chain of serially connected WMs 320, the second WM 370 can disable additional identifier updates associated with the daisy-chain identifier update. In some cases, upon updating the identifier value 354, the second WM 370 of the second chain of serially connected WMs 320 can be configured to enable identifier updates for the third WM 380 of the second chain of serially connected WMs 320.

Referring to FIG. 3F, the WMs of the first chain of serially connected WMs 310 and the WMs of the second chain of serially connected WMs 320 may obtain a third sequential identifier update value that can be used to update identifier values of the third WM 350 of the first chain of serially connected WMs 310 and the third WM 380 of the second chain of serially connected WMs 320. For example, as illustrated in FIG. 3F, an identifier value 362 for the third WM 350 of the first chain of serially connected WMs 310 may be updated to a value of "7." In some cases, the identifier value 362 can be obtained by incrementing the identifier value 332 (e.g., a value of "1") by a third sequential identifier update value of "6." In one illustrative example, an identifier value 354 for the third WM 380 of the second chain of serially connected WMs 320 may be updated to a value of "6." In some cases, the identifier value 364 can be obtained by incrementing the identifier value 334 (e.g., a value of "2") by the third sequential identifier update value of "6."

### Example 3

FIG. 4A illustrates an example configuration 400 of serially connected chains of WMs coupled to different CS ports of a CM. In the example configuration 400 of FIG. 4A, a CM 405 includes a first CS port 406, second CS port 407, CLK port 401, and a DATA port 403. As illustrated, a first CS port 406 of the CM 405 can be coupled to an IO port 416 of first WM 430 of a first chain of serially connected WMs 410. Similarly, a second CS port 407 of the CM 405 can be coupled to an IO port 416 of a first WM 460 of a second chain of serially connected WMs 420. In some cases, at least one of the first CS port 406 or the second CS port 407 may be coupled to a combiner/splitter (not shown) such that the first CS port 406 and/or the second CS port 407 may be shared by additional chains of serially connected WMs (not shown).

In the illustrated example of FIG. 4A, individual WMs of the first chain of serially connected WMs 410 and the second chain of serially connected WMs 420 can communicate with CM 405 over a two-wire serial communication interface. In some cases, data ports 413 of the individual WMs of the first chain of serially connected WMs 410 and the second chain of serially connected WMs 420 can be coupled to DATA port 403 of the CM 405. Similarly, the clock ports 311 of the individual WMs of the first chain of serially connected WMs 410 and the second chain of serially connected WMs 420 can be coupled to the CLK port 401 of the CM 405.

In the illustrative example of FIG. 4A, the first chain of serially connected WMs 410 and the second chain of serially connected WMs 420 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 410 and/or the WMs of the second chain of serially connected WMs 420 may include any type of serially connected circuitry.

In some cases, each individual WM of the first chain of serially connected WMs 410 and/or each individual WM of the second chain of serially connected WMs 420 may be coupled to one or more antenna elements 412. In some cases, the one or more antenna elements 412 may be similar to and perform similar functions to the one or more antenna elements 112 of FIG. 1.

FIG. 4B through FIG. 4F illustrate an example enumeration sequence for the first chain of serially connected WMs 410 coupled to a first CS port 406 and the second chain of serially connected WMs 420 coupled to the second CS port 407 of the CM 405 of FIG. 4A.

In some implementations, identifier values for the first chain of serially connected WMs 410 and the second chain of serially connected WMs 420 can be updated based on a series of identifier update command sets. In some cases, an identifier update command set can include one or more serial commands transmitted over the two-wire interface (e.g., CLK port 401 and DATA port 403) of the CM 405 to the clock ports 411 and data ports 413 of all of the WMs of the first chain of serially connected WMs 410 and the second chain of serially connected WMs 420.

In some implementations, an identifier update command set can include a CS source and an identifier update value. In some cases, updating the identifier values for every individual WM of the first chain of serially connected WMs 410 and every individual WM of the second chain of serially connected WMs 420 can be enabled based on the selected CS source.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 4B illustrates a first identifier update that assigns an identifier value of "1" to every individual WM of the first chain of serially connected WMs 410. In the example of FIG. 4B, identifier values for each WM of the second chain of serially connected WMs 420 may not be updated based on the selected CS source. In one illustrative example, the first identifier update can be initiated by a first identifier update command set transmitted to each WM of the first chain of serially connected WMs 410 and each WM of the second chain of serially connected WMs 420.

In some implementations, the WMs of the first chain of serially connected WMs 410 and the WMs of the second chain of serially connected WMs 420 may be configured to operate in a pass-through configuration with a forward propagation direction in response to the first identifier update command set.

In some cases, the first identifier update command set can include a CS source selection. In one illustrative example, a signal present at the first CS port 406 of the CM 405 may be obtained at the IO port 416 of the first WM 430 of the first chain of serially connected WMs 410. For example, the CS source selection included in the first identifier update command set can correspond to the IO ports 416 of the WMs of the first chain of serially connected WMs 410 and/or the IO ports 416 of the WMs of the second chain of serially connected WMs 420. As shown in FIG. 4A, the IO port 216 of the first WM 430 can be coupled to the first CS port 406 of the CM 405 while the IO port 416 of the first WM 460 can be coupled to the second CS port 407 of the CM 405. In some cases, when the first WM 430 othe first chain of serially connected WMs 410 is configured to propagate the CS source in a forward propagation pass-through mode, the signal at the CS port 406 of the CM 405 may be propagated through the WMs of the first chain of serially connected WMs 410. Similarly, when the first WM 460 of the second chain of serially connected WMs 420 is configured to propagate the CS source in a forward propagation pass-through mode, the signal at the second CS port 407 of the CM 405 may be propagated through the WMs of the second chain of serially connected WMs 420. Accordingly, the signal at first CS port 406 of the CM 405 may act as a CS signal for the first WM 430 of the first chain of serially connected WMs 410, the second WM 440 of the first chain of serially connected WMs 410, the third WM 450 of the first chain of serially connected WMs 410. Similarly, the signal at second CS port 407 of the CM 405 may act as a CS signal for the first WM 460 of the second chain of serially connected WMs 420, the second WM 470 of the second chain of serially connected WMs 420, and/or the third WM 480 of the second chain second chains of serially connected WMs 420.

In some examples, a signal transmitted from the first CS port 406 of the CM 405 may be obtained at the IO port 416 of the first WM 430 of the first chain of serially connected WMs 410. In some examples, the first WM 430 may be configured to pass-through the CS signal from the serial IO port 419 of the first WM 430 to the IO port 416 of the second WM 440 of the first chain of serially connected WMs 410. In some cases, the second WM 440 may be configured to pass-through the CS signal from the serial IO port 419 of the second WM 440 to the IO port 416 of the third WM 450 of the first chain of serially connected WMs 410.

In some cases, the second WM 440 may be configured to pass-through the CS signal from the serial IO port 419 of the second WM 440 to the IO port 416 of the third WM 450 of the first chain of serially connected WMs 410. In some examples, an inactive state of a CS signal may be similarly propagated through the WMs of the second chain of serially connected WMs 420. In some cases, the second WM 470 may be configured to pass-through the CS signal from the serial IO port 419 of the second WM 470 to the IO port 416 of the third WM 480 of the second chain of serially connected WMs 420.

In one illustrative example, the first identifier update command set may include an identifier update value of "1." Similar to the portions of the example enumeration sequences illustrated in FIG. 2B and FIG. 3B, the first identifier update shown in FIG. 4B assigns an identifier value 422 of "1" to every individual WM of the first chain of serially connected WMs 410. However, unlike the portions of the example enumeration sequences illustrated in FIG. 2B and FIG. 3B, the individual WMs of the second chain of serially connected WMs 420 may have an identifier value 424 of "0" after the first identifier update of FIG. 4B. In some cases, the identifier value of "0" may be an initialized identifier value for the WMs of the first chain of serially connected WMs 410 and/or the WMs of the second chain of serially connected WMs 420 (e.g., during a startup sequence and/or as a result of an identifier reset).

As shown in FIG. 4C, a second identifier update can be initiated by a second identifier update command set transmitted to each WM of the first chain of serially connected WMs 410 and each WM of the second chain of serially connected WMs 420.

In some implementations, the WMs of the first chain of serially connected WMs 410 and the second chain of serially connected WMs 420 may be configured to operate in a pass-through configuration in response to the second identifier update command set.

In some implementations, an active state of a CS signal transmitted from the second CS port 407 of the CM 405 may be obtained at the IO port 416 of the first WM 460 of the second chain of serially connected WMs 420. In some examples, the first WM 460 may be configured to pass-through the CS signal from the serial IO port 419 of the first WM 460 to the IO port 416 of the second WM 470 of the second chain of serially connected WMs 420. In some cases, the second WM 470 may be configured to pass-through the CS signal from the serial IO port 419 of the second WM 470 to the IO port 416 of the third WM 480 of the second chain of serially connected WMs 420. In some examples, an inactive state of a CS signal may be similarly propagated through the WMs of the first chain of serially connected WMs 410.

In one illustrative example, the second identifier update command set may include an identifier update value of "2." FIG. 4C illustrates a second identifier update that assigns an identifier value 434 of "2" to every individual WM of the second chain of serially connected WMs 420. For example, the identifier value of "2" may be obtained by incrementing an initialized identifier value 424 of "0" for the WMs of the second chain of serially connected WMs 420 shown in FIG. 4B.

FIG. 4D through FIG. 4F illustrate an example of a daisy-chain identifier update sequence. In some implementations, a daisy-chain identifier update can be utilized to assign unique identifier values to each WM of the first chain of serially connected WMs 410 and/or each WM of the second chain of serially connected WMs 420 in a sequential manner. In some cases, sequentially assigning unique identifier values to each individual WM of the first chain of serially connected WMs 410 and/or each individual WM of the second chain of serially connected WMs 420 can be used in place of additional CS sources that would otherwise be required to separately select the individual WMs. In contrast to the pass-through identifier update command sets of FIG. 4B and FIG. 4C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the selected CS source for the first chain of serially connected WMs 410 can be selected as the signal connected to the IO port 416 (e.g., from the first CS port 406 of CM 405) of the first WM 430 of the first chain of serially connected WMs 410. Similarly, the CS source for the second chain of serially connected WMs 420 can be selected as the signal connected to the IO port 416 (e.g, from the second CS port 407 of the CM 405) of the first WM 460 of the second chain of serially connected WMs 420.

In the examples of FIG. 4D through FIG. 4F, the daisy-chain identifier update sequence can be initiated by a daisy-chain identifier update command set. In some implementations, in response to receiving the daisy-chain identifier update command set, the first WM 430 of the first chain of serially connected WMs 410 can enable an identifier update for the first WM 430. In some implementations, in response to receiving the daisy-chain identifier update command set, the first WM 430 of the first chain of serially connected WMs 410 can disable an identifier update for the second WM 440 and/or third WM 450 of the first chain of serially connected WMs 410.

Similarly, in response to receiving the daisy-chain identifier update command set, the first WM 460 of the second chain of serially connected WMs 420 can enable an identifier update for the first WM 460. In addition, in response to receiving the daisy-chain identifier update command set, the first WM 460 of the second chain of serially connected WMs 420 can disable an identifier update for the second WM 470 and/or third WM 480 of the second chain of serially connected WMs 420.

In some examples, the first WM 430 of the first chain of serially connected WMs 410 may override an identifier update for the second WM 440 and/or third WM 450 of the first chain of serially connected WMs 410 by disabling a pass-through of a CS signal from the first WM 430 to the second WM 440. For example, the first WM 430 of the first chain of serially connected WMs 410 may obtain a CS signal at the IO port 416 of the first WM 430. In some implementations, the first WM 430 of the first chain of serially connected WMs 410 may override the CS signal obtained at the IO port 416 of the first WM 430 and output a modified CS signal from the serial IO port 419 of the first WM 430 to the IO port 416 of the second WM 440 of the first chain of serially connected WMs 410. In some cases, the second WM 440 of the first chain of serially connected WMs 410 may be configured to output an additional modified CS signal from the serial IO port 419 of the second WM 440 to the IO port 416 of the third WM 450 of the first chain of serially connected WMs 410.

In some examples, the WMs of the second chain of serially connected WMs 420 may similarly override pass-through of a CS signal (e.g., from the second CS port 407 of the CM 405) received at the IO port 416 of the first WM 460 of the second chain of serially connected WMs 420 through the WMs of the second chain of serially connected WMs 420.

Referring to FIG. 4D, the WMs of the first chain of serially connected WMs 410 and the WMs of the second chain of serially connected WMs 420 may obtain a first sequential identifier update value that can be used to update identifier values of the first WM 430 of the first chain of serially connected WMs 410 and the first WM 460 of the second chain of serially connected WMs 420. For example, as illustrated in FIG. 4D, an identifier value 442 for the first WM 430 of the first chain of serially connected WMs 410 may be updated to a value of "3." In some cases, the identifier value 442 can be obtained by incrementing the identifier value 432 (e.g., a value of "1") by a first sequential identifier update value of "2." In some cases, upon updating the identifier value 442 for the first WM 430 of the first chain of serially connected WMs 410, the first WM 430 can disable additional identifier updates associated with the daisy-chain identifier update. In some cases, upon updating the identifier value 442, the first WM 430 of the first chain of serially connected WMs 410 can be configured to enable identifier updates for the second WM 440 of the first chain of serially connected WMs 410.

In one illustrative example, an identifier value 444 for the first WM 460 of the second chain of serially connected WMs 420 may be updated to a value of "4." In some cases, the identifier value 444 can be obtained by incrementing the identifier value 434 (e.g., a value of "2") by the first sequential identifier update value of "2." In some cases, upon updating the identifier value 444 for the first WM 460 of the second chain of serially connected WMs 420, the first WM 460 can disable additional identifier updates associated with the daisy-chain identifier update. In some cases, upon updating the identifier value 444, the first WM 460 of the second chain of serially connected WMs 420 can be configured to enable identifier updates for the second WM 470 of the second chain of serially connected WMs 420.

Referring to FIG. 4E, the WMs of the first chain of serially connected WMs 410 and the WMs of the second chain of serially connected WMs 420 may obtain a second sequential identifier update value that can be used to update identifier values of the second WM 440 of the first chain of serially connected WMs 410 and the second WM 470 of the second chain of serially connected WMs 420.

For example, as illustrated in FIG. 4E, an identifier value 452 for the second WM 440 of the first chain of serially connected WMs 410 may be updated to a value of "5." In some cases, the identifier value 452 can be obtained by incrementing the identifier value 432 (e.g., a value of "1") by a second sequential identifier update value of "4." In some cases, upon updating the identifier value 452 for the second WM 440 of the first chain of serially connected WMs 410, the second WM 440 can disable additional identifier updates associated with the daisy-chain identifier update. In some cases, upon updating the identifier value 452, the second WM 440 of the first chain of serially connected WMs 410 can be configured to enable identifier updates for the third WM 450 of the first chain of serially connected WMs 410.

In one illustrative example, an identifier value 454 for the second WM 470 of the second chain of serially connected WMs 420 may be updated to a value of "6." In some cases, the identifier value 454 can be obtained by incrementing the identifier value 434 (e.g., a value of "2") by the second sequential identifier update value of "4." In some cases, upon updating the identifier value 454 for the second WM 470 of the second chain of serially connected WMs 420, the second WM 470 can disable additional identifier updates associated with the daisy-chain identifier update. In some cases, upon updating the identifier value 454, the second WM 470 of the second chain of serially connected WMs 420 can be configured to enable identifier updates for the third WM 480 of the second chain of serially connected WMs 420.

Referring to FIG. 4F, the WMs of the first chain of serially connected WMs 410 and the WMs of the second chain of serially connected WMs 420 may obtain a third sequential identifier update value that can be used to update identifier values of the third WM 450 of the first chain of serially connected WMs 410 and the third WM 480 of the second chain of serially connected WMs 420. For example, as illustrated in FIG. 4F, an identifier value 462 for the third WM 450 of the first chain of serially connected WMs 410 may be updated to a value of "7." In some cases, the identifier value 462 can be obtained by incrementing the identifier value 432 (e.g., a value of "1") by a third sequential identifier update value of "6." In one illustrative example, an identifier value 454 for the third WM 480 of the second chain of serially connected WMs 420 may be updated to a value of "8." In some cases, the identifier value 464 can be obtained by incrementing the identifier value 434 (e.g., a value of "2") by the third sequential identifier update value of "6."

### Example 4

FIG. 5A illustrates an additional example configuration 500 of serially connected chains of WMs coupled to a common CS port of a CM. In the example configuration 500 of FIG. 5AA, a CM 505 includes a CS port 506, CLK port 501, and a DATA port 503. As illustrated, the CS port 506 of the CM 505 is coupled to an IO port 516 of first WM 530 of a first chain of serially connected WMs 510 and an IO port 516 of a first WM 560 of a second chain of serially connected WMs 520. In some cases a combiner/splitter (not shown) may be disposed between the CS port 506 and the IO ports 516 of the first WM 530 and the first WM 560. For example, a Wilkinson splitter/combiner (not shown) may be disposed between the CS port 506 and the IO ports 516 of the first WM 530 of the first chain of serially connected WMs 510 and the first WM 560 of the second chain of serially connected WMs 520.

In the illustrated example of FIG. 5A, individual WMs of the first chain of serially connected WMs 510 and the second chain of serially connected WMs 520 can communicate with CM 505 over a two-wire serial communication interface. In some cases, data ports 513 of the individual WMs of the first chain of serially connected WMs 510 and the second chain of serially connected WMs 520 can be coupled to DATA port 503 of the CM 505. Similarly, the clock ports 511 of the individual WMs of the first chain of serially connected WMs 510 and the second chain of serially connected WMs 520 can be coupled to the CLK port 501 of the CM 505.

In the illustrative example of FIG. 5A, the first chain of serially connected WMs 510 and the second chain of serially connected WMs 520 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 510 and/or the WMs of the second chain of serially connected WMs 520 may include any type of serially connected circuitry.

In some cases, each individual WM of the first chain of serially connected WMs 510 and/or each individual WM of the second chain of serially connected WMs 520 may be coupled to one or more antenna elements 512. In some cases, the one or more antenna elements 512 may be similar to and perform similar functions to the one or more antenna elements 112 of FIG. 1.

FIG. 5B through FIG. 5F illustrate an example enumeration sequence utilizing simultaneous reverse propagation for distinguishing between the first chain of serially connected WMs 510 and the second chain of serially connected WMs 520 coupled to the common CS port 506 of the CM 505. The example enumeration sequence of FIG. 5B through FIG. 5F can be similar to the example enumeration sequence illustrated with respect to FIG. 2B through FIG. 2F. However, the enumeration sequence of FIG. 5B through FIG. 5F utilizes different unique identifier values (e.g., final unique identifiers after the enumeration sequence is completed) and different ordering of identifier update command sets when compared to the enumeration sequence shown in FIG. 2B through FIG. 2F.

FIG. 5B through FIG. 5D illustrate an example of a daisy-chain identifier update sequence. In some implementations, a daisy-chain identifier update can be utilized to assign unique identifier values (e.g., unique identifier value increments) to each individual WM of the first chain of serially connected WMs 510 and/or each individual WM of the second chain of serially connected WMs 520 in a sequential manner. In some cases, sequentially assigning unique identifier values to each individual WM of the first chain of serially connected WMs 510 and/or each individual WM of the second chain of serially connected WMs 520 can be used in place of additional CS sources that would otherwise be required to separately select the individual WMs. A daisy-chain identifier update sequence may result in different identifier update values being applied to the identifiers of each WM of a chain of serially connected WMs.

In some implementations, the daisy-chain identifier update command set may be associated with a CS source. In one illustrative example, the CS source can be selected as the IO port 516 of each WM. For example, the first WM 530 of the first chain of serially connected WMs 510 and the first WM 560 of the second chain of serially connected WMs 520 may each respectively receive a CS signal from the CS port 506 of the CM 505 at the IO ports 516.

In the examples of FIG. 5B through FIG. 5D, the daisy-chain identifier update sequence can be initiated by a daisy-chain identifier update command set. In some implementations, in response to receiving the daisy-chain identifier update command set, the first WM 530 of the first chain of serially connected WMs 510 can enable an identifier update for the first WM 530. In some implementations, in response to receiving the daisy-chain identifier update command set, the first WM 530 of the first chain of serially connected WMs 510 can disable an identifier update for the second WM 540 and/or third WM 550 of the first chain of serially connected WMs 510.

Similarly, in response to receiving the daisy-chain identifier update command set, the first WM 560 of the second chain of serially connected WMs 520 can enable an identifier update for the first WM 560. In addition, in response to receiving the daisy-chain identifier update command set, the first WM 560 of the second chain of serially connected WMs 520 can disable an identifier update for the second WM 570 and/or third WM 580 of the second chain of serially connected WMs 520.

In some examples, the first WM 530 of the first chain of serially connected WMs 510 may disable an identifier update for the second WM 540 and/or third WM 550 of the first chain of serially connected WMs 510 by disabling a pass-through of a CS signal from the first WM 530 to the second WM 540. For example, the first WM 530 of the first chain of serially connected WMs 510 may obtain a CS signal at the IO port 516 of the first WM 530. In some implementations, the first WM 530 of the first chain of serially connected WMs 510 may override the CS signal obtained at the IO port 516 of the first WM 530 and output a modified CS signal from the serial IO port 519 of the first WM 530 to the IO port 516 of the second WM 540 of the first chain of serially connected WMs 510. In some cases, the second WM 540 of the first chain of serially connected WMs 510 may be configured to output an additional modified CS signal from the serial IO port 519 of the second WM 540 of the first chain of serially connected WMs 510 to the IO port 516 of the third WM 550 of the first chain of serially connected WMs 510.

In some examples, the WMs of the second chain of serially connected WMs 520 may similarly override pass-through of the CS signal received at the IO port 516 of the first WM 560 of the second chain of serially connected WMs 520 through the WMs of the second chain of serially connected WMs 520.

Referring to FIG. 5B, the WMs of the first chain of serially connected WMs 510 and the WMs of the second chain of serially connected WMs 520 may obtain a first sequential identifier update value that can be used to update identifier values of the first WM 530 of the first chain of serially connected WMs 510 and the first WM 560 of the second chain of serially connected WMs 520.

For example, as illustrated in FIG. 5B, an identifier value 522 for the first WM 530 of the first chain of serially connected WMs 510 may be updated to a hexadecimal value of "1." In some cases, the identifier value 522 can be obtained by incrementing an initialized identifier value for the first WM 530 (e.g., a hexadecimal value of "0") by a first sequential identifier update hexadecimal value of "1." In some cases, upon updating the identifier value 522 for the first WM 530 of the first chain of serially connected WMs 510, the first WM 530 can disable additional identifier updates associated with the daisy-chain identifier update. In some cases, upon updating the identifier value 522, the first WM 530 of the first chain of serially connected WMs 510 can be configured to enable identifier updates for the second WM 540 of the first chain of serially connected WMs 510.

In one illustrative example, an identifier value 524 for the first WM 560 of the second chain of serially connected WMs 520 may be updated to a hexadecimal value of "1." In some cases, the identifier value 544 can be obtained by incrementing an initialized identifier value for the first WM 560 (e.g., a hexadecimal value of "0") by the first sequential identifier hexadecimal update value of "1." In some cases, upon updating the identifier value 524 for the first WM 560 of the second chain of serially connected WMs 520, the first WM 560 can disable additional identifier updates associated with the daisy-chain identifier update. In some cases, upon updating the identifier value 524, the first WM 560 of the second chain of serially connected WMs 520 can be configured to enable identifier updates for the second WM 570 of the second chain of serially connected WMs 520.

Referring to FIG. 5C, the WMs of the first chain of serially connected WMs 510 and the WMs of the second chain of serially connected WMs 520 may obtain a second sequential identifier update value that can be used to update identifier values of the second WM 540 of the first chain of serially connected WMs 510 and the second WM 570 of the second chain of serially connected WMs 520.

As illustrated in FIG. 5C, an identifier value 532 for the second WM 540 of the first chain of serially connected WMs 510 may be updated to a hexadecimal value of "2." In some cases, the identifier value 532 can be obtained by incrementing an initialized identifier value for the second WM 540 (e.g., a hexadecimal value of "0") by a second sequential identifier update hexadecimal value of "2." In some cases, upon updating the identifier value 532 for the second WM 540 of the first chain of serially connected WMs 510, the second WM 540 can disable additional identifier updates associated with the daisy-chain identifier update. In some cases, upon updating the identifier value 532, the second WM 540 of the first chain of serially connected WMs 510 can be configured to enable identifier updates for the third WM 250 of the first chain of serially connected WMs 210.

In one illustrative example, an identifier value 534 for the second WM 570 of the second chain of serially connected WMs 520 may be updated to a hexadecimal value of "2." In some cases, the identifier value 534 can be obtained by incrementing an initialized identifier value for the second WM 570 (e.g., a hexadecimal value of "0") by the second sequential identifier update hexadecimal value of "2." In some cases, upon updating the identifier value 254 for the second WM 270 of the second chain of serially connected WMs 220, the second WM 270 can disable additional identifier updates associated with the daisy-chain identifier update. In some cases, upon updating the identifier value 254, the second WM 270 of the second chain of serially connected WMs 220 can be configured to enable identifier updates for the third WM 280 of the second chain of serially connected WMs 220.

Referring to FIG. 5D, the WMs of the first chain of serially connected WMs 510 and the WMs of the second chain of serially connected WMs 520 may obtain a third sequential identifier update value that can be used to update identifier values of the third WM 550 of the first chain of serially connected WMs 510 and the third WM 580 of the second chain of serially connected WMs 520. For example, as illustrated in FIG. 5D, an identifier value 542 for the third WM 550 of the first chain of serially connected WMs 510 may be updated to a value of "3." In some cases, the identifier value 542 can be obtained by incrementing an initialized identifier value for the third WM 550 (e.g., a value of "0") by a third sequential identifier update hexadecimal value of "3." In one illustrative example, an identifier value 544 for the third WM 580 of the second chain of serially connected WMs 520 may be updated to a value of "3." In some cases, the identifier value 544 can be obtained by incrementing an initialized identifier value for the third WM 580 (e.g., a hexadecimal value of "0") by the third sequential identifier update hexadecimal value of "3."

FIG. 5E illustrates a first pass-through identifier update that increments identifier values of every individual WM of the first chain of serially connected WMs 510 and every individual WM of the second chain of serially connected WMs 520 by a identifier update hexadecimal value of "8". In one illustrative example, the first pass-through identifier update of FIG. 5E can be initiated by a first pass-through identifier update command set transmitted to each WM of the first chain of serially connected WMs 510 and each WM of the second chain of serially connected WMs 520.

In some implementations, the WMs of the first chain of serially connected WMs 510 and the WMs of the second chain of serially connected WMs 520 may be configured to operate in a pass-through configuration with a forward propagation direction in response to the first identifier update command set.

In some cases, the first pass-through identifier update command set of FIG. 5E can include a CS source selection. In one illustrative example, a signal present at the CS port 506 of the CM 505 can provide the CS signal for the first identifier update. For example, the CS source selection included in the first identifier update command set can correspond to the IO ports 516 of the WMs of the first chain of serially connected WMs 510 and/or the IO ports 516 of the WMs of the second chain of serially connected WMs 520. As shown in FIG. 5A, the IO port 516 of the first WM 530 and the IO port 516 of the first WM 530 can be coupled to the CS port 506 of the CM 505. In some cases, when the first WM 530 and/or the first WM 560 are configured to propagate the CS source in a forward propagation pass-through mode, the signal at the CS port 506 of the CM 505 may be propagated through the WMs of the first chain of serially connected WMs 510 and the WMs of the second chain of serially connected WMs 520. Accordingly, the signal at CS port 506 of the CM 505 may act as a CS signal for the first WM 530 of the first chain of serially connected WMs 510, the second WM 540 of the first chain of serially connected WMs 510, the third WM 550 of the first chain of serially connected WMs 510, the first WM 560 of the second chain of serially connected WMs 520, the second WM 570 of the second chain of serially connected WMs 520, and/or the third WM 580 of the second chain of serially connected WMs 520.

In some examples, a signal transmitted from the CS port 506 of the CM 505 may be obtained at the IO port 516 of the first WM 530 of the first chain of serially connected WMs 510. In some examples, the first WM 530 may be configured to pass-through the CS signal from the serial IO port 519 of the first WM 530 to the IO port 516 of the second WM 540 of the first chain of serially connected WMs 510. In some cases, the second WM 540 may be configured to pass-through the CS signal from the serial IO port 519 of the second WM 540 to the IO port 516 of the third WM 550 of the first chain of serially connected WMs 510.

In some examples, a signal transmitted from the CS port 506 of the CM 505 may be obtained at the IO port 516 of the first WM 560 of the second chain of serially connected WMs 520. In some examples, the first WM 560 may be configured to pass-through the CS signal from the serial IO port 519 of the first WM 560 to the IO port 516 of the second WM 570 of the second chain of serially connected WMs 520. In some cases, the second WM 570 may be configured to pass-through the CS signal from the serial IO port 519 of the second WM 570 to the IO port 516 of the third WM 580 of the second chain of serially connected WMs 520.

In some implementations, the first pass-through identifier update command set can include a first pass-through identifier update hexadecimal value. In one illustrative example, the first pass-through identifier update hexadecimal value included in the first pass-through identifier update command set of FIG. 5E can have a value of "8."

As shown in FIG. 5E, the identifier value 552 for the first WM 530 of the first chain of serially connected WMs 510 and the identifier value 555 for the first WM 560 of the second chain of serially connected WMs 520 can be updated to the hexadecimal value "9." In some examples, the hexadecimal value "9" may be obtained by incrementing the identifier value 522 (e.g., hexadecimal value "1") and the identifier value 524 (e.g., hexadecimal value "1") by the first pass-through identifier update hexadecimal value "8."

In some cases, the identifier value 553 for the second WM 540 of the first chain of serially connected WMs 510 and the identifier value 556 for the second WM 570 of the second chain of serially connected WMs 520 can be updated to the hexadecimal value "A." In some examples, the hexadecimal value "A" may be obtained by incrementing the identifier value 532 (e.g., hexadecimal value "2") and the identifier value 534 (e.g., hexadecimal value "2") by the first pass-through identifier update hexadecimal value "8."

In some implementations, the identifier value 554 for the third WM 550 of the first chain of serially connected WMs 510 and the identifier value 557 for the third WM 580 of the second chain of serially connected WMs 520 can be updated to the hexadecimal value "B." In some examples, the hexadecimal value "B" may be obtained by incrementing the identifier value 542 (e.g., hexadecimal value "3") and the identifier value 544 (e.g., hexadecimal value "3") by the first pass-through identifier update hexadecimal value "8."

FIG. 5F illustrates a second pass-through identifier update that increments the identifier value of each individual WM of the second chain of serially connected WMs 520. In one illustrative example, the second pass-through identifier update can be initiated by a second pass-through identifier update command set. In the illustrated example of FIG. 5F, the second pass-through identifier update command set can include one or more serial commands transmitted over the two-wire interface (e.g., CLK port 501 and DATA port 503) of the CM 505 to the clock ports 511 and data ports 513 of all of the WMs of the first chain of serially connected WMs 510 and the second chain of serially connected WMs 520.

In some cases, the second pass-through identifier update command set of FIG. 5F can include a CS source selection. In one illustrative example, respective serial IO ports 519 of the WMs of the first chain of serially connected WMs 510 and respective serial IO port 519 of the WMs of the second chain of serially connected WMs 520 can be selected as the CS source for the second pass-through identifier update.

In some examples, the WMs of the first chain of serially connected WMs 510, in response to the second pass-through identifier update command set, may be configured to pass-through a CS signal (e.g., from the serial IO port 519 of the third WM 550 of the first chain of serially connected WMs 510) to all of the WMs of the first chain of serially connected WMs 510 in a reverse propagation direction.

In some cases, the WMs of the first chain of serially connected WMs 510, in response to the second identifier update command set, may pass through a CS signal (e.g., a ground (GND) signal, a logical "0," or the like) to all of the WMs of the second chain of serially connected WMs 520. For example, the third WM 550 of the first chain of serially connected WMs 510 may pass a CS signal (e.g., a ground (GND) signal, a logical "0," or the like) received at the serial IO port 519 of the third WM 550 to the serial IO port 519 of the second WM 540 of the first chain of serially connected WMs 510 from the IO port 516 of the third WM 550. In some implementations, a GND signal may be provided to the serial IO port 519 of the third WM 550 by a termination to a ground potential. In some cases, a GND signal may be provided to the serial IO port 219 of the third WM 550 by a pull-down resistor coupled to the serial IO port 519 and included in the third WM 550. In turn, the second WM 540 may pass the CS signal received at the serial IO port 519 of the second WM 540 of the first chain of serially connected WMs 510 to the serial IO port 519 of the first WM 530 of the first chain of serially connected WMs 510 from the IO port 516 of the second WM 540.

In some examples, the third WM 550 of the first chain of serially connected WMs 510 may pass a corresponding CS signal (e.g., a GND signal, a logical "0," or the like) received at the serial IO port 519 of the third WM 550 from the IO port 516 of the third WM 550 to the serial IO port 519 of the second WM 540 of the first chain of serially connected WMs 510. In some implementations, a GND signal may be provided to the serial IO port 519 of the third WM 550 by a termination to a ground potential. In some cases, a GND signal may be provided to the serial IO port 519 by a pull-down resistor coupled to the serial IO port 519 and included in the third WM 550.In turn, the second WM 540 may pass the CS signal from the IO port 516 of the second WM 540 to the serial IO port 519 of the first WM 530 of the first chain of serially connected WMs 510.

In some cases, the CS signal (e.g., a GND signal, a logical "0," or the like) can correspond to an inactive state of the selected CS source (e.g., an inactive CS signal state). Accordingly, the WMs of the first chain of serially connected WMs 510 may not perform any identifier update in response to the second pass-through identifier update command set.

In some cases, the WMs of the second chain of serially connected WMs 520, in response to the second pass-through identifier update command set, may pass through a CS signal (e.g., from the serial IO port 519 of the third WM 580 of the second chain of serially connected WMs 520) to all of the WMs of the second chain of serially connected WMs 520 in a reverse propagation direction.

In some cases, the third WM 580 of the second chain of serially connected WMs 520 may pass a corresponding CS signal (e.g., a VCC signal, a logical "1," or the like) received at the serial IO port 519 of the third WM 580 to the serial IO port 519 of the second WM 570 of the second chain of serially connected WMs 520. In some implementations, a VCC signal may be provided to the serial IO port 519 of the third WM 580 by a termination to a VCC potential. In some cases, a VCC signal may be provided to the serial IO port 519 of the third WM 580 by a pull-up resistor coupled to the serial IO port 519 and included in the third WM 580. In turn, the second WM 570 may pass the CS signal from the IO port 516 of the second WM 570 to the serial IO port 519 of the first WM 560 of the second chain of serially connected WMs 520.

In some cases, the CS signal (e.g., a VCC signal, a logical "1," or the like) can correspond to an active state of the selected CS source (e.g., an active CS signal state). Accordingly, the WMs of the second chain of serially connected WMs 520 may perform identifier updates in response to the second pass-through identifier update command set.

In some implementations, the second pass-through identifier update command set can include a second pass-through identifier update value. In one illustrative example, the second pass-through identifier update value included in the second pass-through identifier update command set of FIG. 5F can have a hexadecimal value of "4."

As shown in FIG. 5F, the identifier value 565 for the first WM 560 of the second chain of serially connected WMs 520 can be updated to the hexadecimal value "D." In some examples, the hexadecimal value "D" may be obtained by incrementing the identifier value 555 (e.g., hexadecimal value "9") by the second pass-through identifier update hexadecimal value "4. "

In some cases, the identifier value 566 for the second WM 570 of the second chain of serially connected WMs 520 can be updated to the hexadecimal value "E." In some examples, the hexadecimal value "E" may be obtained by incrementing the identifier value 556 (e.g., hexadecimal value "A") by the second pass-through identifier update hexadecimal value "4."

In some implementations, the identifier value 567 for the third WM 580 of the second chain of serially connected WMs 520 can be updated to the hexadecimal value "F." In some examples, the hexadecimal value "F" may be obtained by incrementing the identifier value 557 (e.g., hexadecimal value "B") by the second pass-through identifier update hexadecimal value "4. "

As noted above, the first pass-through identifier update command set described with respect to FIG. 5E and the second pass-through identifier update command set described with respect to FIG. 5F may pass a CS signal through all of the WMs of a particular chain of serially connected WMs. Accordingly, the identifier updates of FIG. 5E and FIG. 5F can be examples of pass-through identifier update command sets.

### Example 5

FIG. 6A illustrates an example configuration 600 of two chains of serially connected WMs 610, 620 where each chain of serially connected WMs includes two serial through-paths. In the example configuration 600 of FIG. 6A, a CM 605 includes a first CS port 606, second CS port 607, CLK port 601, and DATA port 603. As illustrated, a first CS port 606 of the CM 605 can be coupled to a first IO port 616 of first WM 630 of a first chain of serially connected WMs 610. Similarly, a second CS port 607 of the CM 605 can be coupled to a second IO port 617 of the first WM 630 of the first chain of serially connected WMs 610. In some cases, at least one of the first CS port 606 or the second CS port 607 may be coupled to a combiner/splitter (not shown) such that the first CS port 606 and/or the second CS port 607 may be shared by additional chains of serially connected WMs. For example, FIG. 6A illustrates the first CS port 606 of the CM 605 coupled to the second IO port 617 of the first WM 660 of the second chain of serially connected WMs 620. In the example of FIG. 6A, the first IO port 616 of the first WM 660 of the second chain of serially connected WMs 620 may be coupled to a CS port of an additional CM (not shown), the second CS port 607 of the CM 605, a termination, or the like.

As illustrated in FIG. 6A, first serial IO port 619 of the first WM 630 of the first chain of serially connected WMs 610 can be coupled to first IO port 616 of the second WM 640 of the first chain of serially connected WMs 610. Similarly, second serial IO port 621 of the first WM 630 of the first chain of serially connected WMs 610 can be coupled to second IO port 617 of the first WM 630 of the first chain of serially connected WMs 610. In some illustrated example, first serial IO port 619 of the second WM 640 of the first chain of serially connected WMs 610 can be coupled to first IO port 616 of the third WM 650 of the first chain of serially connected WMs 610. Similarly, second serial IO port 621 of the second WM 640 can be coupled to the second IO port 617 of the third WM 650 of the first chain of serially connected WMs 610. The individual WMs of the second chain of serially connected WMs 620 may include serial connections between first serial IO ports 619 and first IO ports 616 of subsequent serially connected WMs as well as connections between second serial IO ports 621 and second IO ports 617 of subsequent serially connected WMs as described with respect to the individual WMs of the first chain of serially connected WMs 610.

In the illustrated example of FIG. 6A, individual WMs of the first chain of serially connected WMs 610 and the second chain of serially connected WMs 620 can communicate with CM 605 over a two-wire serial communication interface. In some cases, data ports 613 of the individual WMs of the first chain of serially connected WMs 610 and the second chain of serially connected WMs 620 can be coupled to DATA port 603 of the CM 605. Similarly, the clock ports 311 of the individual WMs of the first chain of serially connected WMs 610 and the second chain of serially connected WMs 620 can be coupled to the CLK port 601 of the CM 605.

In the illustrative example of FIG. 6A, the first chain of serially connected WMs 610 and the second chain of serially connected WMs 620 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 610 and/or the WMs of the second chain of serially connected WMs 620 may include any type of serially connected circuitry.

In some cases, each individual WM of the first chain of serially connected WMs 610 and/or each individual WM of the second chain of serially connected WMs 620 may be coupled to one or more antenna elements 612. In some cases, the one or more antenna elements 612 may be similar to and perform similar functions to the one or more antenna elements 112 of FIG. 1.

FIG. 6B through FIG. 6F illustrate an example enumeration sequence for the first chain of serially connected WMs 610 and second chain of serially connected WMs 620 each having two serial through-paths. In some implementations, identifier values for the first chain of serially connected WMs 610 and/or the second chain of serially connected WMs 620 can be updated based on a series of identifier update command sets. In some cases, an identifier update command set can include one or more serial commands transmitted over the two-wire interface (e.g., CLK port 601 and DATA port 603) of the CM 605 to the clock ports 611 and data ports 613 of all of the WMs of the first chain of serially connected WMs 610 and the second chain of serially connected WMs 620.

In some implementations, an identifier update command set can include a CS source and an identifier update value. In some cases, updating the identifier values for every individual WM of the first chain of serially connected WMs 610 can be enabled based on the selected CS source. Additionally or alternatively, an enable signal may be utilized to control whether a WM is configured to allow identifier value updates.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 6B illustrates a first identifier update that assigns an identifier value of "1" to every individual WM of the first chain of serially connected WMs 610. In one illustrative example, the first identifier update can be initiated by a first identifier update command set transmitted to each WM of the first chain of serially connected WMs 610 and each WM of the second chain of serially connected WMs 620.

In some implementations, the WMs of the first chain of serially connected WMs 610 and the WMs of the second chain of serially connected WMs 620 may be configured to operate in a forward propagation pass-through configuration in response to the first identifier update command set.

In some cases, the first identifier update command set can include a CS source selection. In the example of FIG. 6B, the selected CS source can be the first IO port 616 of each individual WM of the first chain of serially connected WMs 610 and the second chain of serially connected WMs 620.

In some examples, an active state of a CS signal (e.g., a logical "1" value) transmitted from the first CS port 606 of the CM 605 may be obtained at the first IO port 616 of the first WM 630 of the first chain of serially connected WMs 610 and at the second IO port 617 of the first WM 660 of the second chain of serially connected WMs 620. In some examples, the first WM 630 may be configured to pass-through the CS signal from the first serial IO port 619 of the first WM 630 to the first IO port 616 of the second WM 640 of the first chain of serially connected WMs 610. In some cases, the second WM 640 may be configured to pass-through the CS signal from the serial IO port 619 of the second WM 640 to the first IO port 616 of the third WM 650 of the first chain of serially connected WMs 610.

In some examples, an inactive state (e.g., a logical "0" value) of a CS signal received at the first IO port 616 of the first WM 660 of the second chain of serially connected WMs 620 may be similarly propagated through the WMs of the second chain of serially connected WMs 620.

In one illustrative example, the first identifier update command set may include an identifier update value of "1." Similar to the portions of the example enumeration sequences illustrated in FIG. 2B and FIG. 3B, the first identifier update shown in FIG. 6B assigns an identifier value 622 of "1" to every individual WM of the first chain of serially connected WMs 610. However, unlike the portions of the example enumeration sequences illustrated in FIG. 2B and FIG. 3B, the individual WMs of the second chain of serially connected WMs 620 may have an identifier value 624 of "0" after the first identifier update of FIG. 6B. In some cases, the identifier value of "0" may be an initialized identifier value for the WMs of the first chain of serially connected WMs 610 and/or the WMs of the second chain of serially connected WMs 620 (e.g., during a startup sequence and/or as a result of an identifier reset).

As shown in FIG. 6C, a second identifier update can be initiated by a second identifier update command set transmitted to each WM of the first chain of serially connected WMs 610 and each WM of the second chain of serially connected WMs 620.

In some implementations, the WMs of the first chain of serially connected WMs 610 and the second chain of serially connected WMs 620 may be configured to operate in a forward propagation pass-through configuration in response to the second identifier update command set. In the illustrated example of FIG. 6C the second identifier update command set may include a selected CS source corresponding to the second IO ports 617 of the individual WMs of the first chain of serially connected WMs 610 and the second chain of serially connected WMs 620.

In some implementations, an inactive state (e.g., a logical "0" value) of a CS signal transmitted from the second CS port 607 of the CM 605 may be obtained at the second IO port 617 of the first WM 660 of the second chain of serially connected WMs 620. In some cases, an active state (e.g., a logical "1" value) of an additional CS signal may be transmitted from the first CS port 606 of the CM 605 to the first IO port 616 of the first WM 630 of the first chain of serially connected WMs 610. In some cases, the active state (e.g., a logical "1" value) of the additional CS signal may also be transmitted from the first CS port 606 of the CM 605 to the second IO port 617 of the first WM 660 of the second chain of serially connected WMs 620.

In some examples, the first WM 660 of the second chain of serially connected WMs 620 may be configured to pass-through the CS signal from the second serial IO port 621 of the first WM 660 to the second IO port 617 of the second WM 670 of the second chain of serially connected WMs 620. In some cases, the second WM 670 may be configured to pass-through the CS signal from the second serial IO port 621 of the second WM 670 to the second IO port 617 of the third WM 680 of the second chain of serially connected WMs 620. In some examples, an inactive state (e.g., a logical "0" value) of a CS signal may be similarly propagated through the WMs of the first chain of serially connected WMs 610.

In one illustrative example, the second identifier update command set may include an identifier update value of "2." FIG. 6C illustrates a second identifier update that assigns an identifier value 634 of "2" to every individual WM of the second chain of serially connected WMs 620. For example, the identifier value of "2" may be obtained by incrementing an initialized identifier value 624 of "0" for the WMs of the second chain of serially connected WMs 620 shown in FIG. 6B. In some cases, the identifier value of "0" may be an initialized identifier value for the WMs of the first chain of serially connected WMs 610 and/or the WMs of the second chain of serially connected WMs 620 (e.g., during a startup sequence and/or as a result of an identifier reset).

FIG. 6D through FIG. 6F illustrate an example of a daisy-chain identifier update sequence. In some implementations, a daisy-chain identifier update can be utilized to assign unique identifier values to each WM of the first chain of serially connected WMs 610 and/or each WM of the second chain of serially connected WMs 620 in a sequential manner. In some cases, sequentially assigning unique identifier values to each individual WM of the first chain of serially connected WMs 610 and/or each individual WM of the second chain of serially connected WMs 620 can be used in place of additional CS sources that would otherwise be required to separately select the individual WMs. In contrast to the pass-through identifier update command sets of FIG. 6B and FIG. 6C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the selected CS source can be selected as the first IO port 616 (e.g., from the first CS port 606 of CM 605) or the second IO port 617 of the individual WMs of the first chain of serially connected WMs 610 and the second chain of serially connected WMs 620. Accordingly, an active state (e.g., a logical "1" value) of a signal output from the first CS port 606 of the CM 605 can be provided to the first IO port 616 of the first WM 630 of the first chain of serially connected WMs 610 and the second IO port 617 of the first WM 660 of the second chain of serially connected WMs 620.

In the examples of FIG. 6D through FIG. 6F, the daisy-chain identifier update sequence can be initiated by a daisy-chain identifier update command set. In some implementations, in response to receiving the daisy-chain identifier update command set, the first WM 630 of the first chain of serially connected WMs 610 can enable an identifier update for the first WM 630. In some implementations, in response to receiving the daisy-chain identifier update command set, the first WM 630 of the first chain of serially connected WMs 610 can disable an identifier update for the second WM 640 and/or third WM 650 of the first chain of serially connected WMs 610.

Similarly, in response to receiving the daisy-chain identifier update command set, the first WM 660 of the second chain of serially connected WMs 620 can enable an identifier update for the first WM 660. In addition, in response to receiving the daisy-chain identifier update command set, the first WM 660 of the second chain of serially connected WMs 620 can disable an identifier update for the second WM 670 and/or third WM 680 of the second chain of serially connected WMs 620.

As noted above, in some cases, the first WM 630 of the first chain of serially connected WMs 610 may pass through the CS signal obtained at the first IO port 616 of the first WM 630 from the serial IO port 619 of the first WM 630 to the first IO port 616 of the second WM 670. Similarly, the first WM 660 of the second chain of serially connected WMs 620 may pass through the CS signal obtained at the IO port 616 of the first WM 660 from the serial IO port 619 of the first WM 660 to the IO port 616 of the second WM 670.

In some examples, the first WM 630 of the first chain of serially connected WMs 610 may disable an identifier update for the second WM 640 and/or third WM 650 of the first chain of serially connected WMs 610 by disabling a pass-through of a CS signal from the first WM 630 to the second WM 640. For example, the first WM 630 of the first chain of serially connected WMs 610 may obtain a CS signal at the IO port 616 of the first WM 630. In some implementations, the first WM 630 of the first chain of serially connected WMs 610 may override the CS signal obtained at the IO port 616 of the first WM 630 and output a modified CS signal from the serial IO port 619 of the first WM 630 to the IO port 616 of the second WM 640 of the first chain of serially connected WMs 610. In some cases, the second WM 640 of the first chain of serially connected WMs 610 may be configured to output an additional modified CS signal from the first serial IO port 619 of the second WM 640 of the first chain of serially connected WMs 610 to the first IO port 616 of the third WM 650 of the first chain of serially connected WMs 610.

Referring to FIG. 6D, the WMs of the first chain of serially connected WMs 610 and the WMs of the second chain of serially connected WMs 620 may obtain a first sequential identifier update value that can be used to update identifier values of the first WM 630 of the first chain of serially connected WMs 610 and the first WM 660 of the second chain of serially connected WMs 620.

For example, as illustrated in FIG. 6D, an identifier value 642 for the first WM 630 of the first chain of serially connected WMs 610 may be updated to a value of "3." In some cases, the identifier value 642 can be obtained by incrementing the identifier value 632 (e.g., a value of "1") by a first sequential identifier update value of "2." In some cases, upon updating the identifier value 642 for the first WM 630 of the first chain of serially connected WMs 610, the first WM 630 can disable additional identifier updates associated with the daisy-chain identifier update. In some cases, upon updating the identifier value 642, the first WM 630 of the first chain of serially connected WMs 610 can be configured to enable identifier updates for the second WM 640 of the first chain of serially connected WMs 610.

In one illustrative example, an identifier value 644 for the first WM 660 of the second chain of serially connected WMs 620 may be updated to a value of "4." In some cases, the identifier value 644 can be obtained by incrementing the identifier value 634 (e.g., a value of "2") by the first sequential identifier update value of "2." In some cases, upon updating the identifier value 644 for the first WM 660 of the second chain of serially connected WMs 620, the first WM 660 can disable additional identifier updates associated with the daisy-chain identifier update. In some cases, upon updating the identifier value 644, the first WM 660 of the second chain of serially connected WMs 620 can be configured to enable identifier updates for the second WM 670 of the second chain of serially connected WMs 620.

Referring to FIG. 6E, the WMs of the first chain of serially connected WMs 610 and the WMs of the second chain of serially connected WMs 620 may obtain a second sequential identifier update value that can be used to update identifier values of the second W M 640 of the first chain of serially connected WMs 610 and the second WM 670 of the second chain of serially connected WMs 620.

For example, as illustrated in FIG. 6E, an identifier value 652 for the second WM 640 of the first chain of serially connected WMs 610 may be updated to a value of "5." In some cases, the identifier value 652 can be obtained by incrementing the identifier value 632 (e.g., a value of "1") by a second sequential identifier update value of "4." In some cases, upon updating the identifier value 652 for the second WM 640 of the first chain of serially connected WMs 610, the second WM 640 can disable additional identifier updates associated with the daisy-chain identifier update. In some cases, upon updating the identifier value 652, the second WM 640 of the first chain of serially connected WMs 610 can be configured to enable identifier updates for the third WM 650 of the first chain of serially connected WMs 610.

In one illustrative example, an identifier value 654 for the second WM 670 of the second chain of serially connected WMs 620 may be updated to a value of "6." In some cases, the identifier value 654 can be obtained by incrementing the identifier value 634 (e.g., a value of "2") by the second sequential identifier update value of "4." In some cases, upon updating the identifier value 654 for the second WM 670 of the second chain of serially connected WMs 620, the second WM 670 can disable additional identifier updates associated with the daisy-chain identifier update. In some cases, upon updating the identifier value 654, the second WM 670 of the second chain of serially connected WMs 620 can be configured to enable identifier updates for the third WM 680 of the second chain of serially connected WMs 620.

Referring to FIG. 6F, the WMs of the first chain of serially connected WMs 610 and the WMs of the second chain of serially connected WMs 620 may obtain a third sequential identifier update value that can be used to update identifier values of the third WM 650 of the first chain of serially connected WMs 610 and the third WM 680 of the second chain of serially connected WMs 620. For example, as illustrated in FIG. 6F, an identifier value 662 for the third WM 650 of the first chain of serially connected WMs 610 may be updated to a value of "7." In some cases, the identifier value 662 can be obtained by incrementing the identifier value 632 (e.g., a value of "1") by a third sequential identifier update value of "6." In one illustrative example, an identifier value 664 for the third WM 680 of the second chain of serially connected WMs 620 may be updated to a value of "6." In some cases, the identifier value 664 can be obtained by incrementing the identifier value 634 (e.g., a value of "2") by the third sequential identifier update value of "6."

### Example 6

FIG. 7A illustrates an example configuration 700 including two serially connected chains of WMs coupled to a common CS port 706 of a CM 705. In the example configuration 700 of FIG. 7A, a CM 705 includes a CS port 706, CLK port 701, and a DATA port 703. As illustrated, the CS port 706 of the CM 705 is coupled to an IO port 716 of first WM 730 of a first chain of serially connected WMs 710 and an IO port 716 of a first WM 760 of a second chain of serially connected WMs 720. In some cases a combiner/splitter (not shown) may be disposed between the CS port 706 and the IO ports 716 of the first WM 730 and the first WM 760. For example, a Wilkinson combiner/splitter (not shown) may be disposed between the CS port 706 and the IO ports 716 of the first WM 730 of the first chain of serially connected WMs 710 and the first WM 760 of the second chain of serially connected WMs 720.

In some cases, the serial IO port 719 of the third WM 750 of the first chain of serially connected WMs 710 and/or the serial IO port 719 of the third WM 780 of the second chain of serially connected WMs 720 may be coupled to a CS source. In some implementations, the serial IO port 719 of the third WM 750 of the first chain of serially connected WMs 710 may be coupled to a CS signal (e.g., a ground (GND) signal, a logical "0," or the like). In some examples, the serial IO port 719 of the third WM 780 of the second chain of serially connected WMs 720 may be coupled to an additional CS signal (e.g., a VCC signal, a logical "1," or the like).

In the illustrated example of FIG. 7A, individual WMs of the first chain of serially connected WMs 710 and the second chain of serially connected WMs 720 can communicate with CM 705 over a two-wire serial communication interface. In some cases, data ports 713 of the individual WMs of the first chain of serially connected WMs 710 and the second chain of serially connected WMs 720 can be coupled to DATA port 703 of the CM 705. Similarly, the clock ports 711 of the individual WMs of the first chain of serially connected WMs 710 and the second chain of serially connected WMs 720 can be coupled to the CLK port 701 of the CM 705.

In the illustrative example of FIG. 7A, the first chain of serially connected WMs 710 and the second chain of serially connected WMs 720 can correspond to FEMs and/or analog beamformers of a phased array antenna system. However, as noted above, it should be understood that the systems and techniques described herein are not limited to use in phased array antenna systems, beamformers, FEMs, and/or any combination thereof. For example, the WMs of the first chain of serially connected WMs 710 and/or the WMs of the second chain of serially connected WMs 720 may include any type of serially connected circuitry.

In some cases, each individual WM of the first chain of serially connected WMs 710 and/or each individual WM of the second chain of serially connected WMs 720 may be coupled to one or more antenna elements 712. In some cases, the one or more antenna elements 712 may be similar to and perform similar functions to the one or more antenna elements 112 of FIG. 1.

FIG. 7B through FIG. 7F illustrate an example enumeration sequence utilizing simultaneous reverse propagation for distinguishing between the first chain of serially connected WMs 710 and the second chain of serially connected WMs 720 coupled to the common CS port 706 of the CM 705 of FIG. 7A. In some implementations, identifier values for the first chain of serially connected WMs 710 and the second chain of serially connected WMs 720 can be updated based on a series of identifier update command sets. In some cases, an identifier update command set can include one or more serial commands transmitted over the two-wire interface (e.g., CLK port 701 and DATA port 703) of the CM 705 to the clock ports 711 and data ports 713 of all of the WMs of the first chain of serially connected WMs 710 and the second chain of serially connected WMs 720.

In some implementations, an identifier update command set can include a CS source and an identifier update value. In some cases, updating the identifier values for every individual WM of the first chain of serially connected WMs 710 and every individual WM of the second chain of serially connected WMs 720 can be enabled based on the selected CS source. Additionally or alternatively, an enable signal may be utilized to control whether a WM is configured to allow identifier value updates.

In some examples, an identifier update value can be utilized to increment (or decrement) an identifier for one or more WMs during an iterative identifier update. In some cases, the identifier update value can represent an increment for updating identifier values of selected (e.g., based on the CS source) WMs. In some examples, the identifier update value can replace an existing identifier value of selected WMs.

FIG. 7B illustrates a first identifier update that assigns an identifier value of "1" to every individual WM of the first chain of serially connected WMs 710 and every individual WM of the second chain of serially connected WMs 720. In one illustrative example, the first identifier update can be initiated by a first identifier update command set transmitted to each WM of the first chain of serially connected WMs 710 and each WM of the second chain of serially connected WMs 720.

In some implementations, the WMs of the first chain of serially connected WMs 710 and the WMs of the second chain of serially connected WMs 720 may be configured to operate in a pass-through configuration with a forward propagation direction in response to the first identifier update command set.

In some cases, the first identifier update command set can include a CS source selection. In one illustrative example, a signal present at the CS port 706 of the CM 705 can provide the CS signal for the first identifier update. For example, the CS source selection included in the first identifier update command set can correspond to the IO ports 716 of the WMs of the first chain of serially connected WMs 710 and/or the IO ports 716 of the WMs of the second chain of serially connected WMs 720. As shown in FIG. 7A, the IO port 716 of the first WM 730 and the IO port 716 of the first WM 760 can be coupled to the CS port 706 of the CM 705. In some cases, when the first WM 730 and/or the first WM 760 are configured to propagate the CS source in a forward propagation pass-through mode, the signal at the CS port 706 of the CM 705 may be propagated through the WMs of the first chain of serially connected WMs 710 and the WMs of the second chain of serially connected WMs 720. Accordingly, the signal at CS port 706 of the CM 705 may act as a CS signal for the first WM 730 of the first chain of serially connected WMs 710, the second WM 740 of the first chain of serially connected WMs 710, the third WM 750 of the first chain of serially connected WMs 710, the first WM 760 of the second chain of serially connected WMs 720, the second WM 770 of the second chain of serially connected WMs 720, and/or the third WM 780 of the second chain of serially connected WMs 720.

In some examples, a signal transmitted from the CS port 706 of the CM 705 may be obtained at the IO port 716 of the first WM 730 of the first chain of serially connected WMs 710. In some examples, the first WM 730 may be configured to pass-through the CS signal from the serial IO port 719 of the first WM 730 to the IO port 716 of the second WM 740 of the first chain of serially connected WMs 710. In some cases, the second WM 740 may be configured to pass-through the CS signal from the serial IO port 719 of the second WM 740 to the IO port 716 of the third WM 750 of the first chain of serially connected WMs 710.

In some implementations, a signal transmitted from the CS port 706 of the CM 705 may be obtained at the IO port 716 of the first WM 760 of the second chain of serially connected WMs 720. In some examples, the first WM 760 may be configured to pass-through the CS signal from the serial IO port 719 of the first WM 760 to the IO port 716 of the second WM 770 of the second chain of serially connected WMs 720. In some cases, the second WM 770 may be configured to pass-through the CS signal from the serial IO port 719 of the second WM 770 to the IO port 716 of the third WM 780 of the second chain of serially connected WMs 720.

In some implementations, the first identifier update command set can include an identifier update value. In one illustrative example, the identifier value 722 and the identifier value 724 may be initialized to a value of "0" and the first identifier update value included in the first identifier update command set can have a value of "1." Accordingly, after the WMs of the first chain of serially connected WMs 710 and the WMs of the second chain of serially connected WMs 720 perform an identifier update based on the first identifier update value, the values of the identifier value 722 and the identifier value 724 can be updated to "1." As illustrated in FIG. 7A, the identifier value 722 for each WM of the first chain of serially connected WMs 710 has a value of "1" after the identifier update. Similarly, the identifier value 724 for each WM of the second chain of serially connected WMs 720 has a value of "1" after the identifier update.

FIG. 7C illustrates a second identifier update that assigns a value of "2" to each individual WM of the second chain of serially connected WMs 720. In one illustrative example, the second identifier update can be initiated by a second identifier update command set. In the illustrated example of FIG. 7C, the second identifier update command set can include one or more serial commands transmitted over the two-wire interface (e.g., CLK port 701 and DATA port 703) of the CM 705 to the clock ports 711 and data ports 713 of all of the WMs of the first chain of serially connected WMs 710 and the second chain of serially connected WMs 720.

In some cases, the serial IO ports 719 of the WMs of the first chain of serially connected WMs 710 and/or the serial IO ports 719 of the third WM 780 of the second chain of serially connected WMs 720 may be used as a CS source. In some implementations, the serial IO port 719 of the third WM 750 of the first chain of serially connected WMs 710 may be coupled to a CS signal (e.g., a ground (GND) signal, a logical "0," or the like). In some examples, the serial IO port 719 of the third WM 780 of the second chain of serially connected WMs 720 may be coupled to an additional CS signal (e.g., a VCC signal, a logical "1," or the like).

In some examples, the WMs of the first chain of serially connected WMs 710, in response to the second identifier update command set, may be configured to pass-through a CS signal (e.g., from the serial IO port 719 of the third WM 750 of the first chain of serially connected WMs 710) to all of the WMs of the first chain of serially connected WMs 710 in a reverse propagation direction.

For example, the third WM 750 of the first chain of serially connected WMs 710 may be configured to pass-through a CS signal (e.g., a ground (GND) signal, a logical "0," or the like) from the IO port 716 of the third WM 750 to the serial IO port 719 of the second WM 740 of the first chain of serially connected WMs 710. In some implementations, a GND signal may be provided to the serial IO port 719 of the third WM 750 by a termination to a ground potential. In some cases, a GND signal may be provided to the serial IO port 719 by a pull-down resistor coupled to the serial IO port 719 and included in the third WM 750. In turn, the second WM 740 may pass the CS signal (e.g., GND) from the IO port 716 of the second WM 740 to the serial IO port 719 of the first WM 730 of the first chain of serially connected WMs 710.

In some cases, the WMs of the second chain of serially connected WMs 720, in response to the second identifier update command set, may be configured to pass-through a CS signal (e.g., from the serial IO port 719 of the third WM 780 of the second chain of serially connected WMs 720) to all of the WMs of the second chain of serially connected WMs 720 in a reverse propagation direction.

For example, the third WM 780 of the second chain of serially connected WMs 720 may pass a CS signal (e.g., a VCC signal, a logical "1," or the like) from the IO port 716 of the third WM 780 to the serial IO port 719 of the second WM 770 of the second chain of serially connected WMs 720. In some implementations, a VCC signal may be provided to the serial IO port 719 of the third WM 780 by a termination to a VCC potential. In some cases, a VCC signal may be provided to the serial IO port 719 of the third WM 780 by a pull-up resistor coupled to the serial IO port 719 and included in the third WM 780. In some cases, the second WM 770 may pass the CS signal (e.g., VCC) from the IO port 716 of the second WM 770 to the serial IO port 719 of the first WM 760 of the second chain of serially connected WMs 720.

In some cases, the CS signal (e.g., a VCC signal, a logical "1," or the like) can correspond to an active state of the selected CS source (e.g., an active CS signal state). Accordingly, the WMs of the second chain of serially connected WMs 720 may perform identifier updates in response to the second pass-through identifier update command set.

Referring to FIG. 7C, the WMs of the second chain of serially connected WMs 720 may obtain a second identifier update value that can be used to update identifier values WMs of the second chain of serially connected WMs 720.

For example, as illustrated in FIG. 7C, an identifier value 734 for the WMs of the second chain of serially connected WMs 720 may be updated to a value of "2." In some cases, the identifier value 734 can be obtained by incrementing the identifier value 724 (e.g., a value of "1") by the second identifier update value of "1."

The identifier updates of FIG. 7B and FIG. 7C can be examples of pass-through identifier update command sets. As used herein, pass-through identifier update command sets refer to update command sets in which a CS signal is common to each WM of a chain of serially connected WMs and a common identifier update value is applied to each WM of the chain of serially connected WMs for which the CS signal is activated. In some cases, the propagation of CS signals in the direction from serial IO port 719 of a WM to serial IO port 719 of an adjacent WMs (e.g., moving toward the direction of the CM 705 of FIG. 7A) can be referred to as "reverse propagation." In some examples, a configuration that utilizes reverse propagation to pass-through a CS signal to all of the WMs of a chain of serially connected WMs may be referred to as a "simultaneous reverse propagation" configuration.

FIG. 7D through FIG. 7F illustrate an example of a forward propagation daisy-chain identifier update sequence. In some implementations, a daisy-chain identifier update can be utilized to assign unique identifier values to each individual WM of the first chain of serially connected WMs 710 and/or each individual WM of the second chain of serially connected WMs 720 in a sequential manner. In some cases, sequentially assigning unique identifier values to each individual WM of the first chain of serially connected WMs 710 and/or each individual WM of the second chain of serially connected WMs 720 can be used in place of additional CS sources that would otherwise be required to separately select the individual WMs. In contrast to the pass-through identifier update command sets of FIG. 7B and FIG. 7C, a daisy-chain identifier update sequence may result in different identifier update values being applied to the identifiers of each WM of a chain of serially connected WMs.

In some implementations, the daisy-chain identifier update command set may be associated with a CS source. In one illustrative example, the CS source can be selected as the IO port 716 of each WM. For example, the first WM 730 of the first chain of serially connected WMs 710 and the first WM 760 of the second chain of serially connected WMs 720 may each respectively receive a CS signal from the CS port 706 of the CM 705 at the IO ports 716.

In the examples of FIG. 7D through FIG. 7F, the daisy-chain identifier update sequence can be initiated by a daisy-chain identifier update command set. In some implementations, in response to receiving the daisy-chain identifier update command set, the first WM 730 of the first chain of serially connected WMs 710 can enable an identifier update for the first WM 730. In some implementations, in response to receiving the daisy-chain identifier update command set, the first WM 730 of the first chain of serially connected WMs 710 can disable an identifier update for the second WM 740 and/or third WM 750 of the first chain of serially connected WMs 710.

Similarly, in response to receiving the daisy-chain identifier update command set, the first WM 760 of the second chain of serially connected WMs 720 can enable an identifier update for the first WM 760. In addition, in response to receiving the daisy-chain identifier update command set, the first WM 760 of the second chain of serially connected WMs 720 can disable an identifier update for the second WM 770 and/or third WM 780 of the second chain of serially connected WMs 720.

In some examples, the first WM 730 of the first chain of serially connected WMs 710 may disable an identifier update for the second WM 740 and/or third WM 750 of the first chain of serially connected WMs 710 by disabling (e.g., overriding) a pass-through of a CS signal from the first WM 730 to the second WM 740. For example, the first WM 730 of the first chain of serially connected WMs 710 may obtain a CS signal at the IO port 716 of the first WM 730. In some implementations, the first WM 730 of the first chain of serially connected WMs 710 may override the CS signal obtained at the IO port 716 of the first WM 730 and output a modified CS signal from the serial IO port 719 of the first WM 730 to the IO port 716 of the second WM 740 of the first chain of serially connected WMs 710. In some cases, the second WM 740 of the first chain of serially connected WMs 710 may be configured to output an additional modified CS signal from the serial IO port 719 of the second WM 740 of the first chain of serially connected WMs 710 to the IO port 716 of the third WM 750 of the first chain of serially connected WMs 710.

In some examples, the WMs of the second chain of serially connected WMs 720 may similarly override pass-through of the CS signal received at the IO port 716 of the first WM 760 of the second chain of serially connected WMs 720 through the WMs of the second chain of serially connected WMs 720.

Referring to FIG. 7D, the WMs of the first chain of serially connected WMs 710 and the WMs of the second chain of serially connected WMs 720 may obtain a first sequential identifier update value that can be used to update identifier values of the first WM 730 of the first chain of serially connected WMs 710 and the first WM 760 of the second chain of serially connected WMs 720.

For example, as illustrated in FIG. 7D, an identifier value 742 for the first WM 730 of the first chain of serially connected WMs 710 may be updated to a value of "3." In some cases, the identifier value 742 can be obtained by incrementing the identifier value 732 (e.g., a value of "1") by a first sequential identifier update value of "2." In some cases, upon updating the identifier value 742 for the first WM 730 of the first chain of serially connected WMs 710, the first WM 730 can be configured to allow additional identifier updates associated with the daisy-chain identifier update. In some cases, upon updating the identifier value 742, the first WM 730 of the first chain of serially connected WMs 710 can be configured to enable identifier updates for the second WM 740 of the first chain of serially connected WMs 710.

In one illustrative example, an identifier value 744 for the first WM 760 of the second chain of serially connected WMs 720 may be updated to a value of "4." In some cases, the identifier value 744 can be obtained by incrementing the identifier value 734 (e.g., a value of "2") by the first sequential identifier update value of "2." In some cases, upon updating the identifier value 744 for the first WM 760 of the second chain of serially connected WMs 720, the first WM 760 can be configured to allow additional identifier updates associated with the daisy-chain identifier update. In some cases, upon updating the identifier value 744, the first WM 760 of the second chain of serially connected WMs 720 can be configured to enable identifier updates for the second WM 770 of the second chain of serially connected WMs 720.

Referring to FIG. 7E, the WMs of the first chain of serially connected WMs 710 and the WMs of the second chain of serially connected WMs 720 may obtain a second sequential identifier update value that can be used to update identifier values of the first WM 730 of the first chain of serially connected WMs 710, the second WM 740 of the first chain of serially connected WMs 710, the first WM 760 of the second chain of serially connected WMs 720 and the second WM 770 of the second chain of serially connected WMs 720.

As illustrated in FIG. 7E, an identifier value 751 for the first WM 730 of the first chain of serially connected WMs 710 may be updated to a value of "5." In some cases, the identifier value 752 can be obtained by incrementing the identifier value 732 (e.g., a value of "3") by a second sequential identifier update value of "2." In some cases, upon updating the identifier value 751 for the first WM 730 of the first chain of serially connected WMs 710, the first WM 730 can be configured to allow additional identifier updates associated with the daisy-chain identifier update. In some cases, upon updating the identifier value 751, the first WM 730 of the first chain of serially connected WMs 710 can be configured to enable identifier updates for the second WM 740 of the first chain of serially connected WMs 710.

As further illustrated in FIG. 7E, an identifier value 752 for the second WM 740 of the first chain of serially connected WMs 710 may be updated to a value of "3." In some cases, the identifier value 752 can be obtained by incrementing the identifier value 732 (e.g., a value of "1") by a second sequential identifier update value of "2." In some cases, upon updating the identifier value 752 for the second WM 740 of the first chain of serially connected WMs 710, the second WM 740 can be configured to allow additional identifier updates associated with the daisy-chain identifier update. In some cases, upon updating the identifier value 752, the second WM 740 of the first chain of serially connected WMs 710 can be configured to enable identifier updates for the third WM 750 of the first chain of serially connected WMs 710.

In the example of FIG. 7E, an identifier value 753 for the first WM 760 of the second chain of serially connected WMs 720 may be updated to a value of "6." In some cases, the identifier value 754 can be obtained by incrementing the identifier value 734 (e.g., a value of "4") by the second sequential identifier update value of "2." In some cases, upon updating the identifier value 753 for the first WM 760 of the second chain of serially connected WMs 720, the first WM 760 can be configured to allow additional identifier updates associated with the daisy-chain identifier update. In some cases, upon updating the identifier value 753, the first WM 760 of the second chain of serially connected WMs 720 can be configured to enable identifier updates for the second WM 770 of the second chain of serially connected WMs 720.

In some examples, an identifier value 754 for the second WM 770 of the second chain of serially connected WMs 720 may be updated to a value of "4." In some cases, the identifier value 754 can be obtained by incrementing the identifier value 734 (e.g., a value of "2") by the second sequential identifier update value of "2." In some cases, upon updating the identifier value 754 for the second WM 770 of the second chain of serially connected WMs 720, the second WM 770 can be configured to allow additional identifier updates associated with the daisy-chain identifier update. In some cases, upon updating the identifier value 754 the second WM 770 of the second chain of serially connected WMs 720 can be configured to enable identifier updates for the third WM 780 of the second chain of serially connected WMs 720.

Referring to FIG. 7F, the WMs of the first chain of serially connected WMs 710 and the WMs of the second chain of serially connected WMs 720 may obtain a third sequential identifier update value of "2" that can be used to update identifier values of the first WM 730, the second WM 740, and the third WM 750 of the first chain of serially connected WMs 710 and the first WM 760, the second WM 770, and the third WM 780 of the second chain of serially connected WMs 720.

FIG. 7F illustrates that an identifier value 761 for the first WM 730 of the first chain of serially connected WMs 710 may be updated to a value of "7." In some cases, the identifier value 761 can be obtained by incrementing the identifier value 751 of (e.g., a value of "5") by the third sequential update value of "2."

FIG. 7F further illustrates that an identifier value 765 for the second WM 740 of the first chain of serially connected WMs 710 may be updated to a value of "5." In some cases, the identifier value 765 can be obtained by incrementing the identifier value 752 (e.g., a value of "3") by the third sequential update value of "2."

As illustrated in FIG. 7F, an identifier value 762 for the third WM 750 of the first chain of serially connected WMs 710 may be updated to a value of "3." In some cases, the identifier value 762 can be obtained by incrementing the identifier value 732 (e.g., a value of "1") by a third sequential identifier update value of "2."

FIG. 7F illustrates that an identifier value 763 for the first WM 760 of the second chain of serially connected WMs 720 may be updated to a value of "8"." In some cases, the identifier value 765 can be obtained by incrementing the identifier value 752 of (e.g., a value of "3") by the third sequential update value of "2".

FIG. 7F further illustrates that an identifier value 767 for the second WM 770 of the second chain of serially connected WMs 720 may be updated to a value of "6." In some cases, the identifier value 767 can be obtained by incrementing the identifier value 754 (e.g., a value of "4") by the third sequential update value of "2."

In the example of FIG. 7F, an identifier value 764 for the third WM 780 of the second chain of serially connected WMs 720 may be updated to a value of "4." In some cases, the identifier value 764 can be obtained by incrementing the identifier value 734 (e.g., a value of "2") by the third sequential identifier update value of "2."

FIG. 8A illustrates an example block diagram of a WM 800 configuration that can be utilized for assigning a unique identifier to WMs. In the illustrated example of FIG. 8A, the WM 800 includes a CS source select block 802, an enable update block 810, and an identifier update module 830.

In the example of FIG. 8A, the WM 800 includes a serial interface 805 for serial communication. In one illustrative example, the serial interface 805 may be implemented as a two-wire serial interface. In some cases, the serial interface 805 may be configured to receive commands from a CM (e.g., CM 105 of FIG. 1). In some examples, the commands received by the WM 800 over the serial interface 805 may include identifier update command sets. For example, the identifier update command sets may include pass-through identifier commands (e.g., forward-propagation pass-through commands, reverse propagation pass-through commands) and/or sequential identifier update command sets (e.g., forward propagation daisy-chain identifier update command sets, reverse propagation daisy-chain identifier update command sets).

In some cases, the identifier update command sets obtained by the WM 800 over the two-wire interface may include a CS source selection. In some cases, the CS source selection can be stored in a register (e.g., a CS source register), memory, and/or any other suitable storage. In some cases, the CS source selection included in an identifier update command set may be provided as a select input 812 to the CS source select block 802.

As illustrated in FIG. 8A, the CS source select block 802 may have N number of CS inputs 814 (e.g., CS1, CS2, through CSN), where N is an integer. In some cases, a value of the select input 812 can be used to select a particular CS input 814 with index equal to the select input 812 value. In some implementations, the CS input 814 selected by the select input 812 may be output to the CS output 828 of the CS source select block 802.

In some cases, the CS inputs 814 can be coupled to one or more signals available to a WM (e.g., WMs of the first chain of serially connected WMs 110, WMs of the second chain of serially connected WMs 120 of FIG. 1). In some cases, the one or more signals available to the WM may include signal present at functional interfaces of the WM. In one illustrative example, a CS input of the CS inputs 814 may be coupled to an IO port (e.g., IO ports 116 of FIG. 1) of a WM (e.g., a WM of the first chain of serially connected WMs 110, a WM of the second chain of serially connected WMs 120 of FIG. 1). In another illustrative example, a CS input of the CS inputs 814 may be coupled to a serial IO port (e.g., serial IO port 119 of FIG. 1) of a WM (e.g., a WM of the first chain of serially connected WMs 110, a WM of the second chain of serially connected WMs 120 of FIG. 1).

In some implementations, the CS inputs CS input 814 may be derived from one or more signals available to the WM. For example, one or more signals available to the WM may be combined by digital logic and the output of the digital logic may be coupled to one of the CS inputs CS input 814. In another illustrative example, a frequency, phase, amplitude, and/or any other characteristic of one or more signals available to the WM may be used to derive a signal that is connected to the CS inputs CS input 814. In one illustrative example, a CS input 814 may be coupled to a signal that becomes active when a frequency of a signal received at the IO port (e.g., IO port 116 of FIG. 1) of a WM matches a target frequency value and/or target frequency range.

In some cases, the CS inputs 814 may be coupled to and/or derived from functional interfaces of the WM. As used herein, a functional interface refers to any signal available to the WM that is used by the WM for functionality other than and/or in addition to the generation of CS inputs 814.

In some implementations, the WM 800 may include an enable update block 810 that can be utilized to selectively enable or disable identifier updates by the WM 800. For example, the enable update block 810 may be utilized to prevent identifier updates after a unique identifier enumeration operation is completed. In one illustrative example, the enable update block 810 may be utilized during processing of a sequential identifier update command set by WMs of chains of serially connected WMs (e.g., first chain of serially connected WMs 110, the second chain of serially connected WMs 120 of FIG. 1). For example, after a first WM of a chain of serially connected WMs (e.g., first WM 230 of first chain of serially connected WMs 210 of FIG. 2A) performs an identifier update associated with a daisy-chain identifier update command set, the first WM may utilize the enable update block 810 to disable further identifier updates to the first WM while additional WMs (e.g., second WM 240 of first chain of serially connected WMs 210 and/or third WM 250 of first chain of serially connected WMs 210 of FIG. 2A) obtain identifier updates associated with the daisy-chain identifier update command set.

In some cases, an enable signal 820 can be provided as an input to the enable update block 810. In some cases, the enable signal 820 may be generated by additional circuitry (not shown) that may include logic for determining when a particular WM has completed an identifier update associated with a daisy-chain identifier update command set.

As shown in FIG. 8A, identifier update module 830 may obtain an output 807 of the enable update block 810. In addition, an identifier update value 816 is provided as an input to the identifier update module 830. In some cases, the identifier update value 816 can correspond to an identifier update value included in an identifier update command set received over the serial interface 805. In some cases, the identifier update value can be stored in a register (e.g., a command register), buffer, memory, and/or any other suitable storage. In some implementations, the identifier update module 830 may be coupled to a unique identifier register 838 of the WM 800. In some cases, the identifier update module 830 may be coupled to the unique identifier register 838 by a bidirectional interface 821. In some examples (not shown), the identifier update module 830 may be coupled to the unique identifier register 838 by a uni-directional (e.g., write only) interface.

In some implementations (not shown), WMs may be configurable to perform identifier updates associated with daisy-chain identifier update command sets without the use of an enable update block 810. For example, each WM of a chain of serially connected WMs (e.g., WMs of first chain of serially connected WMs 110 of FIG. 1, WMs of second chain of serially connected WMs 120 of FIG. 1) may be configured to output a disabled state of a CS signal from a serial IO port (e.g., serial IO port 119 of FIG. 1) to an IO port of a subsequent WM in the chain of serially connected WMs in response to obtaining a daisy-chain identifier update command set. In some cases, an IO port (e.g., IO port 116 of FIG. 1) can be selected CS signal as a CS source for the WMs of the chain of serially connected WMs. In some cases, a first WM of a chain of serially connected WMs having an activated CS source may perform an identifier update based on a first sequential identifier update value. In some examples, the identifier update by the first WM of the chain of serially connected WMs may be followed by a unicast command to the newly-assigned identifier value for the first WM instructing the first WM to pass-through the CS signal from the IO port of a particular WM to the serial IO port of the WM and to forego unique identifier updates until the particular WM obtains an additional identifier update command set. For example, after the first WM of a chain of serially connected WMs (e.g., first WM 230 of first chain of serially connected WMs 210 of FIG. 2D) performs an identifier update, the following command to pass-through the CS signal from the IO port of the first WM to the serial IO port 219 of the first WM would enable identifier updates by a second WM of the chain of serially connected WMs (e.g., second WM 240 of the first chain of serially connected WMs 210 of FIG. 2E). In some implementations, a similar process may be repeated to sequentially update the identifiers of each WM of a chain of serially connected WMs without the use of an enable update block 810.

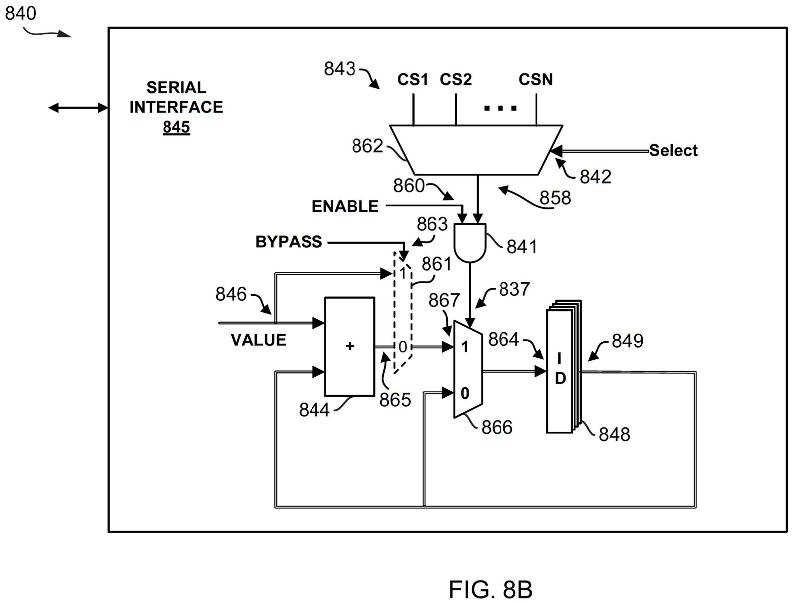

FIG. 8B illustrates an additional example block diagram of a WM 840 that can be utilized for assigning a unique identifier to WMs. In the example of FIG. 8B, the WM 840 includes a serial interface 845 for serial communication. The serial interface 845 can be similar to and perform similar functions to the serial interface 805 of FIG. 8A. In some cases, the serial interface 845 may be configured to receive commands from a CM (e.g., CM 105 of FIG. 1). In some examples, the commands received by the WM 840 over the serial interface 845 may include identifier update command sets. For example, the identifier update command sets may include pass-through identifier commands (e.g., forward-propagation pass-through commands, reverse propagation pass-through commands) and/or sequential identifier update command sets (e.g., forward propagation daisy-chain identifier update command sets, reverse propagation daisy-chain identifier update command sets).

In some cases, identifier update command sets may include a CS source selection. In some cases, the CS source selection can be stored in a register (e.g., a CS source selection register), memory, and/or any other suitable storage. In some cases, the CS source selection included in an identifier update command set may be provided as a select input 842 to the CS multiplexer 862. In some examples, the CS multiplexer 862 can output a selected CS source 843 to the CS output 858 of the CS multiplexer 862 based on the select input 842. In some aspects, the CS multiplexer 862 can correspond to the CS source select block 802 of FIG. 8A.

As shown in FIG. 8B, a CS output 858 of the CS multiplexer 862 can be provided to a first input of an AND gate 841. In some cases, the AND gate 841 can correspond to and/or can be included in the enable update block 810 of FIG. 8A. In some examples, an enable signal 860 may be provided to a second input of the AND gate 841. In some cases, the enable signal 860 can correspond to the enable signal 820 of FIG. 8A.

In some implementations, an output of the AND gate 841 may be provided to a select port 837 of an identifier update multiplexer 866. In some examples, the identifier update multiplexer 866 may be configured to output a unique identifier update value (e.g., from the unique identifier input 864 of the identifier update multiplexer 866) for updating the unique identifier register 848 based on an identifier update command set. In some examples, the identifier update multiplexer 866 may be configured to output the unique identifier update value when the input 867 is selected at the select port 837 (e.g., based on the output of AND gate 841). In some cases, the identifier update multiplexer 866 may be configured to feed back an existing unique identifier value 849 from the unique identifier register 848 to a unique identifier input 864 of the unique identifier register 848 when unique identifier updates are disabled and/or a WM is not selected based on the CS signal.

In some cases, the identifier update value 846 can correspond to an identifier update value included in an identifier update command set received over the serial interface 845. In some examples, the identifier update value 846 can be stored in a register (e.g., a command register), buffer, memory, and/or any other suitable storage.

In some implementations, the identifier update value 846 and the existing unique identifier value 849 may be input into an arithmetic module 844. In some aspects, the arithmetic module 844 may include an adder, an adder/subtractor, an arithmetic logic unit (ALU), or the like. In some implementations, an arithmetic module output 865 may be coupled to the input 867 of the identifier update multiplexer 866. In some cases, when the output of the AND gate 841 selects the input 867 of the identifier update multiplexer 866 (e.g., when the AND gate 841 outputs a logical "1" value), the identifier update multiplexer 866 may pass the arithmetic module output 865 from the input 867 to the unique identifier input unique identifier input 864 of the unique identifier register 848. In some cases, the unique identifier for the WM 840 can be iteratively updated by sequentially adding the identifier update value 846 to an existing unique identifier value 849 in response to a sequence of identifier update command sets received over the serial interface 845. In some examples, the sequence of identifier update command sets may be used to assign a unique identifier value to each individual WM included in a system (e.g., FEMs of a phased array antenna system).

In some implementations, the WM 840 may optionally (as indicated by a dashed outline) include a bypass module 861 (e.g., a multiplexer) configured to pass the identifier update value 846 directly to the input 867 of the identifier update multiplexer 866 and bypass the arithmetic module output 865 of the arithmetic module 844. In one illustrative example, the bypass module CS multiplexer 862 may be utilized to initialize the unique identifier value stored in the unique identifier register 848. As illustrated in FIG. 8B, the bypass module 861 may be controlled by a bypass signal 863.

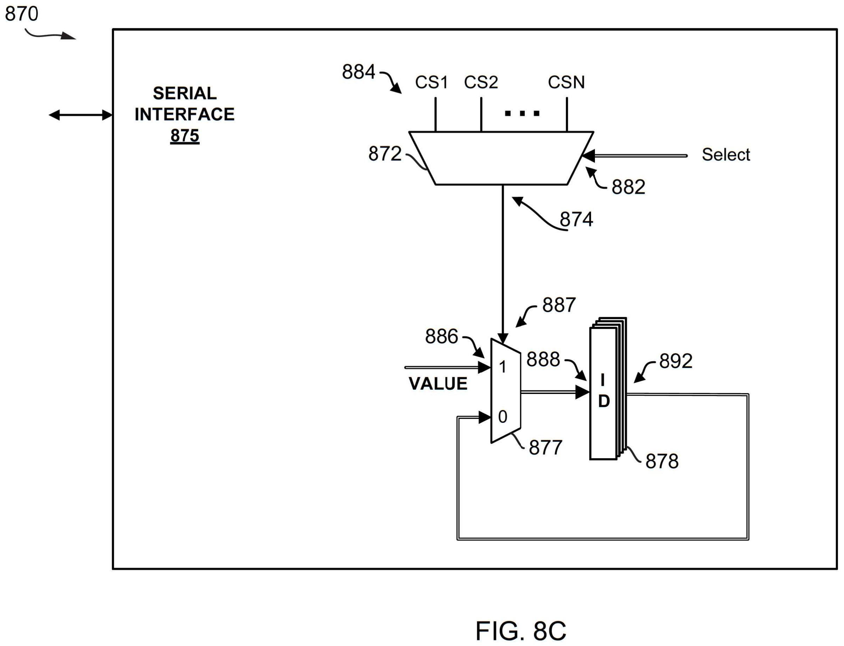

FIG. 8C illustrates an additional example configuration for a bidirectional interface 821 that can be utilized for assigning a unique identifier to WMs. In the example of FIG. 8C, the WM 870 includes a serial interface 875 for serial communication. The serial interface 875 can be similar to and perform similar functions to the serial interface 805 of FIG. 8A. In some cases, the serial interface 875 may be configured to receive commands from a CM (e.g., CM 105 of FIG. 1). In some examples, the commands received by the bidirectional interface 821 over the serial interface 875 may include identifier update command sets. For example, the identifier update command sets may include pass-through identifier commands (e.g., forward-propagation pass-through commands, reverse propagation pass-through commands) and/or sequential identifier update command sets (e.g., forward propagation daisy-chain identifier update command sets, reverse propagation daisy-chain identifier update command sets).

In some cases, identifier update command sets may include a CS source. In some cases, the CS source can be stored in a register (e.g., a CS source register), memory, and/or any other suitable storage. In some cases, the selected CS source 884 included in an identifier update command set may be provided as a select input 882 of the multiplexer 872. In some aspects, the multiplexer 872 can correspond to the CS source select block 802 of FIG. 8A.

As shown in FIG. 8C, a CS output 874 of the multiplexer 872 can be provided to a select port 887 of an identifier update multiplexer 877. In some cases, the identifier update multiplexer 877 may be configured to feed back a unique identifier value 892 from the unique identifier register 878 to a unique identifier input 888 of the unique identifier register 878 when the selected CS source 884 indicates that the bidirectional interface 821 is not selected for an identifier update. In some examples, the identifier update multiplexer 877 may pass an identifier update value from the input identifier update value 886 to the unique identifier input 888 when the selected CS source 884 provided to the select port 887 of the identifier update multiplexer 877 indicates that the bidirectional interface 821 is selected for an identifier update. In some cases, the input identifier update value 886 can correspond to an identifier update value included in an identifier update command set received over the serial interface 845. In some examples, the input identifier update value 886 can be stored in a register (e.g., a command register), buffer, memory, and/or any other suitable storage.

FIG. 9A is a flow diagram illustrating a process 900 for assigning unique identifiers. At step 902, the process 900 can include obtaining a daisy-chain identifier update command set transmitted over a serial communication interface (e.g., serial interface 805 of FIG. 8A, serial interface 845 of FIG. 8B, serial interface 875 of FIG. 8C) to a chain of serially connected WMs, wherein the chain of serially connected WMs (e.g., first chain of serially connected WMs 110 of FIG. 1, second chain of serially connected WMs 120 of FIG. 1, first chain of serially connected WMs 210 of FIG. 2A, second chain of serially connected WMs 220 of FIG. 2A, first chain of serially connected WMs 310 of FIG. 3A, second chain of serially connected WMs 320 of FIG. 3A, first chain of serially connected WMs 410 of FIG. 4A, second chain of serially connected WMs 420 of FIG. 4A, first chain of serially connected WMs 510 of FIG. 5A, second chain of serially connected WMs 520 of FIG. 5A, first chain of serially connected WMs 610 of FIG. 6A, second chain of serially connected WMs 620 of FIG. 6A, first chain of serially connected WMs 710 of FIG. 7A, second chain of serially connected WMs 720 of FIG. 7A).

The chain of serially connected WMs includes a first WM (e.g., first WM 130 of FIG. 1, first WM 160 of FIG. 1, first WM 230 of FIG. 2A, first WM 260 of FIG. 2A, first WM 330 of FIG. 3A, first WM 360 of FIG. 3A, first WM 430 of FIG. 4A, first WM 460 of FIG. 4A, first WM 530 of FIG. 5A, first WM 560 of FIG. 5A, first WM 630 of FIG. 6A, first WM 660 of FIG. 6A, first WM 730 of FIG. 7A, first WM 760 of FIG. 7A), a second WM (e.g., second WM 140 of FIG. 1, second WM 170 of FIG. 1, second WM 240 of FIG. 2A, second WM 270 of FIG. 2A, second WM 340 of FIG. 3A, second WM 370 of FIG. 3A, second WM 440 of FIG. 4A, second WM 470 of FIG. 4A, second WM 540 of FIG. 5A, second WM 570 of FIG. 5A, second WM 640 of FIG. 6A, second WM 670 of FIG. 6A, second WM 740 of FIG. 7A, second WM 770 of FIG. 7A), and a third WM (e.g., third WM 150 of FIG. 1, third WM 180 of FIG. 1, third WM 250 of FIG. 2A, third WM 280 of FIG. 2A, third WM 350 of FIG. 3A, third WM 380 of FIG. 3A, third WM 450 of FIG. 4A, third WM 480 of FIG. 4A, third WM 550 of FIG. 5A, third WM 580 of FIG. 5A, third WM 650 of FIG. 6A, third WM 680 of FIG. 6A, third WM 750 of FIG. 7A, third WM 780 of FIG. 7A).

At step 904, the process 900 can include enabling updating a first WM identifier associated with the first WM.

At step 906, the process 900 can include disabling updating a second unique identifier associated with the second WM.

At step 908, the process 900 can include obtaining a first identifier update value transmitted over the serial communication interface (e.g., serial interface 805 of FIG. 8A) to the chain of serially connected WMs.

At step 910, the process 900 can include updating a first WM identifier of the first WM based on the first identifier update value.

At step 912, the process 900 can include obtaining a second identifier update value transmitted over the serial communication interface to the chain of serially connected WMs.

At step 914, the process 900 can include enabling an identifier update for the second WM. In some implementations, enabling the identifier update for the second WM can be based on updating the first WM identifier of the first WM (e.g., at step 910). In some examples, enabling the identifier update for the second WM can be based on obtaining a second identifier update value (e.g., at step 912).

At step 916, the process 900 can include updating the second WM identifier of the second WM based on the second identifier update value.

FIG. 9B is a flow diagram illustrating an additional process 920 for assigning unique identifiers. At step 922, the process 920 can include obtaining a first identifier update command set at a first WM e.g., first WM 130 of FIG. 1, first WM 160 of FIG. 1, first WM 230 of FIG. 2A, first WM 260 of FIG. 2A, first WM 330 of FIG. 3A, first WM 360 of FIG. 3A, first WM 430 of FIG. 4A, first WM 460 of FIG. 4A, first WM 530 of FIG. 5A, first WM 560 of FIG. 5A, first WM 630 of FIG. 6A, first WM 660 of FIG. 6A, first WM 730 of FIG. 7A, first WM 760 of FIG. 7A) and a second WM (e.g., second WM 140 of FIG. 1, second WM 170 of FIG. 1, second WM 240 of FIG. 2A, second WM 270 of FIG. 2A, second WM 340 of FIG. 3A, second WM 370 of FIG. 3A, second WM 440 of FIG. 4A, second WM 470 of FIG. 4A, second WM 540 of FIG. 5A, second WM 570 of FIG. 5A, second WM 640 of FIG. 6A, second WM 670 of FIG. 6A, second WM 740 of FIG. 7A, second WM 770 of FIG. 7A) of a chain of serially connected WMs (e.g., serial interface 805 of FIG. 8A, serial interface 845 of FIG. 8B, serial interface 875 of FIG. 8C) to a chain of serially connected WMs (e.g., first chain of serially connected WMs 110 of FIG. 1, second chain of serially connected WMs 120 of FIG. 1, first chain of serially connected WMs 210 of FIG. 2A, second chain of serially connected WMs 220 of FIG. 2A, first chain of serially connected WMs 310 of FIG. 3A, second chain of serially connected WMs 320 of FIG. 3A, first chain of serially connected WMs 410 of FIG. 4A, second chain of serially connected WMs 420 of FIG. 4A, first chain of serially connected WMs 510 of FIG. 5A, second chain of serially connected WMs 520 of FIG. 5A, first chain of serially connected WMs 610 of FIG. 6A, second chain of serially connected WMs 620 of FIG. 6A, first chain of serially connected WMs 710 of FIG. 7A, second chain of serially connected WMs 720 of FIG. 7A).

At step 924, the process 920 can include enabling updating a first unique identifier associated with the first WM.

At step 926, the process 920 can include disabling updating a second unique identifier associated with the second WM.

At step 928, the process 920 can include obtaining a first identifier update value.

At step 930, the process 920 can include updating an identifier of the first WM based on the first identifier update value.

At step 932, the process 920 can include disabling additional identifier updates for the first WM associated with the daisy-chain identifier update command set. In some implementations, disabling additional identifier updates for the first WM can be based on updating the first WM identifier of the first WM (e.g., at step 930). In some examples, disabling additional identifier updates for the first WM can be based on obtaining a second identifier update value.

FIG. 9C is a flow diagram illustrating an additional process 940 for assigning unique identifiers. At step 942, the process 940 can include obtaining a pass-through identifier update command set at a chain of serially connected WMs. In some cases, the pass-through identifier update command set is associated with a pass-through identifier update value and a pass-through CS source (e.g., provided to select input 812 of FIG. 8A, select input 842 of FIG. 8B, select input 882 of FIG. 8C).

At step 944, the process 940 can include configuring each individual WM of the chain of serially connected WMs (e.g., first chain of serially connected WMs 110 of FIG. 1, second chain of serially connected WMs 120 of FIG. 1, first chain of serially connected WMs 210 of FIG. 2A, second chain of serially connected WMs 220 of FIG. 2A, first chain of serially connected WMs 310 of FIG. 3A, second chain of serially connected WMs 320 of FIG. 3A, first chain of serially connected WMs 410 of FIG. 4A, second chain of serially connected WMs 420 of FIG. 4A, first chain of serially connected WMs 510 of FIG. 5A, second chain of serially connected WMs 520 of FIG. 5A, first chain of serially connected WMs 610 of FIG. 6A, second chain of serially connected WMs 620 of FIG. 6A, first chain of serially connected WMs 710 of FIG. 7A, second chain of serially connected WMs 720 of FIG. 7A) in a pass-through configuration.

At step 946, the process 940 can include updating respective unique identifiers (e.g., unique identifier register 838 of FIG. 8A, unique identifier register 838 of FIG. 8B, unique identifier register 878 of FIG. 8C) of each WM of the chain of serially connected WMs based on the pass-through identifier update value (e.g., identifier update value 816 of FIG. 8A, identifier update value 846 of FIG. 8B, identifier update value 886 of FIG. 8C).

At step 948, the process 940 can include obtaining a daisy-chain identifier update command set, wherein the daisy-chain identifier update command set is associated with a daisy-chain CS source (e.g., provided to select input 812 of FIG. 8A, select input 842 of FIG. 8B, select input 882 of FIG. 8C).

At step 950, the process 940 can include disabling updates of a second unique identifier associated with a second WM (e.g., second WM 140 of FIG. 1, second WM 170 of FIG. 1, second WM 240 of FIG. 2A, second WM 270 of FIG. 2A, second WM 340 of FIG. 3A, second WM 370 of FIG. 3A, second WM 440 of FIG. 4A, second WM 470 of FIG. 4A, second WM 540 of FIG. 5A, second WM 570 of FIG. 5A) of the chain of serially connected WMs.

At step 952, the process 940 can include obtaining a daisy-chain identifier update value.

At step 954, the process 940 can include updating a first unique identifier associated with a first WM (e.g., first WM 130 of FIG. 1, first WM 160 of FIG. 1, first WM 230 of FIG. 2A, first WM 260 of FIG. 2A, first WM 330 of FIG. 3A, first WM 360 of FIG. 3A, first WM 430 of FIG. 4A, first WM 460 of FIG. 4A, first WM 530 of FIG. 5A, first WM 560 of FIG. 5A) of the chain of serially connected WMs based on the daisy-chain identifier update value (e.g., identifier update value 816 of FIG. 8A, identifier update value 846 of FIG. 8B, identifier update value 886 of FIG. 8C).

In some cases, one or more operations described herein can be implemented in hardware, computer instructions, or a combination thereof. In the context of computer instructions, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular data types. The order in which any operations are described is not intended to be construed as a limitation, and any number of the described operations can be combined in any order and/or in parallel to implement the processes.

FIG. 10 illustrates an example computing device 1000 which can implement various techniques and/or operations described herein. For example, the example computing device 1000 can be used to implement at least some portions of the example configuration 100 of FIG. 1, the example configuration 200 of FIG. 2A, the example configuration 300 of FIG. 3A, the example configuration 400 of FIG. 4A, the additional example configuration 500 of FIG. 5A, example configuration 600 of FIG. 6A, WM 800 of FIG. 8A, WM 840 of FIG. 8B, and/or bidirectional interface 821 of FIG. 8C, and perform at least some of the operations described herein. The components of the example computing device 1000 are shown in electrical communication with each other using a connection 1005, such as a bus. The example computing device 1000 includes a processing unit (CPU or processor 1010) and a connection 1005 that couples various computing device components including the memory 1015, such as read only memory 1020 and random access memory 1025, to the processor 1010.

The example computing device 1000 can include a cache of high-speed memory connected directly with, in close proximity to, or integrated as part of the processor 1010. The example computing device 1000 can copy data from the memory 1015 and/or the storage device 1030 to the cache 1012 for quick access by the processor 1010. In this way, the cache 1012 can provide a performance boost that avoids processor 1010 delays while waiting for data. These and other modules can control or be configured to control the processor 1010 to perform various actions. Other memory 1015 may be available for use as well. The memory 1015 can include multiple different types of memory with different performance characteristics. The processor 1010 can include any general purpose processor and a hardware or software service stored in storage device 1030 and configured to control the processor 1010 as well as a special-purpose processor where software instructions are incorporated into the processor design. The processor 1010 may be a self-contained system, containing multiple cores or processors, a bus, memory controller, cache, etc. A multi-core processor may be symmetric or asymmetric.

To enable user interaction with the example computing device 1000, an input device 1045 can represent any number of input mechanisms, such as a microphone for speech, a touch-sensitive screen for gesture or graphical input, keyboard, mouse, motion input, speech and so forth. An output device 1035 can also be one or more of a number of output mechanisms known to those of skill in the art, such as a display, projector, television, speaker device. In some instances, multimodal computing devices can enable a user to provide multiple types of input to communicate with the example computing device 1000. The communication interface 1040 can generally govern and manage the user input and computing device output. There is no restriction on operating on any particular hardware arrangement and therefore the basic features here may easily be substituted for improved hardware or firmware arrangements as they are developed.

Storage device 1030 is a non-volatile memory and can be a hard disk or other types of computer readable media which can store data that are accessible by a computer, such as magnetic cassettes, flash memory cards, solid state memory devices, digital versatile disks, cartridges, random access memories (RAMs) 1025, read only memories (ROMs) 1020, and hybrids thereof. The storage device 1030 can include software, code, firmware, etc., for controlling the processor 1010. Other hardware or software modules are contemplated. The storage device 1030 can be connected to the connection 1005. In one aspect, a hardware module that performs a particular function can include the software component stored in a computer-readable medium in connection with the necessary hardware components, such as the processor 1010 connection 1005, output device 1035, and so forth, to carry out the function.

The components of the computing device can be implemented in circuitry. For example, the components can include and/or can be implemented using electronic circuits or other electronic hardware, which can include one or more programmable electronic circuits (e.g., microprocessors, graphics processing units (GPUs), digital signal processors (DSPs), central processing units (CPUs), and/or other suitable electronic circuits), and/or can include and/or be implemented using computer software, firmware, or any combination thereof, to perform the various operations described herein. The computing device may further include a display (as an example of the output device or in addition to the output device), a network interface configured to communicate and/or receive the data, any combination thereof, and/or other component(s). The network interface may be configured to communicate and/or receive Internet Protocol (IP) based data or other type of data.

The term "computer-readable medium" includes, but is not limited to, portable or non-portable storage devices, optical storage devices, and various other mediums capable of storing, containing, or carrying instruction(s) and/or data. A computer-readable medium may include a non-transitory medium in which data can be stored and that does not include carrier waves and/or transitory electronic signals propagating wirelessly or over wired connections. Examples of a non-transitory medium may include, but are not limited to, a magnetic disk or tape, optical storage media such as compact disk (CD) or digital versatile disk (DVD), flash memory, memory or memory devices. A computer-readable medium may have stored thereon code and/or machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, or the like.

In some examples, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Specific details are provided in the description above to provide a thorough understanding of the embodiments and examples provided herein. However, it will be understood by one of ordinary skill in the art that the embodiments may be practiced without these specific details. For clarity of explanation, in some instances the present technology may be presented as including individual functional blocks comprising devices, device components, steps or routines in a method embodied in software, or combinations of hardware and software. Additional components may be used other than those shown in the figures and/or described herein. For example, circuits, systems, networks, processes, and other components may be shown as components in block diagram form in order not to obscure the embodiments in unnecessary detail. In other instances, well-known circuits, processes, algorithms, structures, and techniques may be shown without unnecessary detail in order to avoid obscuring the embodiments.

Individual embodiments may be described above as a process or method which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in a figure. A process may correspond to a method, a function, a procedure, a subroutine, a subprogram, etc. When a process corresponds to a function, its termination can correspond to a return of the function to the calling function or the main function.

Processes and methods according to the above-described examples can be implemented using signals and/or computer-executable instructions that are stored or otherwise available from computer-readable media. Such instructions can include, for example, instructions and data which cause or otherwise configure a general purpose computer, special purpose computer, or a processing device to perform a certain function or group of functions. Portions of computer resources used can be accessible over a network. The computer executable instructions may be, for example, binaries, intermediate format instructions such as assembly language, firmware, source code. Examples of computer-readable media that may be used to store instructions, information used, and/or information created during methods according to described examples include magnetic or optical disks, flash memory, USB devices provided with non-volatile memory, networked storage devices, and so on.

Devices implementing processes and methods according to these disclosures can include hardware, software, firmware, middleware, microcode, hardware description languages, or any combination thereof, and can take any of a variety of form factors. When implemented in software, firmware, middleware, or microcode, the program code or code segments to perform the necessary tasks (e.g., a computer-program product) may be stored in a computer-readable or machine-readable medium. A processor(s) may perform the necessary tasks. Typical examples of form factors include laptops, smart phones, mobile phones, tablet devices or other small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are example means for providing the functions described in the disclosure.

In the foregoing description, aspects of the application are described with reference to specific embodiments thereof, but those skilled in the art will recognize that the application is not limited thereto. Thus, while illustrative embodiments of the application have been described in detail herein, it is to be understood that the inventive concepts may be otherwise variously embodied and employed, and that the appended claims are intended to be construed to include such variations, except as limited by the prior art. Various features and aspects of the above-described application may be used individually or jointly. Further, embodiments can be utilized in any number of environments and applications beyond those described herein without departing from the broader spirit and scope of the specification. The specification and drawings are, accordingly, to be regarded as illustrative rather than restrictive. For the purposes of illustration, methods were described in a particular order. It should be appreciated that in alternate embodiments, the methods may be performed in a different order than that described.

One of ordinary skill will appreciate that the less than ("<") and greater than (">") symbols or terminology used herein can be replaced with less than or equal to (" ≤ ") and greater than or equal to (" ≥ ") symbols, respectively, without departing from the scope of this description.

Where components are described as being "configured to" perform certain operations, such configuration can be accomplished, for example, by designing electronic circuits or other hardware to perform the operation, by programming programmable electronic circuits (e.g., microprocessors, or other suitable electronic circuits) to perform the operation, or any combination thereof.

Claim language or other language in the disclosure reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The various illustrative logical blocks, modules, circuits, and algorithm steps described in connection with the examples disclosed herein may be implemented as electronic hardware, computer software, firmware, or combinations thereof. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present application.

The techniques described herein may also be implemented in electronic hardware, computer software, firmware, or any combination thereof. Such techniques may be implemented in any of a variety of devices such as general purposes computers, wireless communication devices, or integrated circuit devices having multiple uses including application in wireless communications and other devices. Any features described as modules or components may be implemented together in an integrated logic device or separately as discrete but interoperable logic devices. If implemented in software, the techniques may be realized at least in part by a computer-readable data storage medium comprising program code including instructions that, when executed, performs one or more of the methods, algorithms, and/or operations described above. The computer-readable data storage medium may form part of a computer program product, which may include packaging materials. The computer-readable medium may comprise memory or data storage media, such as random access memory (RAM) such as synchronous dynamic random access memory (SDRAM), read-only memory (ROM), non-volatile random access memory (NVRAM), electrically erasable programmable read-only memory (EEPROM), FLASH memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor, which may include one or more processors, such as one or more digital signal processors (DSPs), general purpose microprocessors, an application specific integrated circuits (ASICs), field programmable logic arrays (FPGAs), or other equivalent integrated or discrete logic circuitry. Such a processor may be configured to perform any of the techniques described in this disclosure. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein.

The following numbered paragraphs contain statements of broad combinations of technical features in accordance with various aspects of devices and methods disclosed herein:
1. A method of assigning unique identifiers, the method comprising:
   obtaining a pass-through identifier update command set at a chain of serially connected WMs, wherein the pass-through identifier update command set is associated with a pass-through identifier update value and a pass-through CS source;
   configuring each individual WM of the chain of serially connected WMs in a pass-through configuration;
   updating respective unique identifiers of each WM of the chain of serially connected WMs based on the pass-through identifier update value;
   obtaining a daisy-chain identifier update command set, wherein the daisy-chain identifier update command set is associated with a daisy-chain CS source;
   disabling updates of a second unique identifier associated with a second WM of the chain of serially connected WMs;
   obtaining a daisy-chain identifier update value; and
   updating a first unique identifier associated with a first WM of the chain of serially connected WMs based on the daisy-chain identifier update value.
2. The method of paragraph 1, wherein updating the first unique identifier comprises incrementing the first unique identifier by the daisy-chain identifier update value.
3. The method of paragraph 1, further comprising configuring, based on obtaining the daisy-chain identifier update command set, a first WM of the chain of serially connected WMs in a clamped configuration.
4. The method of paragraph 1, wherein the pass-through identifier update command set precedes the daisy-chain identifier update command set.
5. The method of paragraph 1, wherein the daisy-chain identifier update command set precedes the pass-through identifier update command set.
6. The method of paragraph 1, wherein the pass-through configuration comprises a forward propagation pass-through configuration.
7. The method of paragraph 1, further comprising:
   obtaining an additional pass-through identifier update command set at a chain of serially connected WMs, wherein the additional pass-through identifier update command set is associated with an additional pass-through identifier update value and an additional pass-through CS source, the additional pass-through CS source being different from the pass-through CS source;
   configuring each individual WM of the chain of serially connected WMs in a reverse propagation pass-through configuration based on obtaining the additional pass-through identifier update command set; and
   updating respective unique identifiers of each WM of the chain of serially connected WMs based on the additional pass-through identifier update value.
8. The method of paragraph 1, wherein the pass-through configuration comprises a reverse propagation pass-through configuration.
9. The method of paragraph 1, wherein the daisy-chain identifier update command set is associated with a forward propagation daisy-chain identifier update sequence.
10. The method of paragraph 1, wherein the daisy-chain identifier update command set is associated with a reverse propagation daisy-chain identifier update sequence.
11. The method of paragraph 1, wherein configuring each individual WM of the chain of serially connected WMs in the pass-through configuration comprises passing-through a CS signal between individual WMs of the chain of serially connected WMs, wherein the CS signal is associated with the pass-through CS source.
12. The method of paragraph 1, further comprising:
   disabling, based on updating the first unique identifier associated with the first WM, additional unique identifier updates for the first WM associated with the daisy-chain identifier update command set.
13. The method of paragraph 1, further comprising enabling updates of the second unique identifier based on at least one of obtaining the daisy-chain identifier update value or updating the first unique identifier.
14. The method of paragraph 13, wherein enabling updates of the second unique identifier comprises passing-through, by the first WM, a CS signal associated with the daisy-chain CS source to the second WM.
15. The method of paragraph 13, further comprising:
   obtaining an additional daisy-chain identifier update value; and
   updating the second unique identifier based on the additional daisy-chain identifier update value.
16. The method of paragraph 15, wherein updating the second unique identifier comprises incrementing the second unique identifier by the additional daisy-chain identifier update value.
17. A method for assigning unique identifiers, the method comprising:
   obtaining a daisy-chain identifier update command set transmitted over a serial communication interface to a chain of serially connected worker modules (WMs), wherein the chain of serially connected WMs comprises a first WM, a second WM, and a third WM;
   enabling updating a first WM identifier associated with the first WM;
   disabling updating a second unique identifier associated with the second WM;
   obtaining a first identifier update value transmitted over the serial communication interface to the chain of serially connected WMs;
   updating the first WM identifier of the first WM based on the first identifier update value;
   obtaining a second identifier update value transmitted over the serial communication interface to the chain of serially connected WMs;
   enabling updating the second unique identifier associated with the second WM; and
   updating the second WM identifier based on the second identifier update value.
18. The method of paragraph17, wherein the daisy-chain identifier update command set is transmitted over the serial communication interface by a command module (CM).
19. The method of paragraph 17, wherein enabling the identifier update for the first WM comprises obtaining a chip select (CS) signal at an input/output (IO) port of the first WM.
20. The method of paragraph19, wherein the CS signal comprises at least one of:
   a signal amplitude;
   a signal frequency;
   a power state of the first WM;
   one or more logical signals; or
   a clock-data swap state of the first WM.
21. The method of paragraph 19, the method further comprising:
   obtaining a third identifier update value transmitted over the serial communication interface to the chain of serially connected WMs;
   enabling an identifier update for the third WM; and
   updating a third WM identifier of the third WM based on the third identifier update value.
22. The method of paragraph 21, the method further comprising:
   obtaining a pass-through identifier update command set transmitted over the serial communication interface; and
   updating the first WM identifier, the second WM identifier, and the third WM identifier based on a pass-through identifier update value associated with the pass-through identifier update command set.
23. The method of paragraph 22, wherein the pass-through identifier update command set comprises the pass-through identifier update value.
24. The method of paragraph 22, wherein the pass-through identifier update command set comprises a CS signal propagation direction.
25. The method of paragraph 22, wherein the pass-through identifier update command set comprises a clamping configuration.
26. The method of paragraph 22, wherein, based on obtaining the pass-through identifier update command set, the first WM is configured to pass the CS signal obtained at the IO port of the first WM to an IO port of the second WM and the second WM is configured to pass the CS signal to an IO port of the third WM.
27. The method of paragraph 21, further comprising disabling identifier updates for the third WM based on obtaining the daisy-chain identifier update command set, obtaining the second identifier update value and obtaining the CS signal at the IO port of the second WM.
28. The method of paragraph 21, further comprising disabling identifier updates for the second WM and the third WM based on the first identifier update value based on obtaining at least one of the daisy-chain identifier update command set or the first identifier update value.
29. The method of paragraph 28, wherein disabling identifier updates for the second WM comprises overriding a CS signal.
30. The method of paragraph 28, wherein disabling identifier updates for the second WM comprises outputting a modified CS signal from a serial port of the first WM to an IO port of the second WM.
31. The method of paragraph 30, wherein outputting the modified CS signal comprises outputting a signal value corresponding to an inactive state of the CS signal.
32. The method of paragraph 30, wherein outputting the modified CS signal comprises outputting a logical "0" value or a logical "1" value.
33. The method of paragraph 30, wherein disabling identifier updates for the third WM based on the first identifier update value comprises outputting a modified CS signal from a serial port of the second WM to an IO port of the third WM.
34. The method of paragraph 19, wherein enabling the identifier update for the second WM comprises obtaining the CS signal at the IO port of the first WM and passing the CS signal from a serial port of the first WM to an IO port of the second WM.
35. The method of paragraph 19, wherein enabling the identifier update for the third WM comprises obtaining the CS signal at the IO port of the second WM and passing the CS signal from a serial port of the second WM to an IO port of the third WM.
36. The method of paragraph 19, wherein enabling the identifier update for the second WM comprises outputting a modified CS signal from a serial port of the first WM to an IO port of the second WM.
37. The method of paragraph 36, wherein outputting the modified CS signal comprises outputting a signal value corresponding to an inactive state of the CS signal.
38. The method of paragraph 36, wherein outputting the modified CS signal comprises outputting a logical "0" value or a logical "1" value.
39. The method of paragraph 19, wherein the IO port of the first WM comprises a functional interface of the first WM.
40. The method of paragraph 39, wherein the IO port of the first WM comprises a radio frequency (RF) input or RF input/output (RFIO) of the first WM.
41. An apparatus for assigning unique identifiers, the apparatus comprising:
   a chain of serially connected worker modules (WMs);
   a first WM of the chain of serially connected WMs, the first WM comprising:
      a first serial communication port coupled to a serial communication interface; and
      a first identifier update module configured to:
         obtain a daisy-chain identifier update command set transmitted over the serial communication interface to the chain of serially connected WMs;
         enable updating a first WM identifier associated with the first WM;
         disable updating a second unique identifier associated with a second WM;
         obtain a first identifier update value transmitted over the serial communication interface to the chain of serially connected WMs;
         update a first WM identifier of the first WM based on the first identifier update value; and
         enable updating the second unique identifier associated with the second WM; and
         a second WM of the chain of serially connected WMs, the second WM comprising:
            a second serial communication port coupled to the serial communication interface; and
            a second identifier update module configured to:
               obtain a second identifier update value transmitted over the serial communication interface to the chain of serially connected WMs; and
               update the second WM identifier of the second WM of the chain of serially connected WMs based on the second identifier update value.
42. The apparatus of paragraph 41, wherein the daisy-chain identifier update command set is transmitted over the serial communication interface by a command module (CM).
43. The apparatus of paragraph 41, wherein the serial communication interface comprises a two wire serial interface.
44. The apparatus of paragraph 41, wherein at least one of the first identifier update module or the second identifier update module is configured to disable identifier updates for the second WM based on obtaining at least one of the first identifier update value or the daisy-chain identifier update command set.
45. The apparatus of paragraph 41, wherein, to disable identifier updates for the second WM, the first identifier update module is configured to output a modified chip select (CS) signal to the second WM.
46. The apparatus of paragraph 41, wherein disabling identifier updates for the second WM comprises overriding a CS signal.
47. The apparatus of paragraph 41, wherein, based on at least one of obtaining the second identifier update value or updating the first WM identifier based on the first identifier update value, the first WM is further configured to enable updating the second WM of the chain of serially connected WMs based on the second identifier update value.
48. The apparatus of paragraph 47, wherein, based on obtaining at least one of the second identifier update value or the daisy-chain identifier update command set, the first WM is configured to pass-through a CS signal to the second WM.
49. The apparatus of paragraph 41, further comprising a third WM of the chain of serially connected WMs, wherein an additional identifier update module of the second WM is configured to disable, based on obtaining at least one of the second identifier update value or the daisy-chain identifier update command set, identifier updates for a third WM of the chain of serially connected WMs.
50. The apparatus of paragraph 49, wherein, to disable identifier updates for the third WM, the additional identifier update module is configured to output a modified CS signal from a serial port of the second WM to an IO port of the third WM.
51. The apparatus of paragraph 50, wherein outputting the modified CS signal comprises outputting a signal value corresponding to an inactive CS signal state.
52. The apparatus of paragraph 50, wherein outputting the modified CS signal comprises outputting a logical "0" value or a logical "1" value.
53. The apparatus of paragraph 41, wherein enabling the identifier update for the first WM comprises obtaining a CS signal at an IO port of the first WM.
54. The apparatus of paragraph 53, wherein the CS signal comprises at least one of:
   a signal amplitude;
   a signal frequency;
   a power state of the first WM;
   one or more logical signals; or
   a clock-data swap state of the first WM.
55. The apparatus of paragraph 53, wherein the IO port of the first WM comprises a functional interface of the first WM.
56. The apparatus of paragraph 55, wherein the functional interface of the first WM comprises an RF input or an RFIO of the first WM.
57. A method for assigning unique identifiers, the method comprising:
   obtaining a daisy-chain identifier update command set at a first WM and a second WM of a chain of serially connected WMs;
   enabling updating a first unique identifier associated with the first WM;
   disabling updating a second unique identifier associated with the second WM;
   obtaining a first identifier update value;
   updating, based on the first identifier update value, the first unique identifier; and
   disabling additional identifier updates for the first WM associated with the daisy-chain identifier update command set.
58. The method of paragraph 57, wherein the daisy-chain identifier update command set is transmitted by a CM over a serial communication interface.
59. The method of paragraph 58, wherein the serial communication interface comprises a two wire serial interface.
60. The method of paragraph 59, wherein the serial communication interface complies with at least one of:
   MIPI RFFE standard; or
   MIPI SPMI standard.
61. The method of paragraph 57, further comprising disabling identifier updates for a second WM of the chain of serially connected WMs based on obtaining at least one of the first identifier update value or the daisy-chain identifier update command set.
62. The method of paragraph 61, wherein disabling identifier updates for the second WM comprises overriding a CS signal.
63. The method of paragraph 61, wherein disabling identifier updates for the second WM comprises outputting a modified CS signal from a serial port of the first WM to an IO port of the second WM.
64. The method of paragraph 63, wherein outputting the modified CS signal comprises outputting a signal value corresponding to an inactive state of the modified CS signal.
65. The method of paragraph 63, wherein outputting the modified CS signal comprises outputting a logical "0" value or a logical "1" value.
66. The method of paragraph 61, further comprising enabling updating a second WM identifier of the second WM of the chain of serially connected WMs.
67. The method of paragraph 61, further comprising disabling, by the second WM, based on obtaining at least one of a second identifier update value or the daisy-chain identifier update command set, identifier updates for a third WM of the chain of serially connected WMs.
68. The method of paragraph 67, wherein disabling identifier updates for the third WM comprises outputting a modified CS signal from a serial port of the second WM to an IO port of the third WM.
69. The method of paragraph 57, wherein enabling updating the first unique identifier comprises obtaining a CS signal at an IO port of the first WM.
70. The method of paragraph 69, wherein the CS signal comprises at least one of:
   a signal amplitude;
   a signal frequency;
   a power state of the first WM;
   one or more logical signals; or
   a clock-data swap state of the first WM.
71. The method of paragraph 69, wherein, based on at least one of obtaining a second identifier update value, obtaining the daisy-chain identifier update command set, or updating the first unique identifier, the first WM is configured to pass-through a CS signal to the second WM.
72. The method of paragraph 69, wherein the IO port of the first WM comprises a functional interface of the first WM.
73. An apparatus for assigning unique identifiers, the apparatus comprising:
   a chain of serially connected WMs; and
   a first WM of the chain of serially connected WMs, the first WM comprising:
      a serial communication port coupled to a serial communication interface;
      an IO port;
      a serial IO port; and
      an identifier update module configured to:
         obtain a daisy-chain identifier update command set transmitted over the serial communication interface to the chain of serially connected WMs;
         enable updating a first unique identifier associated with the first WM;
         disable updating a second unique identifier associated with a second WM of the chain of serially connected WMs;
         obtain a first identifier update value transmitted over the serial communication interface to the chain of serially connected WMs;
         update the first WM identifier of the first WM based on the first identifier update value; and
         disable additional updates to the first WM identifier associated with the daisy-chain identifier update command set.
74. The apparatus of paragraph 73, the daisy-chain identifier update command set is transmitted over the serial communication interface by a CM.
75. The apparatus of paragraph 73, wherein the serial communication interface comprises a two wire serial interface.
76. The apparatus of paragraph 73, wherein the IO port of the first WM comprises a RF input or RFIO of the first WM.
77. The apparatus of paragraph 73, wherein the identifier update module is configured to disable identifier updates for a second WM of the chain of serially connected WMs based on obtaining at least one of the first identifier update value or the daisy-chain identifier update command set.
78. The apparatus of paragraph 77, wherein disabling identifier updates for the second WM comprises overriding a CS signal.
79. The apparatus of paragraph 78, wherein, to disable identifier updates for the second WM, the identifier update module is configured to output a modified CS signal from a serial port of the first WM to an IO port of the second WM.
80. The apparatus of paragraph 79, wherein outputting the modified CS signal comprises outputting a signal value corresponding to an inactive state of the CS signal.
81. The apparatus of paragraph 79, wherein outputting the modified CS signal comprises outputting a logical "0" value or a logical "1" value.
82. The apparatus of paragraph 77, wherein, based on at least one of updating the first WM identifier or obtaining a second identifier update value, the first WM is further configured to enable updating a second WM identifier of the second WM of the chain of serially connected WMs.
83. The apparatus of paragraph 77, further comprising a third WM of the chain of serially connected WMs, wherein an additional identifier update module of the second WM is configured to disable, based on at least one of obtaining a second identifier update value or the daisy-chain identifier update command set, identifier updates for the third WM.
84. The apparatus of paragraph 83, wherein, to disable identifier updates for the third WM, the additional identifier update module is configured to output a modified CS signal from a serial port of the second WM to an IO port of the third WM.
85. The apparatus of paragraph 77, wherein enabling the identifier update for the first WM comprises obtaining a CS signal at an IO port of the first WM.
86. The apparatus of paragraph 85, wherein the CS signal comprises at least one of:
   a signal amplitude;
   a signal frequency;
   a power state of the first WM;
   one or more logical signals; or
   a clock-data swap state of the first WM.
87. The apparatus of paragraph 85, wherein, based on at least one of obtaining a second identifier update value, obtaining the daisy-chain identifier update command set, or updating the first WM identifier, the first WM is configured to pass-through a CS signal to the second WM.
88. The apparatus of paragraph 85, wherein the IO port of the first WM comprises a functional interface of the first WM.

While illustrative embodiments have been illustrated and described, it will be appreciated that various changes can be made therein without departing from the spirit and scope of the disclosure.

## Claims

1. A method of assigning unique identifiers, the method comprising:
obtaining a pass-through identifier update command set at a chain of serially connected worker modules (WMs), wherein the pass-through identifier update command set is associated with a pass-through identifier update value and a pass-through chip select (CS) source;
configuring each individual WM of the chain of serially connected WMs in a pass-through configuration;
updating respective unique identifiers of each WM of the chain of serially connected WMs based on the pass-through identifier update value;
obtaining a daisy-chain identifier update command set, wherein the daisy-chain identifier update command set is associated with a daisy-chain CS source;
disabling updates of a second unique identifier associated with a second WM of the chain of serially connected WMs;
obtaining a daisy-chain identifier update value; and
updating a first unique identifier associated with a first WM of the chain of serially connected WMs based on the daisy-chain identifier update value.

2. The method of claim 1, wherein updating the first unique identifier comprises incrementing the first unique identifier by the daisy-chain identifier update value.

3. The method of claim 1, further comprising configuring, based on obtaining the daisy-chain identifier update command set, a first WM of the chain of serially connected WMs in a clamped configuration.

4. The method of claim 1, wherein the pass-through identifier update command set precedes the daisy-chain identifier update command set.

5. The method of claim 1, wherein the daisy-chain identifier update command set precedes the pass-through identifier update command set.

6. The method of claim 1, wherein the pass-through configuration comprises a forward propagation pass-through configuration.

7. The method of claim 1, further comprising:
obtaining an additional pass-through identifier update command set at a chain of serially connected WMs, wherein the additional pass-through identifier update command set is associated with an additional pass-through identifier update value and an additional pass-through CS source, the additional pass-through CS source being different from the pass-through CS source;
configuring each individual WM of the chain of serially connected WMs in a reverse propagation pass-through configuration based on obtaining the additional pass-through identifier update command set; and
updating respective unique identifiers of each WM of the chain of serially connected WMs based on the additional pass-through identifier update value.

8. The method of claim 1, wherein the pass-through configuration comprises a reverse propagation pass-through configuration.

9. The method of claim 1, wherein the daisy-chain identifier update command set is associated with a forward propagation daisy-chain identifier update sequence.

10. The method of claim 1, wherein configuring each individual WM of the chain of serially connected WMs in the pass-through configuration comprises passing-through a CS signal between individual WMs of the chain of serially connected WMs, wherein the CS signal is associated with a pass-through CS source selection.

11. The method of claim 1, further comprising:
disabling, based on updating the first unique identifier associated with the first WM, additional unique identifier updates for the first WM associated with the daisy-chain identifier update command set.

12. The method of claim 1, further comprising enabling updates of the second unique identifier based on at least one of obtaining the daisy-chain identifier update value or updating the first unique identifier, wherein enabling updates of the second unique identifier comprises passing-through, by the first WM, a CS signal associated with the daisy-chain CS source to the second WM.

13. The method of claim 1, further comprising:
enabling updates of the second unique identifier based on at least one of obtaining the daisy-chain identifier update value or updating the first unique identifier;
obtaining an additional daisy-chain identifier update value; and
updating the second unique identifier based on the additional daisy-chain identifier update value.

14. The method of claim 13, wherein updating the second unique identifier comprises incrementing the second unique identifier by the additional daisy-chain identifier update value.

15. An apparatus for assigning unique identifiers, the apparatus comprising:
a chain of serially connected worker modules (WMs), wherein the chain of serially connected worker modules is configured to:
obtain a pass-through identifier update command set at the chain of serially connected WMs, wherein the pass-through identifier update command set is associated with a pass-through identifier update value and a pass-through chip select (CS) source;
configure each individual WM of the chain of serially connected WMs in a pass-through configuration;
update respective unique identifiers of each WM of the chain of serially connected WMs based on the pass-through identifier update value;
obtain a daisy-chain identifier update command set, wherein the daisy-chain identifier update command set is associated with a daisy-chain CS source;
disable updates of a second unique identifier associated with a second WM of the chain of serially connected WMs;
obtain a daisy-chain identifier update value; and
update a first unique identifier associated with a first WM of the chain of serially connected WMs based on the daisy-chain identifier update value.
